(19) **Europäisches Patentamt**

**European Patent Office**

**Office européen des brevets**

(11) **EP 1 491 854 A1**

(12) **EUROPEAN PATENT APPLICATION**
published in accordance with Art. 158(3) EPC

(43) Date of publication:
**29.12.2004 Bulletin 2004/53**

(51) Int Cl.⁷: **G01C 9/06**, H01L 29/84

(21) Application number: **03746166.2**

(86) International application number:
**PCT/JP2003/004235**

(22) Date of filing: **02.04.2003**

(87) International publication number:
**WO 2003/087719 (23.10.2003 Gazette 2003/43)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.04.2002 JP 2002099855**
**23.07.2002 JP 2002214258**

(71) Applicant: **Asahi Kasei EMD Corporation Tokyo 160-0023 (JP)**

(72) Inventors:
• **HIKIDA, Koichi**
**Miura-gun, Kanagawa 240-0111 (JP)**
• **YAMASHITA, Masaya**
**Machida-shi, Tokyo 194-0044 (JP)**
• **KANAYAMA, Yuuichi**
**Fuji-shi, Shizuoka 416-0933 (JP)**
• **FUKUMOTO, Hirofumi**
**Fuji-shi, Shizuoka 416-0955 (JP)**

(74) Representative: **Kramer Barske Schmidtchen**
**Radeckestrasse 43**
**81245 München (DE)**

(54) **INCLINATION SENSOR, METHOD OF MANUFACTURING INCLINATION SENSOR, AND METHOD OF MEASURING INCLINATION**

(57)     A tilt sensor capable of measuring a tilt angle by utilizing piezoresistive effect without selectively etching a substrate having piezoresistors formed therein, wherein the backside of the silicon substrate 1 having piezoresistors R1 to R4 formed therein is uniformly ground to a deflectable thickness, both ends of the silicon substrate 1 are supported by a support member 2, and a weight member 3 is provided at the center of the silicon substrate 1 through a convex portion 3a.

F I G. 1 A

F I G. 1 B

F I G. 1 C

**Description**

Technical Field

The present invention relates to a tilt sensor and a manufacturing method thereof, and in particular, to the tilt sensor capable of measuring a tilt angle by utilizing a piezoresistive effect without selectively etching a substrate having piezoresistors formed therein, manufacturing method of the tilt sensor and method of measuring the tilt angle.

Background Art

As for a conventional tilt sensor, there has been a method of measuring a tilt angle based on resistance change in a piezoresistor caused by a stress with tilt angle.

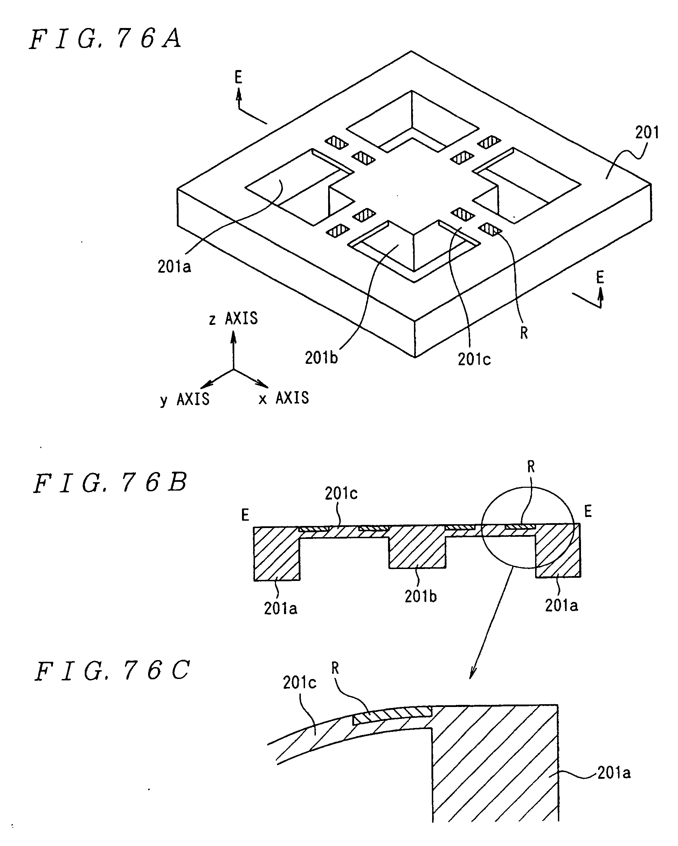

Figure 76A is a perspective view showing an overview configuration of the conventional tilt sensor, Figure 76B is a sectional view showing the overview configuration of the conventional tilt sensor, and Figure 76C is a sectional view showing an enlarged portion of the piezoresistor of the conventional tilt sensor.

In Figures 76A to 76C, piezoresistors R are formed on a silicon substrate 201. In an area in which thepiezoresistors R are arranged, a deflectable portion 201c formed by etching the silicon substrate 201 from a backside is provided so that the piezoresistor R can easily sense the stress.

A support portion 201a for supporting the deflectable portion 201c is formed around the silicon substrate 201, and a weight portion 201b for deflecting the deflectable portion 201c is formed at the center of the silicon substrate 201.

In addition, the support portion 201a, weight portion 201b and deflectable portion 201c are formed by selectively etching the silicon substrate 201 which is about 500 μm thickness from the backside, and are arranged so that the deflectable portion 201c bridges the support portion 201a and the weight portion 201b.

Then, as shown in Figure 76C, the deflectable portion 201c is deflected by gravity acting on the weight portion 201b, and the stress is applied to the piezoresistor R. And when the silicon substrate 201 inclines, a direction of the gravity acting on the weight portion 201b changes and the stress applied to the piezoresistor R also changes, and so the value of the piezoresistor R changes.

For this reason, it is possible to acquire the tilt angle of the tilt sensor by detecting a change in the values of the piezoresistors R.

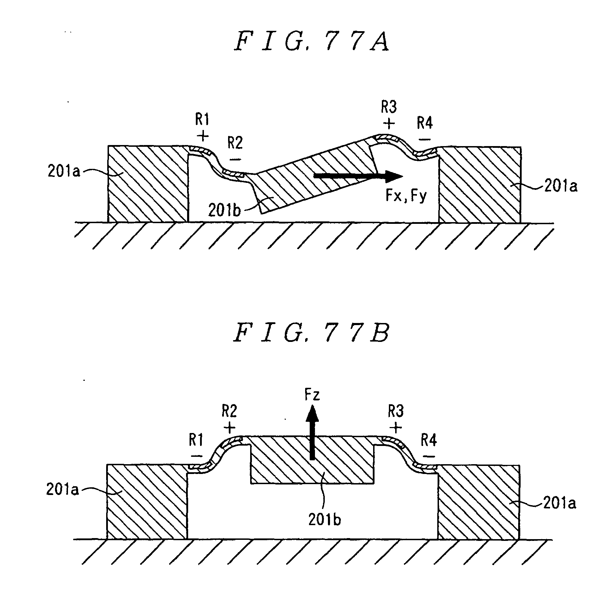

Figure 77A is a diagram showing increases and decreases in the value of each piezoresistor on acceleration in X and Y directions of the conventional tilt sensor, and Figure 77B is a diagram showing the increases and decreases in the value of each piezoresistor on acceleration in a Z direction of the conventional tilt sensor.

In Figure 77A, when the tilt sensor is accelerated in X or Y directions, forces in X or Y directions FX or FY act on the weight portion 201b, and then the weight portion 201b tries to move in the X or Y directions. For this reason, the deflectable portion 201c is deflected, and a tensile stress acts on piezoresistors R1 and R3 while a compressive stress acts on piezoresistors R2 and R4. The values of the piezoresistors R1 to R4 increase or decrease by these stresses.

In Figure 77B, when the tilt sensor is accelerated in Z direction, the force in Z direction FZ acts on the weight portion 201b, and then weight portion 201b tries to move in Z direction. For this reason, the deflectable portion 201c is deflected, and a tensile stress acts on piezoresistors R2 and R3 while a compressive stress acts on piezoresistors R1 and R4. The values of the piezoresistors R1 to R4 increase or decrease by these stresses.

Therefore, it is possible to acquire the tilt angle of the tilt sensor by forming a Wheatstone bridge circuit comprised of the piezoresistors R1 to R4.

As for the conventional tilt sensor, there is also a method whereby a movable part hung at its four corners with silicon springs is provided and capacitors are formed between the movable part and a fixedpart and to measure a change in capacity due to a movement of the movable part.

As regards the tilt sensor in Figures 76A - 76C, however, it is necessary to selectively etch the silicon substrate 201 which is about 500 μm thickness to about several tens of μm in order to form the deflectable portion 201c. Thus, there is a problem that a manufacturing process becomes complicated and costs increase.

The tilt sensor in Figures 76A - 76C has the backside of the silicon substrate selectively etched to form the support portion 201a, weight portion 201b and deflectable portion 201c. Therefore, there is a problem that the tilt sensor has a complicated structure and becomes weak against an impact.

As for the method of using the silicon springs, it is necessary to form the springs and capacitors by fine processing of about 1 to 2 μm. Therefore, there is a problem that the costs increase and it becomes weak against an impact.

Thus, the present invention has been implemented by focusing on such unsolved problems of related arts, and a first object thereof is to provide the tilt sensor capable of measuring a tilt angle by utilizing a piezoresistive effect without selectively etching the substrate having the piezoresistors formed therein, manufacturing method of the tilt sensor and method of measuring the tilt angle. And a second object thereof is to provide the tilt sensor capable of forming the weight member without selectively etching the backside of the substrate having the piezoresistors formed therein, manufacturing method of the tilt sensor and method of measuring the tilt angle.

Disclosure of the Invention

In order to attain the objects described above, a tilt sensor according to claim 1 of the present invention is the one comprising a substrate having piezoresistors formed on its surface and having its entire backside uniformly ground to a deflectable thickness and a support member for supporting the substrate on one end thereof at least.

Thus, it is possible to form a deflectable portion just by grinding the entire backside of the substrate having the piezoresistors formed therein. Therefore, it is no longer necessary to perform selective etching using a photolithographic technology for the purpose of forming a deflectable portion.

For this reason, it becomes possible to simplify a configuration and a manufacturing process of the tilt sensor, reduce costs of the tilt sensor and improve resistance to an impact.

Furthermore, the tilt sensor according to claim 2 of the present invention is the one further comprising a weight member arranged in a deformable area of the surface having the piezoresistors formed thereon in the tilt sensor according to claim 1.

Thus, it is possible to provide the weight member on the substrate having the piezoresistors formed therein without selectively etching the substrate and improve detection sensitivity of the tilt sensor while curbing increase in complexity of the manufacturing process of the tilt sensor.

Furthermore, the tilt sensor according to claim 3 of the present invention is the one in which the piezoresistors are two-dimensionally arranged on the surface of the substrate in the tilt sensor according to either claim 1 or 2.

Thus, even in the case of using the substrate with uniform thickness, it is possible to detect the tilt angles in different directions with one tilt sensor and improve detection accuracy by constituting a bridge circuit.

Furthermore, the tilt sensor according to claim 4 of the present invention is the one in which the piezoresistors comprisepiezoresistor arranged on the surface of the substrate to detect an amount of deflection of the substrate and piezoresistors arranged on the surface of the substrate to detect an amount of torsion of the substrate in the tilt sensor according to claim 3.

Thus, even in the case of using the substrate of with uniform thickness, it is possible to detect the tilt angles in the two axial directions by arranging the piezoresistors arranged on the same surface. And it is thereby feasible to simplify a configuration and the manufacturing process of a dual axis tilt sensor and reduce costs of the dual axis tilt sensor.

Furthermore, a tilt sensor according to claim 5 of the present invention is the one comprising a hexahedral rectangular elastic body having a deformable free surface, piezoresistors having at least two or more of them provided in a longitudinal direction on a same surface of the hexahedral rectangular elastic body with at least one of them arranged on the free surface, a support member for supporting the hexahedral rectangular elastic body at both ends thereof in the longitudinal direction, and a weight member provided approximately at the center in the longitudinal direction of a deformable area of the hexahedral rectangular elastic body.

Thus, it is possible to manufacture the tilt sensor by post-mounting the support member and weight member on the hexahedral rectangular elastic body, and then, it is no longer necessary to selectively etch the substrate having the piezoresistors formed therein. Therefore, it is possible to simplify the configuration and manufacturing process of the tilt sensor, reduce the costs of the tilt sensor and improve resistance to an impact.

Furthermore, a tilt sensor according to claim 6 of the present invention is the one comprising a hexahedral rectangular elastic body having a deformable free surface, piezoresistors having at least two or more of them provided in the longitudinal direction on the same surface of the hexahedral rectangular elastic body with at least one of them arranged on the free surface, a support member for supporting the hexahedral rectangular elastic body at one end thereof in the longitudinal direction, and a weight member provided at the other end in the longitudinal direction of the hexahedral rectangular elastic body.

Thus, it is possible to manufacture the tilt sensor by post-mounting the support member and weight member on the hexahedral rectangular elastic body. And it is also possible to increase a distance between the support member and the weight member, improve the detection sensitivity. Therefore, it is feasible to simplify the configuration and manufacturing process of the tilt sensor, and reduce the costs thereof, and it is also feasible to improve characteristics of the tilt sensor for miniaturization.

Furthermore, the tilt sensor according to claim 7 of the present invention is the one in which at least one of the support member and the weight member is equal to the hexahedral rectangular elastic body in terms of at least one of its length and width in the tilt sensor according to claim 5 or 6.

Thus, it is possible to simultaneously cut the support member or the weight member and the hexahedral rectangular elastic body. And it is also possible to bond the support member or the weight member and the hexahedral rectangular elastic body in a wafer state and cut these members into chips at once. Therefore, it is feasible to improve productivity of the tilt sensors and reduce the costs thereof.

Furthermore, the tilt sensor according to claim 8 of the present invention is the one in which the hexahedral rectangular elastic body is a silicon substrate and the piezoresistors are composed of an impurity diffused layer formed on the silicon substrate in the tilt sensor according to any one of claims 5 to 7.

Thus, it is possible to simultaneously form a plurality of piezoresistors on the silicon substrate just by selectively implanting ion, simplify the manufacturing process of the tilt sensor and reduce the costs thereof.

Furthermore, the tilt sensor according to claim 9 of the present invention is the one in which the hexahedral rectangular elastic body is a silicon substrate, and the support member comprises a glass substrate having a concave portion formed thereon and composed of a material capable of anodic bonding to the silicon substrate and an implant member implanted in the concave portion to prevent anodic bonding to the silicon substrate in the tilt sensor according to claim 8.

Thus, it is possible to tightly bond the silicon substrate and the support member just by applying a voltage between them. And even in the case of using it in a harsh environment, it is possible to prevent the support member from dropping off the silicon substrate and bond the support member and the silicon substrate without any adhesive. Therefore, it is possible to prevent the adhesive from running off the bonded part and easily manufacture the tilt sensor of high precision.

It is also possible to planarize the surface of the support member and prevent a void from being formed on the backside of the silicon substrate. Therefore, the entire backside of the silicon substrate can be supported by the support member even in the case where the silicon substrate is weighted or given an impact.

For this reason, it is possible to prevent the silicon substrate frombreaking on providing the weight member thereon and reduce manufacturing costs of the tilt sensor. And it is also possible to improve resistance to the impact of the tilt sensor and improve handling ability of the tilt sensor.

In the case of bonding the hexahedral rectangular elastic body and the support member, it is possible to partially bond the silicon substrate and the support member just by applying a voltage between them. Therefore, it is possible to allow the silicon substrate and the support member not to be bonded at the position of the implant member.

For this reason, it is possible, even in the case where the surface of the support member is planarized, to have a stress generated on the silicon substrate according to the tilt angle of the tilt sensor and cause it to function as the tilt sensor.

Furthermore, the tilt sensor according to claim 10 of the present invention is the one comprising the piezoresistors arranged to detect the amount of deflection of the hexahedral rectangular elastic body and the piezoresistors arranged to detect the amount of torsion of the hexahedral rectangular elastic body on the same plane of the hexahedral rectangular elastic body in the tilt sensor according to any one of claims 5 to 9.

Thus, it is possible to detect the amount of deflection. in the two axial directions of the hexahedral rectangular elastic body. And it is also possible to detect the tilt angle in the two axial directions even in the case of using the substrate with uniform thickness. In addition, it is possible improve the detection accuracy of the tilt angle by constituting a bridge circuit with the piezoresistors.

In order to attain the objects described above, a method of manufacturing a tilt sensor according to claim 11 of the present invention is the one comprising the steps of: forming piezoresistors at two or more places on a surface of a wafer; uniformly grinding the entire backside of the wafer; bonding a support substrate having a concave portion formed therein to the backside of the wafer so that an area having the piezoresistors formed thereon is inside the concave portion and adjacent to the edge of the concave portion; and simultaneously cutting the wafer and the support substrate into chips so that a deformable area on the surface having the piezoresistors formed thereon is supported on both sides of the concave portion.

Thus, it is possible to form the support portion for supporting the piezoresistors without selectively etching the substrate having the piezoresistors formed therein. And it is also possible, just by bonding the support substrate once, to simultaneously form the support portion for supporting the piezoresistors to a plurality of chips, simplify the manufacturing process of the tilt sensor and reduce the costs thereof.

Furthermore, the method of manufacturing a tilt sensor according to claim 12 of the present invention is the one further comprising the step of bonding a weight substrate having a convex portion formed therein to the surface of the wafer so as to arrange the convex portion approximately at the center of the deformable area on the surface having the piezoresistors formed thereon, where the weight substrate, the wafer and the support substrate are simultaneously cut into chips in the method of manufacturing a tilt sensor according to claim 11.

Thus, it is possible, just by bonding the weight substrate once, to simultaneously form the weight for deforming the piezoresistors to a plurality of chips, simplify the manufacturing process of the tilt sensor and further reduce the costs thereof. Furthermore, a method of manufacturing a tilt sensor according to claim 13 of the present invention is the one further comprising the steps of: forming piezoresistors at two or more places on a surface of a wafer; uniformly grinding the entire backside of the wafer; bonding a support substrate having a concave portion formed therein to a backside of the wafer so that an area having the piezoresistors formed thereon is inside the concave portion and adjacent to the edge of the concave portion; arranging a base approximately at the center of a deformable area on a surface having the piezoresistors formed thereon; simultaneously cutting the wafer having a base arranged thereon and the support substrate into chips so that the surface having the piezoresistors formed thereon is supported on both sides of the concave portion; and arranging weight members on the base.

Thus, it is possible to form the support portion for supporting the piezoresistors without selectively etching the substrate having the piezoresistors formed therein. And it is also possible, just by bonding the support substrate once, to simultaneously form the support portion for supporting the piezoresistors to a plurality of chips. Thus, it is feasible to simplify the manufacturing process of the tilt sensor, reduce the costs thereof, improve the detection sensitivity by enlarging the weight member and set the arrangement of the weight member for each individual chip.

Furthermore, a method of manufacturing a tilt sensor according to claim 14 of the present invention is the one comprising the steps of: forming piezoresistors at two or more places on a surface of a wafer; uniformly grinding the entire backside of the wafer; bonding a support substrate having the concave portion formed therein to the backside of the wafer so that one side of the concave portion is positioned adjacent to the edge of an the area having the piezoresistors formed thereon and inside the concave portion and another side of the concave portion overlaps with a scribe line of the wafer; arranging a base in a deformable area on a surface having the piezoresistors formed thereon; simultaneously cutting the wafer having the base arranged thereon and the support substrate into chips so that the surface having the piezoresistors formed thereon is supported on one side of the concave portion; and arranging weight members on the base.

Thus, it is possible to form the support portion for supporting the piezoresistors without selectively etching the substrate having the piezoresistors formed therein. And it is also possible, just by bonding the support substrate once, to simultaneously form the support portion for supporting the piezoresistors to a plurality of chips, simplify the manufacturing process of the tilt sensor and reduce the costs thereof. And it is also feasible to increase adistancebetween the support substrate and the weight member and improve the detection sensitivity.

Furthermore, a method of manufacturing a tilt sensor according to claim 15 of the present invention is the one comprising the steps of: forming piezoresistors at two or more places on a surface of a wafer; uniformly grinding the entire backside of the wafer; bonding a support substrate having a concave portion formed therein to the backside of the wafer so that an area having the piezoresistors formed thereon is inside the concave portion and adjacent to the edge of the concave portion; bonding a weight substrate having concavity and convexity formed thereon to the surface of the wafer so that the convex portion overlaps with the scribe line at an interval of two chips; cuttingoffaportionofaconcaveportion of the weight substrate in parallel to the scribe line; and simultaneously cutting the weight substrate, the wafer and the support substrate into chips so that one end of a surface having the piezoresistors formed thereon is supported on one side of the concave portion of the support substrate and the convex portion of the weight substrate is arranged on the surface having the piezoresistors formed thereon.

Thus, even in the case of manufacturing a cantilever type tilt sensor, it is possible to simultaneously form to a plurality of chips not only the support portion for supporting the piezoresistors but also the weight member for applying the stress to the piezoresistors. It is thereby possible to simplify the manufacturing process of the tilt sensor and reduce the costs thereof while improving the detection sensitivity of the tilt sensor.

Furthermore, the method of manufacturing a tilt sensor according to claim 16 of the present invention is the one in which the grinding is polishing or etching or a combination of them in the method of manufacturing a tilt sensor according to any one of claims 11 to 15.

Thus, it is possible to control the thickness of the substrate with high accuracy while reducing the time required for grinding.

In order to attain the objects described above, a tilt sensor according to claim 17 of the present invention is the one comprising a deflectable plate having piezoresistors formed on its surface, a support member for supporting the deflectable plate at one end of the deflectable plate and a metallic weight member arranged in a deflectable area of the deflectable plate.

Thus, it is possible to support the piezoresistors in a deflectable state without selectively etching the backside of the substrate having piezoresistors formed therein. And a specific gravity of the weight member increases. Therefore, even in the case where the weight member are provided on the deflectable plate, it is possible to easily have consistency with an existing mounting implementation technology while curbing increase in the volume of the weight member.

For this reason, it is possible to simplify the configuration and manufacturing process of the tilt sensor, miniaturize the tilt sensor and reduce the costs thereof and also improve resistance to an impact.

Furthermore, a tilt sensor according to claim 18 of the present invention is the one comprising an SOI substrate having a silicon layer formed on an insulating layer, a cavity formed in the insulating layer under the silicon layer, the piezoresistors formed in the silicon layer on the cavity, and a metallic weight member arranged on the silicon layer on the cavity.

Thus, it is possible to provide the weight member without selectively etching the backside of the substrate having the piezoresistors formed therein. And even in the case of supporting the silicon layer having the piezoresistors formed therein to apply the stress to the piezoresistors, it is no longer necessary to bond the silicon layer to the support member after thinning the silicon layer.

For this reason, it is no longer necessary to increase the thickness of the silicon layer for securing strength enough to bond it to the support member. Therefore, it is possible to deflect the silicon layer efficiently and apply the stress to the piezoresistors efficiently. In addition, it is possible to simplify the configuration of the tilt sensor and easily improve resistance to an impact.

Furthermore, as it is possible to increase the specific gravity of the weight member arranged in the silicon layer, it is feasible to make the weight member smaller andminiaturize the tilt sensor.

Furthermore, the tilt sensor according to claim 19 of the present invention is the one in which the deflectable plate or the silicon layer is constricted in an area having the piezoresistors formed thereon in the tilt sensor according to either claim 17 or 18.

Thus, even in the case of uniformizing the thickness of the deflectable plate, it is possible to deflect the deflectable plate efficiently and improve detection accuracy of the tilt sensor easily while miniaturizing the tilt sensor and reducing the costs thereof.

In order to attain the objects described above, a method of manufacturing a tilt sensor according to claim 20 of the present invention is the one comprising the steps of: forming piezoresistors at two or more places in each chip area on a surface of a wafer; forming a pad in each chip area on the surface of the wafer; uniformly grinding the entire backside of the wafer having the piezoresistors and pads formed thereon; bonding a support substrate having the concave portion formed therein to the backside of the wafer so that an area having the piezoresistors formed thereon is positioned adjacent to the edge of the concave portion and the pad is positioned inside the concave portion; forming a metallic weight member on each pad of the wafer bonded on the support substrate; forming an opening on the wafer so that the area having the piezoresistors formed therein is constricted; and cutting the wafer having the opening formed thereon into chips.

Thus, it is possible to form the support portion for supporting the piezoresistors without selectively etching the backside of the wafer having the piezoresistors formed therein. And it is also possible, just by bonding the wafer to the support substrate once, to simultaneously form the support portion for supporting the piezoresistors to a plurality of chips.

It is also possible to form the weight member of a large specific gravity on the wafer, constrict the area having the piezoresistors formed thereon without selectively etching the backside of the wafer having the piezoresistors formed therein and efficiently deflect the area having the piezoresistors while the thickness of the wafer remains uniform.

For this reason, it is possible to simplify the manufacturing process of the tilt sensor while miniaturizing the weight member, miniaturize the tilt sensor, reduce the costs thereof and also improve the detection accuracy of the tilt sensor easily.

Furthermore, a method of manufacturing a tilt sensor according to claim 21 of the present invention is the one comprising the steps of: forming piezoresistors at two or more places in each chip area on a silicon layer formed on a silicon wafer by the intermediary of a silicon dioxide layer; forming a pad in each chip area on the silicon layer; forming a metallic weight member on each pad formed on the silicon layer; forming an opening on the silicon layer so that an area having the piezoresistors formed therein is constricted; etching a portion of the silicon dioxide layer via the opening formed on the silicon layer and thereby removing the silicon dioxide layer under the area having the piezoresistors formed therein and the area having the metallic weight member formed therein; and cutting the wafer having the silicon dioxide layer removed therefrom into chips.

Thus, it is possible to support a thinned silicon layer without bonding it to the support member and efficiently deflect the silicon layer having the piezoresistors formed therein.

It is also possible to form the weight member of a large specific gravity on the wafer without selectively etching the backside of the wafer having the piezoresistors formed therein and easily form the weight member while miniaturizing the weight member.

For this reason, it is possible to simplify the manufacturing process of the tilt sensor, miniaturize the tilt sensor, reduce the costs thereof and also improve the detection accuracy of the tilt sensor easily.

Furthermore, the method of manufacturing a tilt sensor according to claim 22 of the present invention is the one in which the metallic weight member is. formed by electroplating in the method of manufacturing a tilt sensor according to claim 20 or 21.

Thus, it is possible to prevent the weight member from easily being removed the wafer and improve resistance to an impact.

It is also possible to simultaneously form the weight member of a large specific gravity to a plurality of chips, simplify the manufacturing process of the tilt sensor and reduce the costs thereof.

In order to attain the objects described above, a tilt sensor according to claim 23 of the present invention is the one comprising a deflectable plate having piezoresistors formed on its surface, a support member for supporting the deflectable plate at one end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate and a second piezoresistor group including two pairs of piezoresistors arranged in the positions inside the deflectable area of the deflectable plate, symmetric with respect to the center line and different from the positions of the piezoresistors in the first piezoresistor group, , and constitute a first full bridge circuit with the first piezoresistor group and a second full bridge circuit with the second piezoresistor group, and further comprising a first tilt angle calculating means for calculating a tilt angle around the axis along the longitudinal direction of the deflectable plate based on the output of the first full bridge circuit and a second tilt angle calculating means for calculating a tilt angle around the axis along the lateral direction of the deflectable plate based on the output of the second full bridge circuit and the tilt angle calculated by the first tilt angle calculating means.

In the case of such a configuration, it is possible to support the piezoresistors in a state capable of deflection and torsion without selectively etching the backside of the substrate having the piezoresistors formed therein. And a specific gravity of the weight member increases. Therefore, even in the case where the weight member are provided on the deflectable plate, it is possible to easily have the consistency with an existing flip chip mounting technology while curbing increase in the volume of the weight member.

For this reason, it is possible to simplify the configuration and manufacturing process of the tilt sensor, miniaturize the tilt sensor and reduce the costs thereof and also improve resistance to an impact.

Furthermore, when the tilt sensor is inclined on the longitudinal direction of the deflectable plate, the direction of gravity of the weight member changes and then torsional moment is generated in the deflectable area to twist the deflectable plate. Thus, the value of each piezoresistor changes and the output of the first full bridge circuit also changes in conjunction with it. The output of the first full bridge circuit changes according to the stress generated by the torsional moment. The stress generated by the torsional moment is proportional to a sine value of a tilt angle around the axis along the longitudinal direction. Therefore, it is possible, with the first tilt angle calculating means, to calculate a tilt angle around the axis along the longitudinal direction based on the output of the first full bridge circuit.

And when the tilt sensor is inclined on the longitudinal direction or the lateral direction of the deflectable plate, the direction of gravity of the weight member changes and then bending moment is generated in the deflectable area to deflect the deflectable plate. Thus, the value of each piezoresistor changes and the output of the second full bridge circuit also changes in conjunction with it. The output of the second full bridge circuit changes according to the stress generated by the bending moment. The stress generated by the bending moment is proportional to a product of a cosine value of a tilt angle around the axis along the longitudinal direction and a cosine value of a tilt angle around the axis along the lateral direction. Therefore, it is possible, with the second tilt angle calculating means, to calculate a tilt angle around the axis along the lateral direction based on the output of the second full bridge circuit and a calculated tilt angle around the axis along the longitudinal direction.

Furthermore, a tilt sensor according to claim 24 of the present invention is the one comprising a deflectable plate having piezoresistors formed on its surface, a support member for supporting the deflectable plate at an end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate and a second piezoresistor group including a plurality of piezoresistors arranged in the portions inside the deflectable area of the deflectable plate and on the center line, and constitute a first full bridge circuit with the first piezoresistor group and a second half bridge circuitwith the second piezoresistor group, and further comprising a first tilt angle calculating means for calculating a tilt angle around the axis along the longitudinal direction of the deflectable plate based on the output of the first full bridge circuit and a second tilt angle calculating means for calculating a tilt angle around the axis along the lateral direction of the deflectable plate based on the output of the second half bridge circuit and the tilt angle calculated by the first tilt angle calculating means.

In the case of such a configuration, it is possible to support the piezoresistors in the state capable of the deflection and torsion without selectively etching the backside of the substrate having the piezoresistors formed therein. And a specific gravity of the weight member increases. Therefore, even in the case where the weight member are provided on the deflectable plate, it is possible to easily have the consistency with an existing flip chip mounting technology while curbing increase in the volume of the weight member.

For this reason, it is possible to simplify the configuration and manufacturing process of the tilt sensor, miniaturize the tilt sensor and reduce the costs thereof and also improve resistance to an impact.

Furthermore, when the tilt sensor is inclined on the longitudinal direction of the deflectable plate, the direction of gravity of the weight member changes and then the torsional moment is generated in the deflectable area to twist the deflectable plate. Thus, the value of each piezoresistor changes and the output of the first full bridge circuit also changes in conjunction with it. The output of the first full bridge circuit changes according to the stress generated by the torsional moment. The stress generated by the torsional moment is proportional to a sine value of a tilt angle around the axis along the longitudinal direction. Therefore, it is possible, with the first tilt angle calculating means, to calculate a tilt angle around the axis along the longitudinal direction based on the output of the first full bridge circuit.

And when the tilt sensor is inclined on the longitudinal direction or the lateral direction of the deflectable plate, the direction of gravity of the weight member changes and then bending moment is generated in the deflectable area to deflect the deflectable plate. Thus, the value of resistance of each piezoresistor changes and the output of the second half bridge circuit also changes in conjunction with it. The output of the second half bridge circuit changes according to the stress generated by the bending moment. The stress generated by the bending moment is proportional to a product of a cosine value of a tilt angle around the axis along the longitudinal direction and a cosine value of a tilt angle around the axis along the lateral direction. Therefore, it is possible, with the second tilt angle calculating means, to calculate a tilt angle around the axis along the lateral direction based on the output of the second half bridge circuit and the calculated tilt angle around the axis along the longitudinal direction.

Furthermore, a tilt sensor according to claim 25 of the present invention is the one comprising a deflectable plate having piezoresistors formed on its surface, a support member for supporting the deflectable plate at an end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate, and constitute a first full bridge circuit with the first piezoresistor group and a second full bridge circuit with the first piezoresistor group anddi fferent connection from the full bridge circuit, and further comprising a first tilt angle calculating means for calculating a tilt angle around the axis along the longitudinal direction of the deflectable plate based on the output of the first full bridge circuit and a second tilt angle calculating means for calculating a tilt angle around the axis along the lateral direction of the deflectable plate based on the output of the second full bridge circuit and the tilt angle calculated by the first tilt angle calculating means.

In the case of such a configuration, it is possible to support the piezoresistors in a state capable of the deflection and torsion without selectively etching the backside of the substrate having the piezoresistors formed therein. And a specific gravity of the weight member increases. Therefore, even in the case where the weight member are provided on the deflectable plate, it is possible to easily have the consistency with an existing flip chip mounting technology while curbing increase in the volume of the weight member.

For this reason, it is possible to simplify the configuration and manufacturing process of the tilt sensor, miniaturize the tilt sensor and reduce the costs thereof and also improve its resistance to an impact.

Furthermore, when the tilt sensor is inclined on the longitudinal direction of the deflectable plate, the direction of gravity of the weight member changes and then the torsional moment is generated in the deflectable area to twist the deflectable plate. Thus, the value of each piezoresistor changes and the output of the first full bridge circuit also changes in conjunction with it. The output of the first full bridge circuit changes according to the stress generated by the torsional moment. The stress generated by the torsional moment is proportional to a sine value of the tilt angle around the axis along the longitudinal direction. Therefore, it is possible, with the first tilt angle calculating means, to calculate the tilt angle around the axis along the longitudinal direction based on the output of the first full bridge circuit.

And when the tilt sensor is inclined on the longitudinal direction or the lateral direction of the deflectable plate, the direction of gravity of the weight member changes and then bending moment is generated in the deflectable area to deflect the deflectable plate. Thus, the value of each piezoresistor changes and the output of the second full bridge circuit also changes in conjunction with it. The output of the second full bridge circuit changes according to the stress generated by the bending moment. The stress generated by the bending moment is proportional to a product of a cosine value of the tilt angle around the axis along the longitudinal direction and a cosine value of a tilt angle around the axis along the lateral direction. Therefore, it is possible, with the second tilt angle calculating means, to calculate a tilt angle around the axis along the lateral direction based on the output of the second full bridge circuit and the calculated tilt angle around the axis along the longitudinal direction.

In order to attain the objects described above, a method of measuring a tilt angle according to claim 26 of the present invention is the one of measuring a tilt angle using a tilt sensor comprising a deflectable plate having piezoresistors formed on its surface, a support member for supporting the deflectable plate at one end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate and a second piezoresistor group including two pairs of piezoresistors arranged in the positions inside the deflectable area of the deflectable plate, symmetric with respect to the center line and different from the positions of the piezoresistors in the first piezoresistor group, and including a first bridge circuit output step of constituting a first full bridge circuit with the first piezoresistor group and outputting therefrom and a secondbridge circuit output step of constituting a second full bridge circuit with the second piezoresistor group and outputting therefrom, a first tilt angle calculating step of calculating a tilt angle around the axis along the longitudinal direction of the deflectable plate based on the output of the first full bridge circuit and a second tilt angle calculating step of calculating a tilt angle around the axis along the lateral direction of the deflectable plate based on the output of the second full bridge circuit and the tilt angle calculated in the first tilt angle calculating step.

Furthermore, a method of measuring a tilt angle according to claim 27 of the present invention is the one of measuring a tilt angle using a tilt sensor comprising a deflectable plate having piezoresistors formed on its surface, a support member for supporting the deflectable plate at one end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate and a second piezoresistor group including a plurality of piezoresistors arranged in the portions inside the deflectable area of the deflectable plate and on the center line, and including a first bridge circuit output step of constituting a first full bridge circuit with the first piezoresistor group and outputting therefrom and a second bridge circuit output step of constituting a second half bridge circuit with the second piezoresistor group and outputting therefrom, a first tilt angle calculating step of calculating a tilt angle around the axis along the longitudinal direction of the deflectable plate based on the output of the first full bridge circuit and a second tilt angle calculating step of calculating a tilt angle around the axis along the lateral direction of the deflectable plate based on the output of the second half bridge circuit and the tilt angle calculated in the first tilt angle calculating step.

Furthermore, a method of measuring a tilt angle according to claim 28 of the present invention is the one of measuring a tilt angle using a tilt sensor comprising a deflectable plate having piezoresistors formed on its surface, a support member for supporting the deflectable plate at one end of the deflectable plate and a weight member arranged in a deflectable area of the deflectable plate, in which the piezoresistors have a first piezoresistor group including two pairs of piezoresistors arranged in the positions inside the deflectable area of the deflectable plate and symmetric with respect to a center line going through a middle point of width of the deflectable plate, and including a first bridge circuit output step of constituting a first full bridge circuit with the first piezoresistor group and outputting therefrom and a second bridge circuit output step of constituting a second full bridge circuit with the first piezoresistor group and different connection from the first full bridge circuit and outputting therefrom, a first tilt angle calculating step of calculating a tilt angle around the axis along the longitudinal direction of the deflectable plate based on the output of the first full bridge circuit and a second tilt angle calculating step of calculating a tilt angle around the axis along the lateral direction of the deflectable plate based on the output of the second full bridge circuit and the tilt angle calculated in the first tilt angle calculating step.

An azimuth sensor according to claim 29 of the present invention is the one having the tilt sensor according to claims 1 to 10, claims 17 to 19 or claims 23 to 25, earth magnetism detecting means, at least biaxial, for detecting geomagnetic components in orthogonal directions, and azimuth calculating means for calculating an azimuth based on tilt angle data obtained by the tilt sensor and geomagnetic data obtained by the earth magnetism detecting means.

Thus, it is possible to measure the azimuth comparatively correctly without placing the azimuth sensor on a horizontal plane while curbing increase in the size and the costs of the azimuth sensor.

A cellular phone according to claim 30 of the present invention is the one having the azimuth sensor according to claim 29 built therein.

Thus, it is possible to measure the azimuth with comparatively correctly without keeping the cellular phone in a horizontal plane but in a position taken by the user for normal use while curbing increase in the size and the costs of the cellular phone.

Brief Description of the Drawings

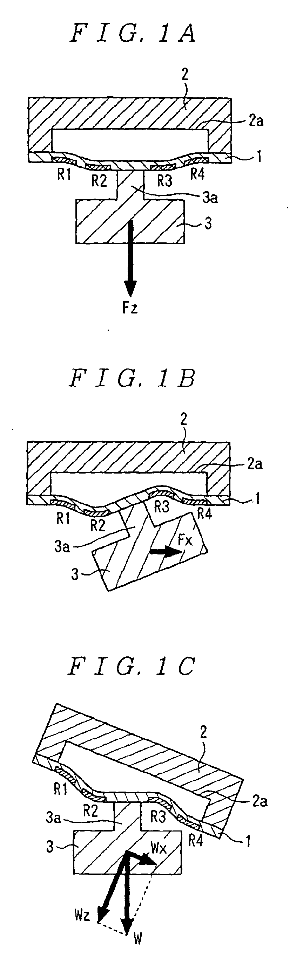

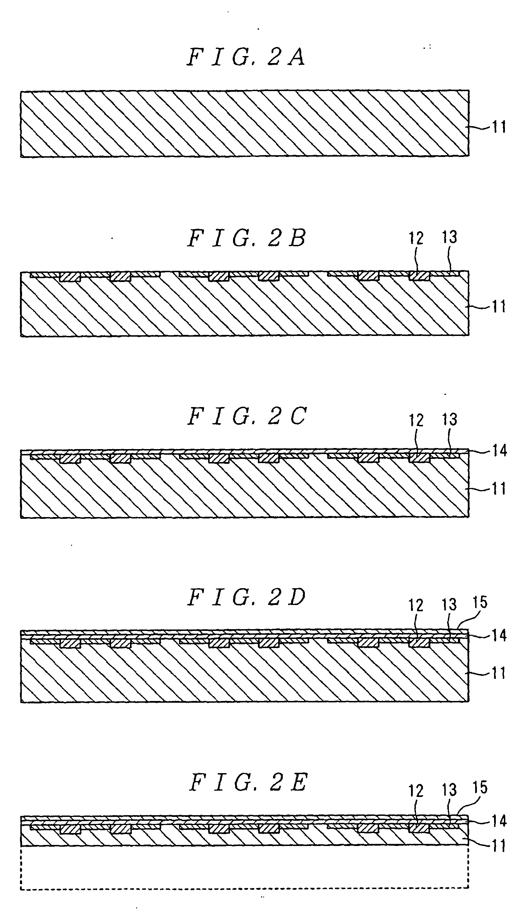

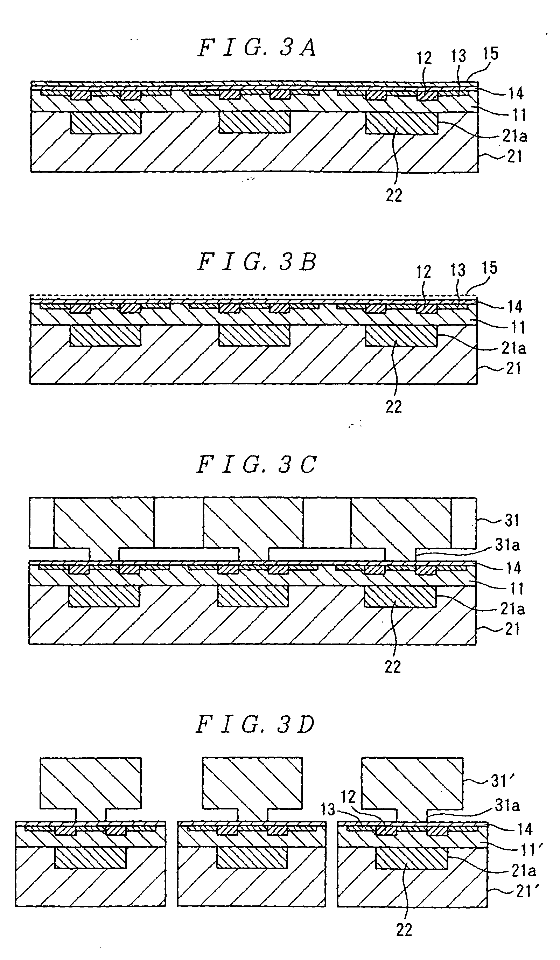

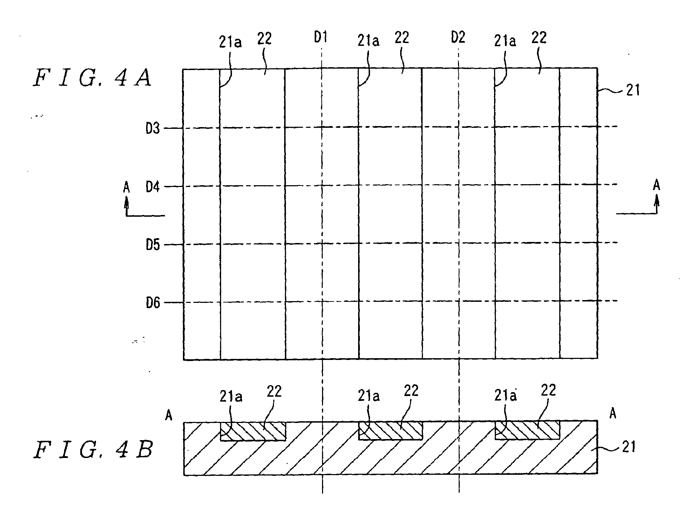

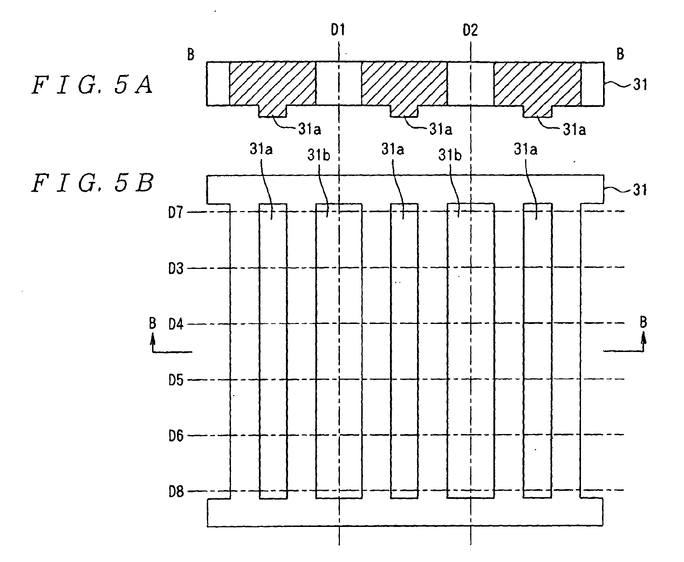

Figures 1A - 1C are sectional views showing an operation of a tilt sensor according to an embodiment of the present invention. Figures 2A - 2E are sectional views showing a manufacturing process of the tilt sensor according to a first embodiment of the present invention. Figures 3A - 3D are sectional views showing the manufacturing process of the tilt sensor according to the first embodiment of the present invention. Figure 4A is a plan view showing a configuration of a glass wafer according to the first embodiment of the present invention, and Figure 4B is a sectional view showing the configuration of the glass wafer according to the first embodiment of the present invention. Figure 5A is a sectional view showing the configuration of the weight wafer according to the first embodiment of the present invention, and Figure 5B is a plan view showing the configuration of the weight wafer according to the first embodiment of the present invention.

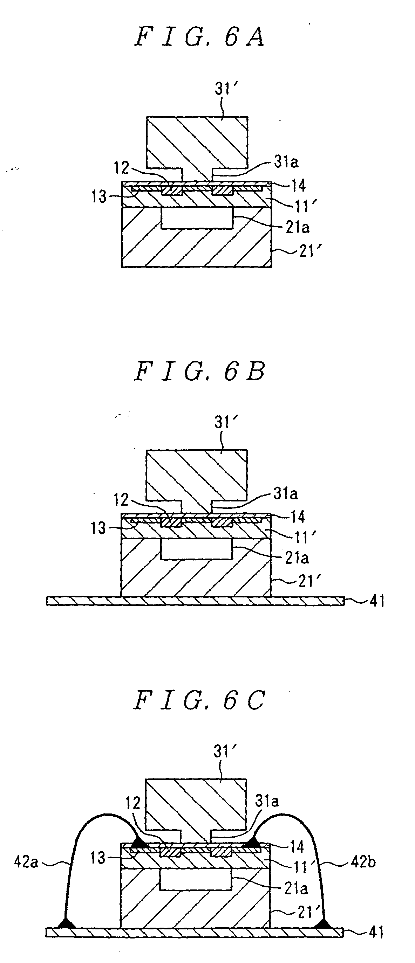

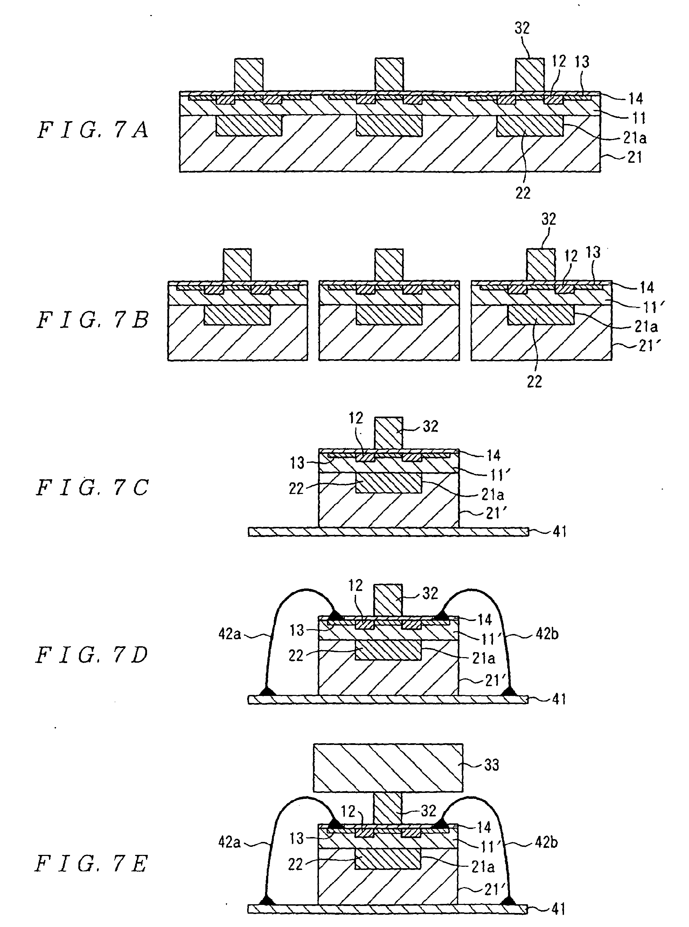

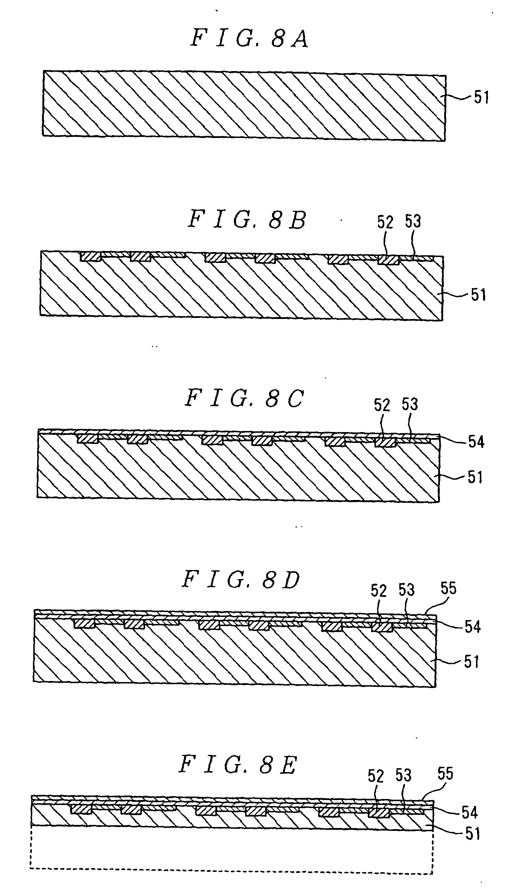

Figures 6A - 6C are sectional views showing the manufacturingprocess of the tilt sensor according to the first embodiment of the present invention. Figures 7A - 7E are sectional views showing the manufacturing process of the tilt sensor according to a second embodiment of the present invention. Figures 8A - 8E are sectional views showing the manufacturing process of the tilt sensor according to a third embodiment of the present invention.

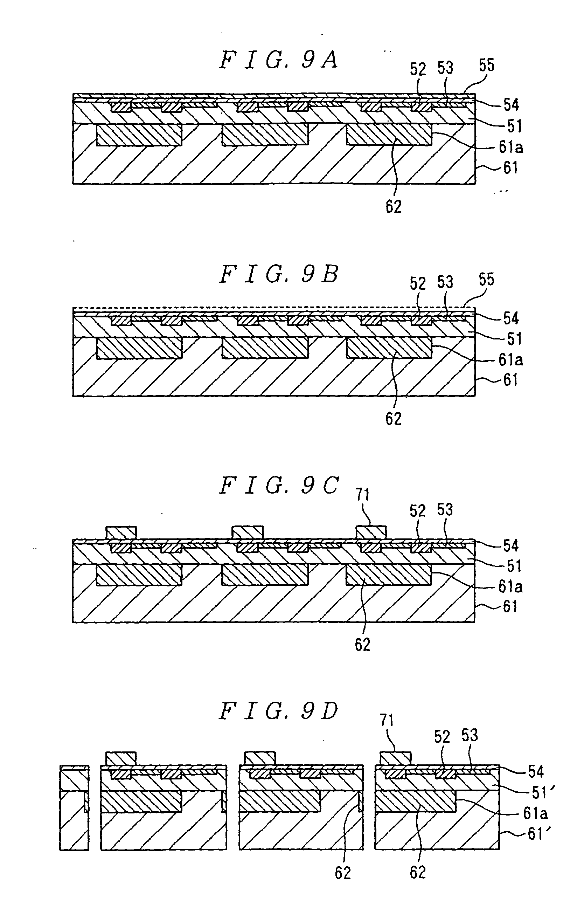

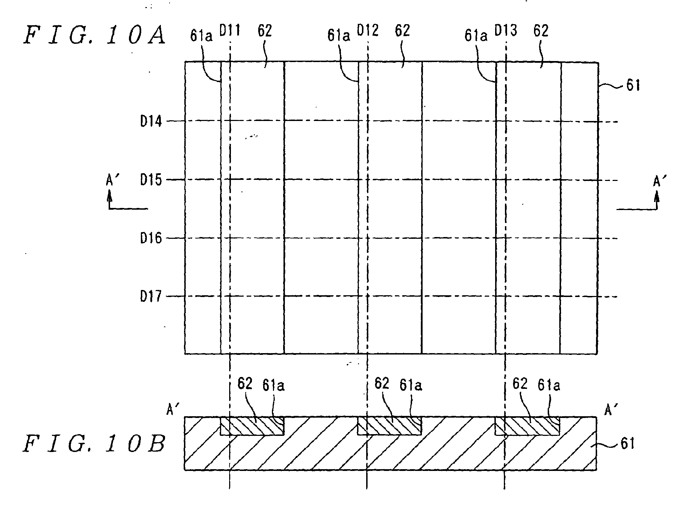

Figures 9A - 9D are sectional views showing the manufacturing process of the tilt sensor according to the third embodiment of the present invention. Figure 10A is a plan view showing the configuration of the glass wafer according to the third embodiment of the present invention, and Figure 10B is a sectional view showing the configuration of the glass wafer according to the third embodiment of the present invention.

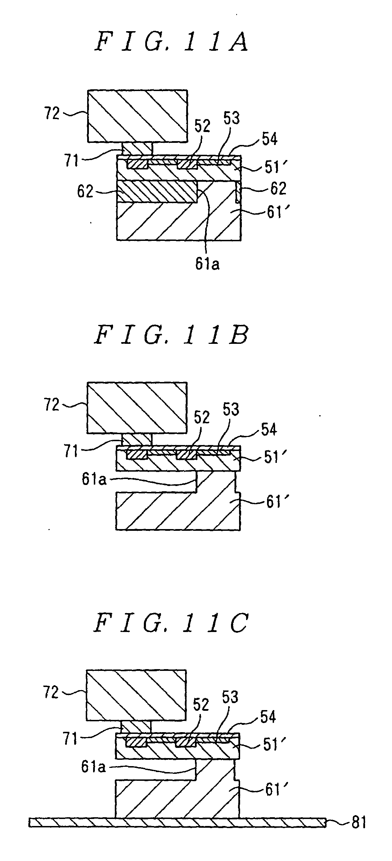

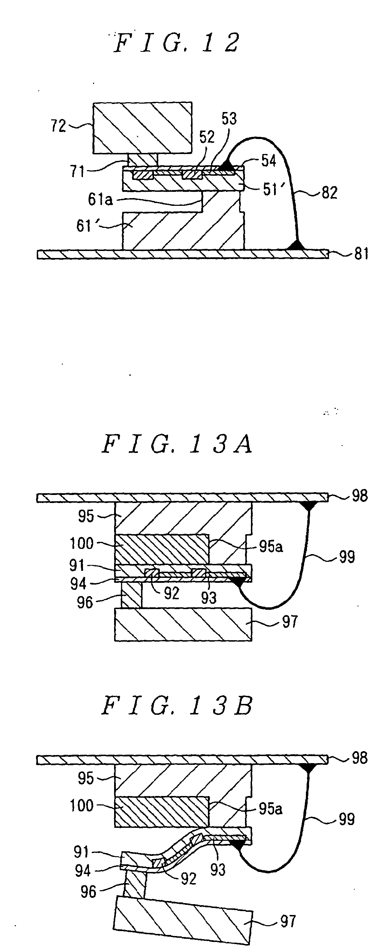

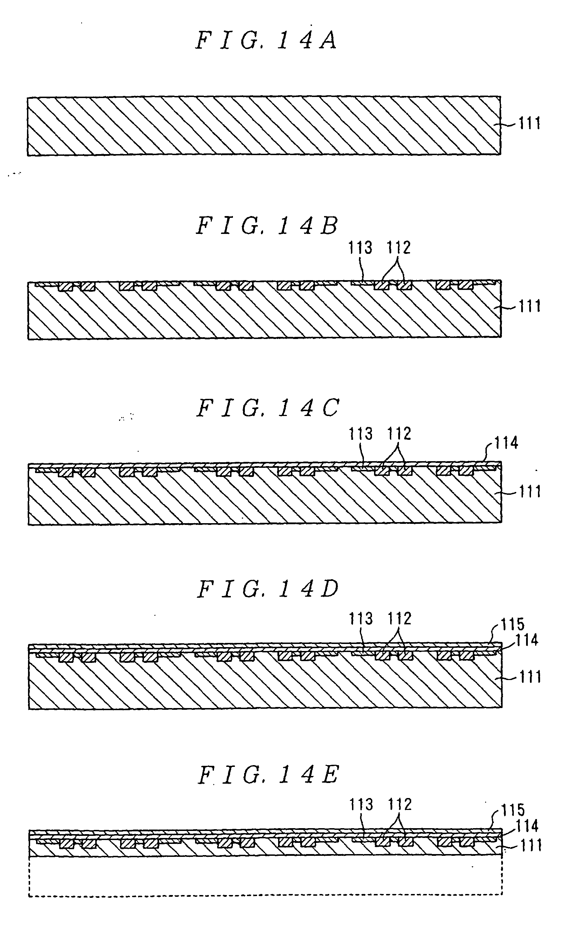

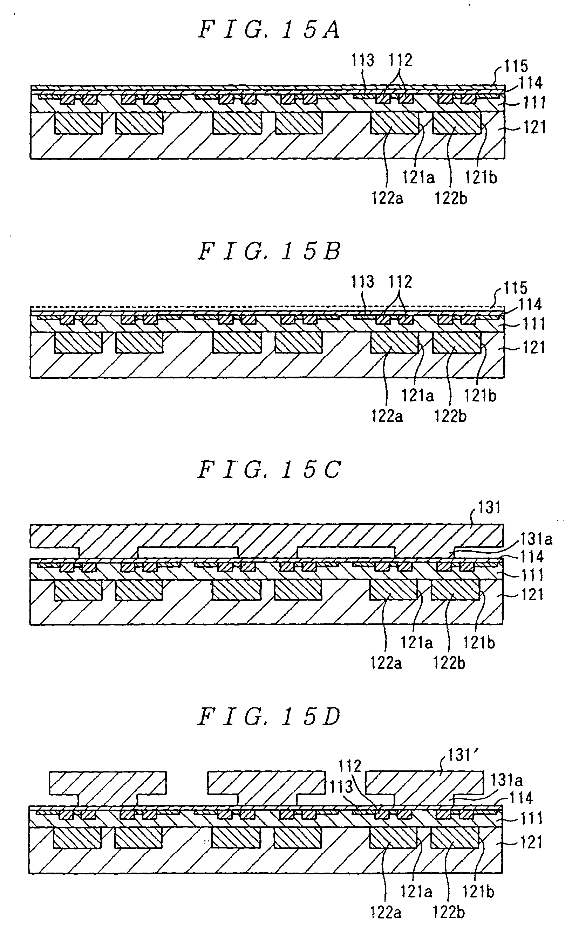

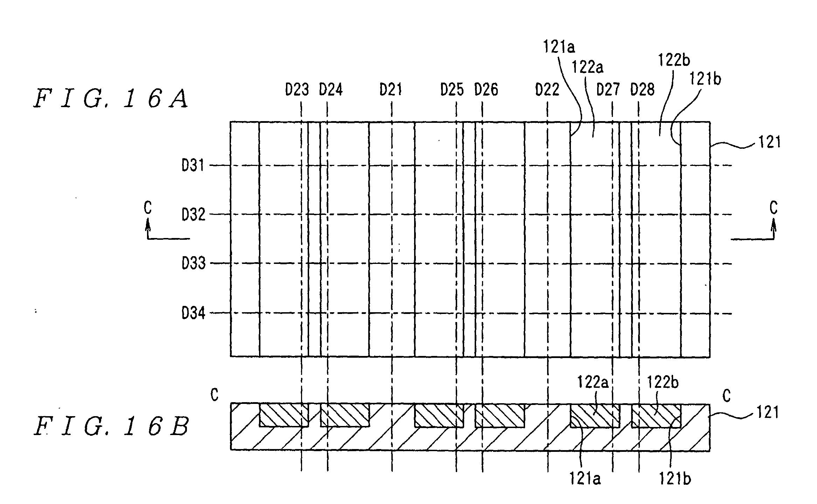

Figures 11A - 11C are sectional views showing the manufacturing process of the tilt sensor according to the third embodiment of the present invention. Figure 12 is a sectional view showing the manufacturing process of the tilt sensor according to the third embodiment of the present invention. Figures 13A and 13B are sectional views showing the configuration of the tilt sensor according to a fourth embodiment of the present invention. Figures 14A - 14E are sectional views showing the manufacturing process of the tilt sensor according to a fifth embodiment of the present invention. Figures 15A - 15D are sectional views showing the manufacturing process of the tilt sensor according to the fifth embodiment of the present invention. Figure 16A is a plan view showing the configuration of the glass wafer according to the fifth embodiment of the present invention and Figure 16B is a sectional view showing the configuration of the glass wafer according to the fifth embodiment of the present invention.

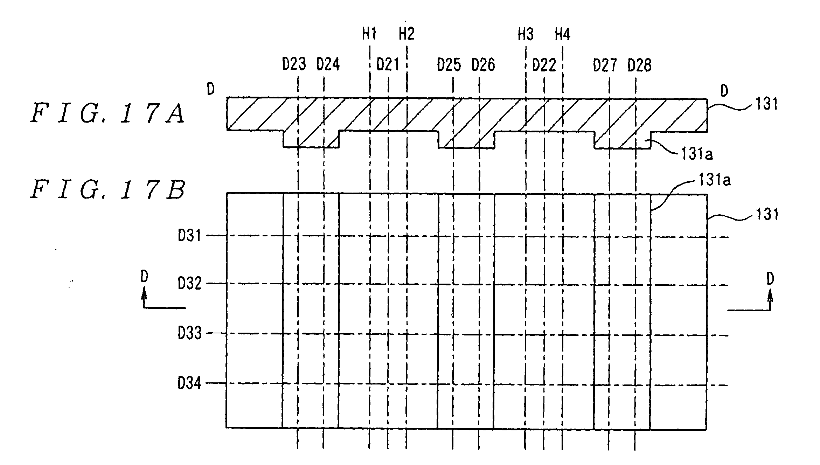

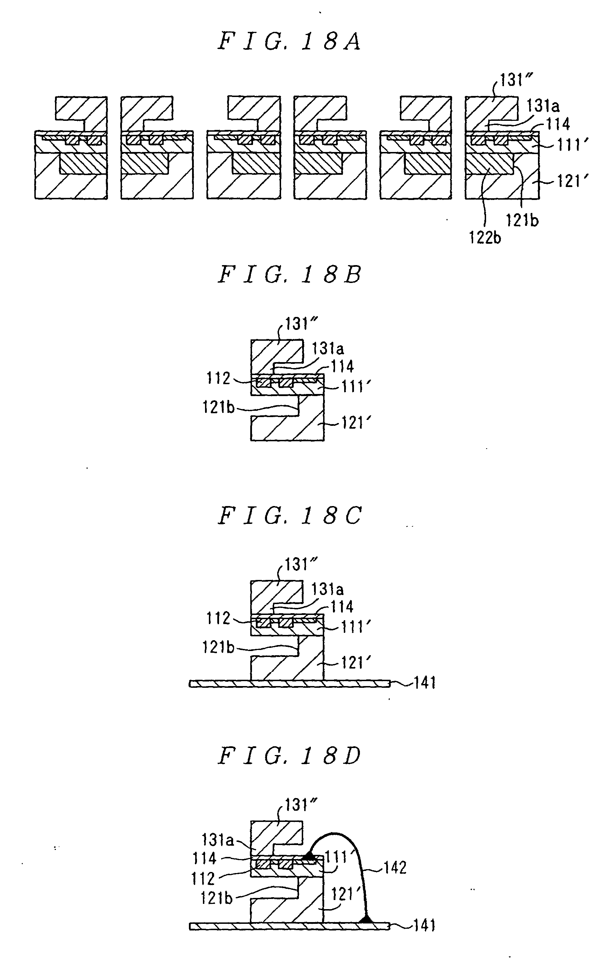

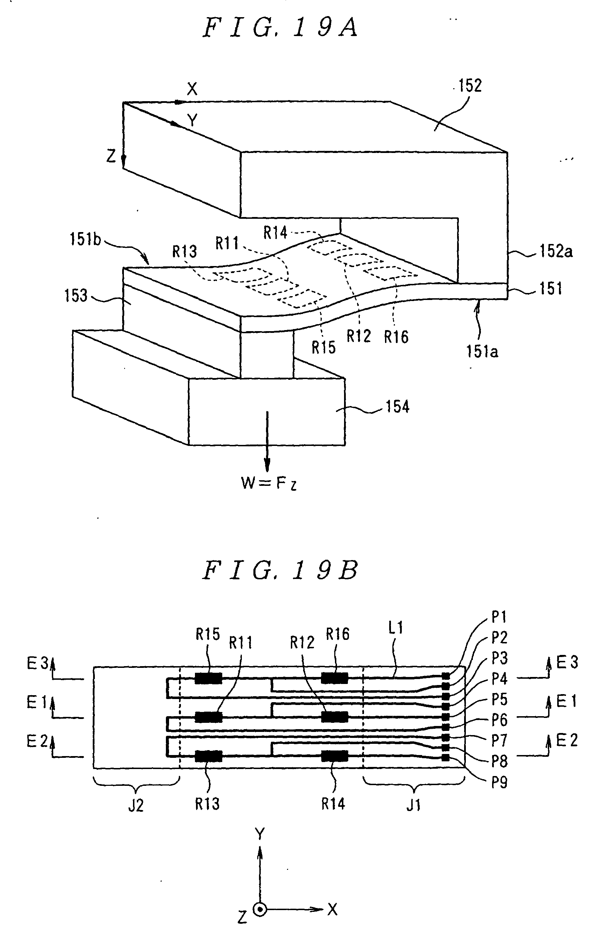

Figure 17A is a sectional view showing the configuration of a weight wafer according to the fifth embodiment of the present invention, and Figure 17B is a plan view showing the configuration of the weight wafer according to the fifth embodiment of the present invention. Figures 18A - 18D are sectional views showing the manufacturing process of the tilt sensor according to the fifth embodiment of the present invention. Figure 19A is a perspective view showing an overall configuration of the tilt sensor according to a sixth embodiment of the present invention, and Figure 19B is a plan view showing the configuration of a silicon substrate surface of the tilt sensor according to the sixth embodiment of the present invention.

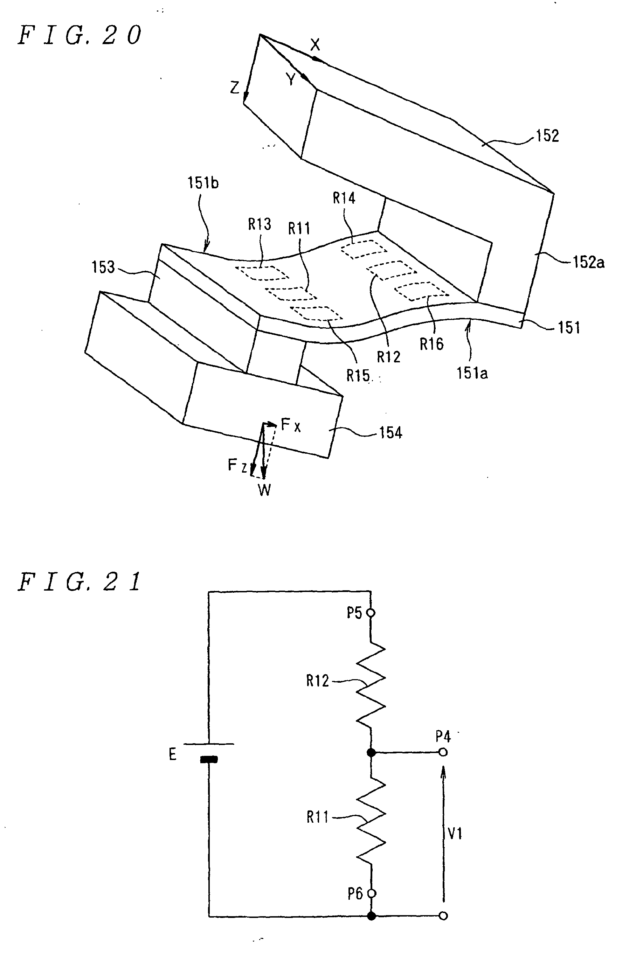

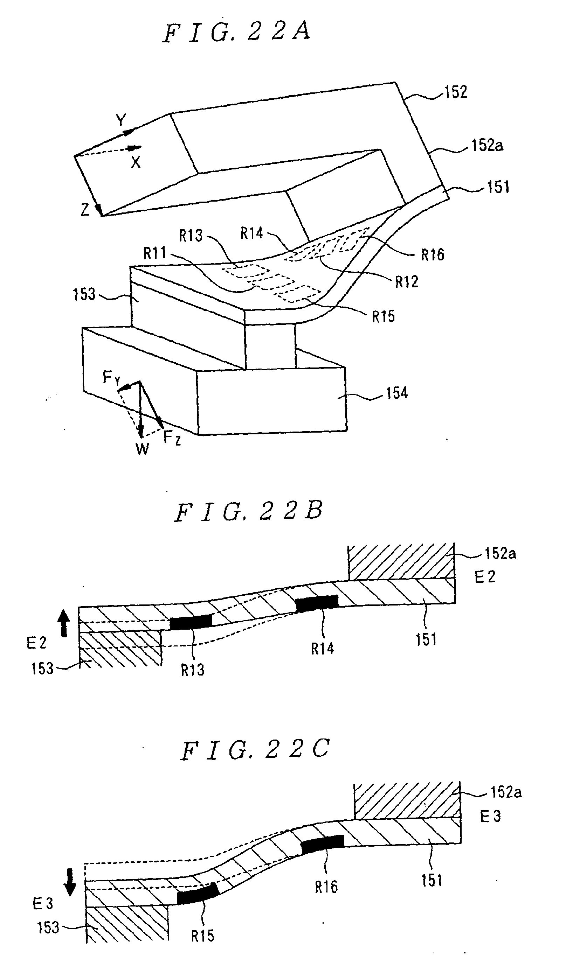

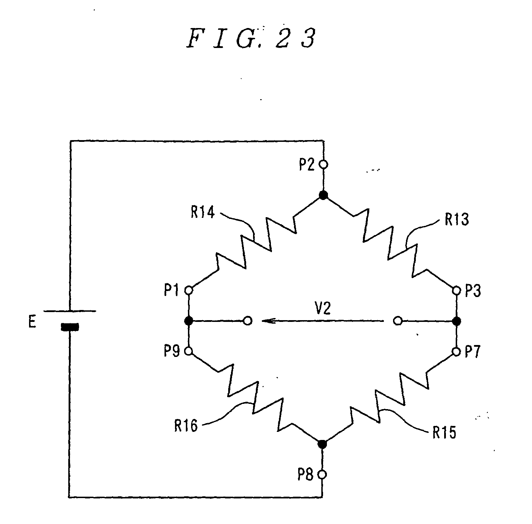

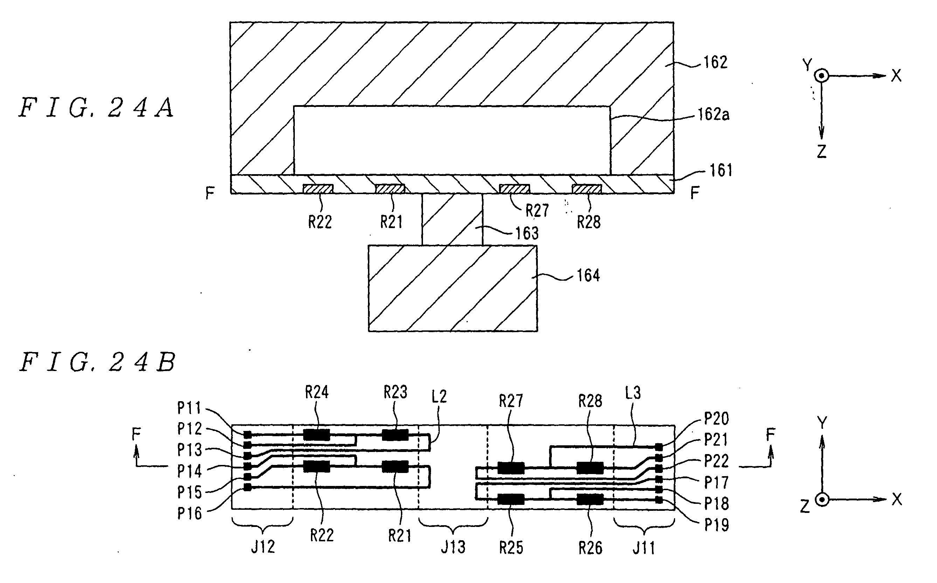

Figure 20 is a perspective view showing the operation of the tilt sensor according to the sixth embodiment of the present invention. Figure 21 is a circuit diagram showing a schematic configuration of piezoresistors R11 and R12 in Figure 19B. Figure 22A is a perspective view showing the operation of the tilt sensor according to the sixth embodiment of the present invention, and Figures 22B and 22C are sectional views showing the operation of the tilt sensor according to the sixth embodiment of the present invention. Figure 23 is a circuit diagram showing the schematic configuration of piezoresistors R23 to R26 in Figure 19B. Figure 24A is a sectional view showing the overall configuration of the tilt sensor according to a seventh embodiment of the present invention, and Figure 24B is a plan view showing the configuration of the silicon substrate surface of the tilt sensor according to the seventh embodiment of the present invention.

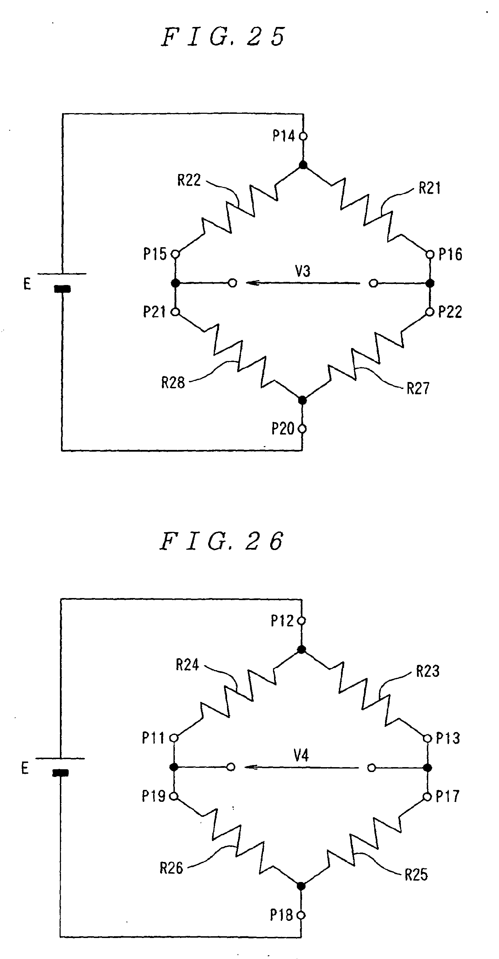

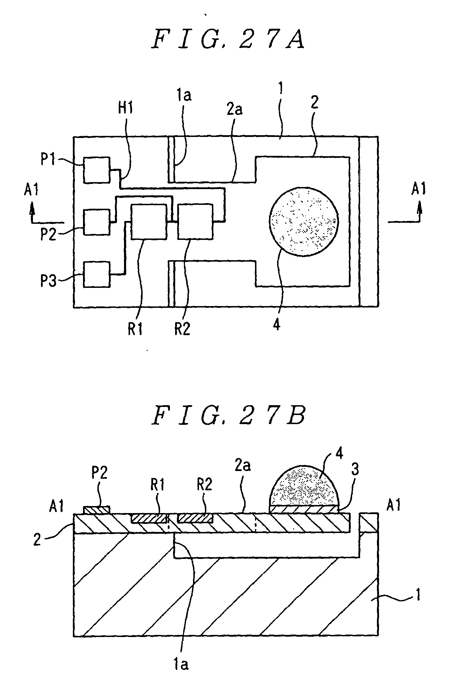

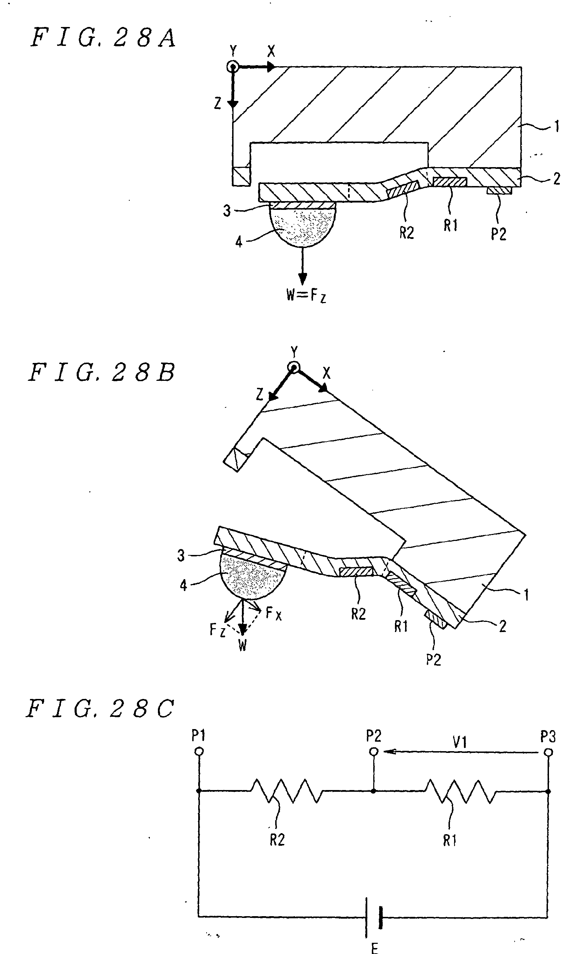

Figure 25 is a circuit diagram showing the schematic configuration of piezoresistors R21, R22, R27 and R28 in Figure 24B. Figure 26 is a circuit diagram showing the schematic configuration of the piezoresistors R23 to R26 in Figure 24B. Figure 27A is a plan view showing the configuration of the tilt sensor according to an eighth embodiment of the present invention, and Figure 27B is a sectional view cut by an A1 to A1 line in Figure 27A. Figure 28A and 28B are sectional views showing the operation of the tilt sensor according to the eighth embodiment of the present invention, and Figure 28C is a circuit diagram showing the schematic configuration of piezoresistors R1 and R2 in Figure 27A.

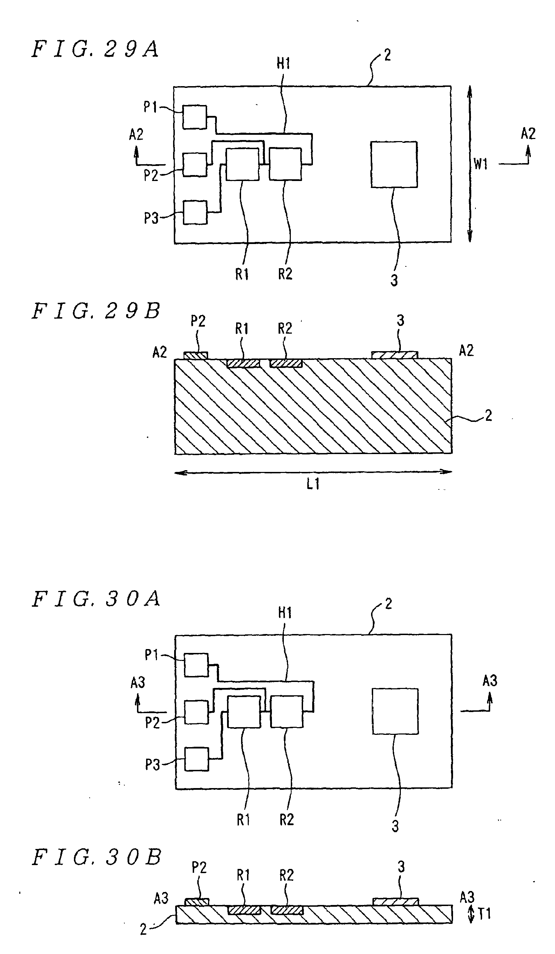

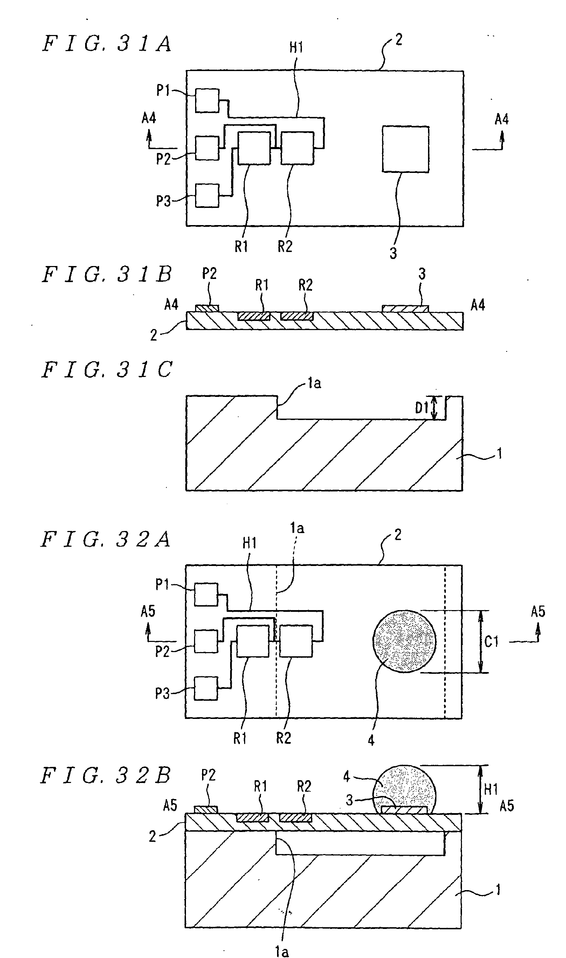

Figure 29Ais aplan view showing the manufacturing process of the tilt sensor according to the eighth embodiment of the present invention, and Figure 29B is a sectional view cut by an A2 to A2 line in Figure 29A. Figure 30A is a plan view showing the manufacturing process of the tilt sensor according to the eighth embodiment of the present invention, and Figure 30B is a sectional view cut by an A3 to A3 line in Figure 30A. Figure 31A is a plan view showing the manufacturing process of the tilt sensor according to the eighth embodiment of the present invention, and Figure 31B and 31C are sectional views cut by an A4 to A4 line in Figure 31A.

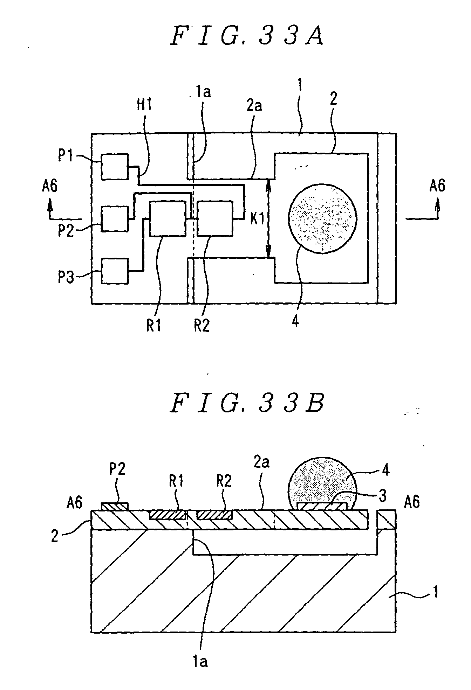

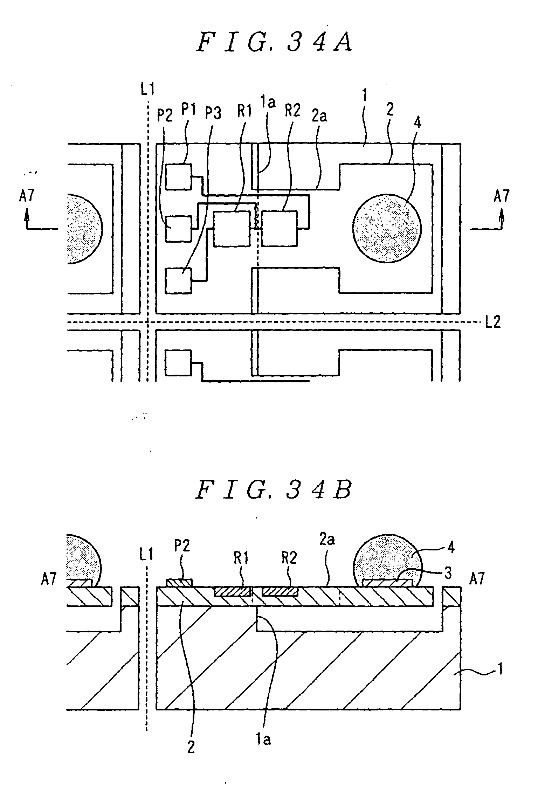

Figure 32A is a plan view showing the manufacturing process of the tilt sensor according to the eighth embodiment of the present invention, and Figure 32B is a sectional view cut by an A5 to A5 line in Figure 32A. Figure 33A is a plan view showing the manufacturing process of the tilt sensor according to the eighth embodiment of the present invention, and Figure 33B is a sectional view cut by an A6 to A6 line in Figure 33A. Figure 34A is a plan view showing the manufacturing process of the tilt sensor according to the eighth embodiment of the present invention, and Figure 34B is a sectional view cut by an A7 to A7 line in Figure 34A.

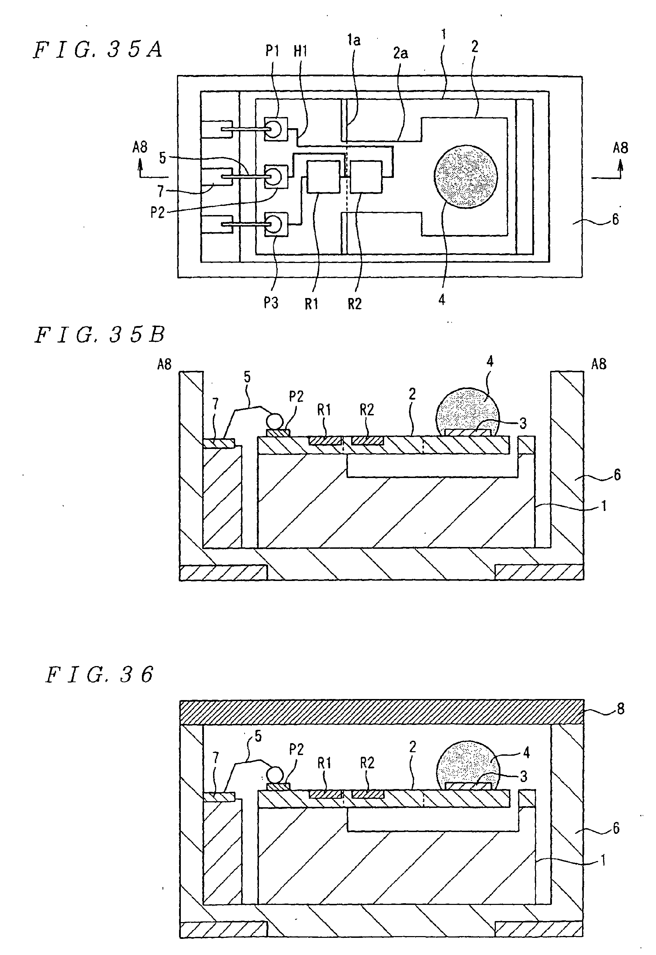

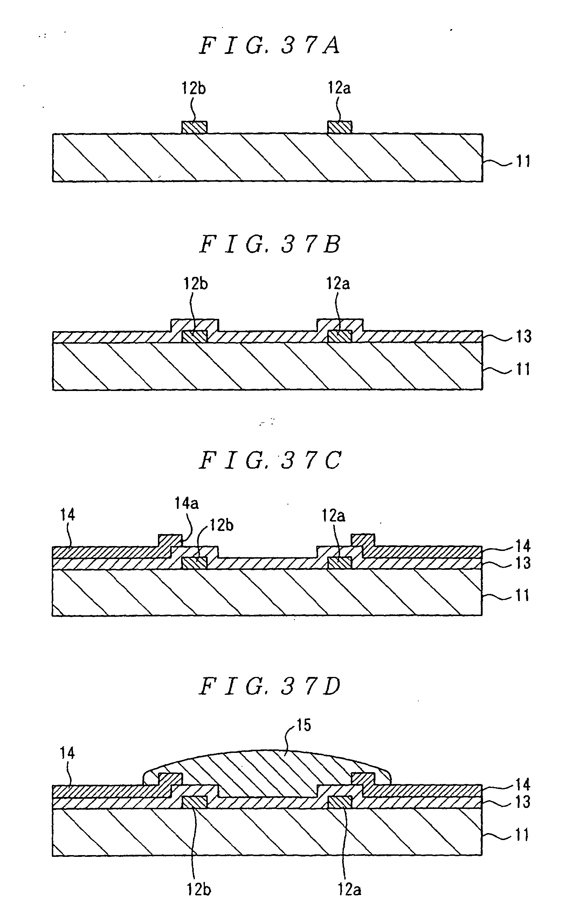

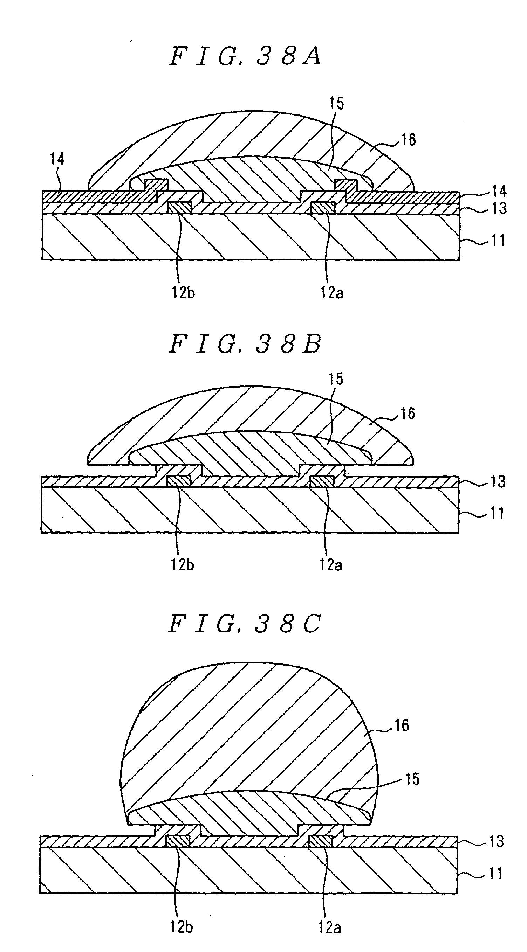

Figure 35A is a plan view showing the manufacturing process of the tilt sensor according to the eighth embodiment of the present invention, and Figure 35B is a sectional view cut by an A8 to A8 line in Figure 35A. Figure 36 is a sectional view showing the manufacturing process of the tilt sensor according to the eighth embodiment of the present invention. Figures 37A - 37D are sectional views showing an example of the manufacturing process of a solder bump of the tilt sensor according to an embodiment of the present invention. Figures 38A - 38C are sectional views showing an example of the manufacturing process of the solder bump of the tilt sensor according to an embodiment of the present invention.

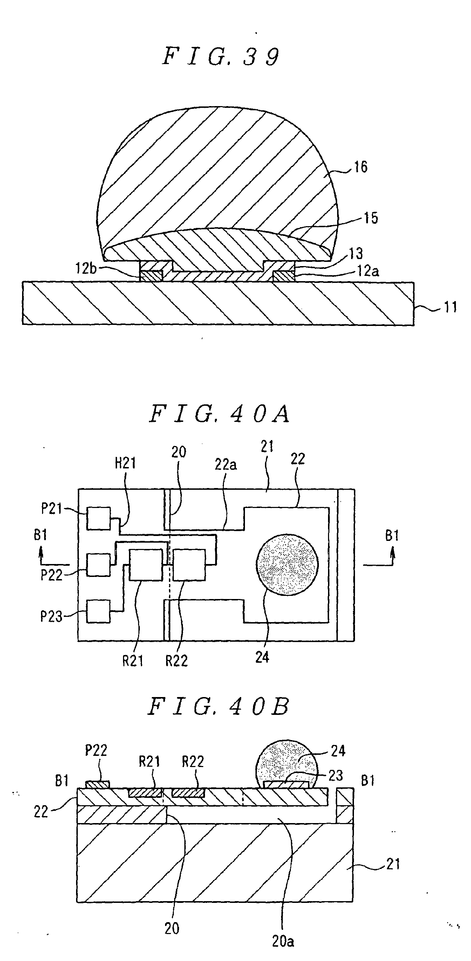

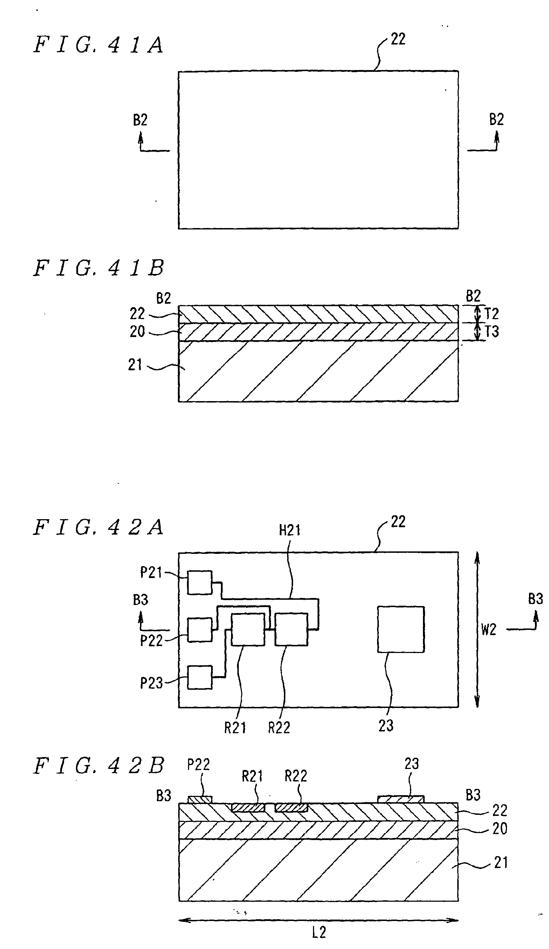

Figure 39 is a sectional view showing an example of the manufacturing process of the solder bump of the tilt sensor according to an embodiment of the present invention. Figure 40A is a plan view showing the configuration of the tilt sensor according to a ninth embodiment of the present invention, and Figure 40B is a sectional view cut by a B1 to Bl line in Figure 40A. Figure 41A is a plan view showing the manufacturing process of the tilt sensor according to the ninth embodiment of the present invention, and Figure 41B is a sectional view cut by a B2 to B2 line in Figure 41A. Figure 42A is a plan view showing the manufacturing process of the tilt sensor according to the ninth embodiment of the present invention, and Figure 42B is a sectional view cut by a B3 to B3 line in Figure 42A.

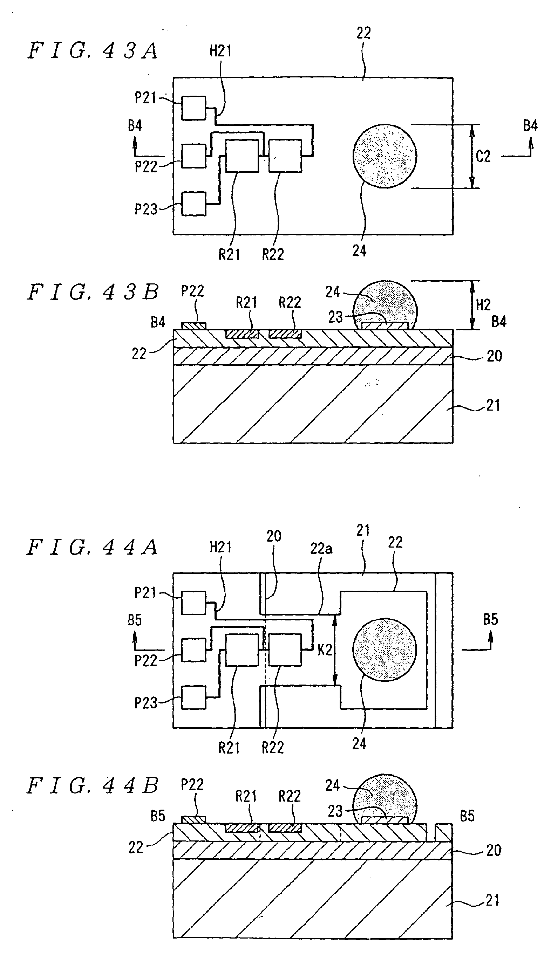

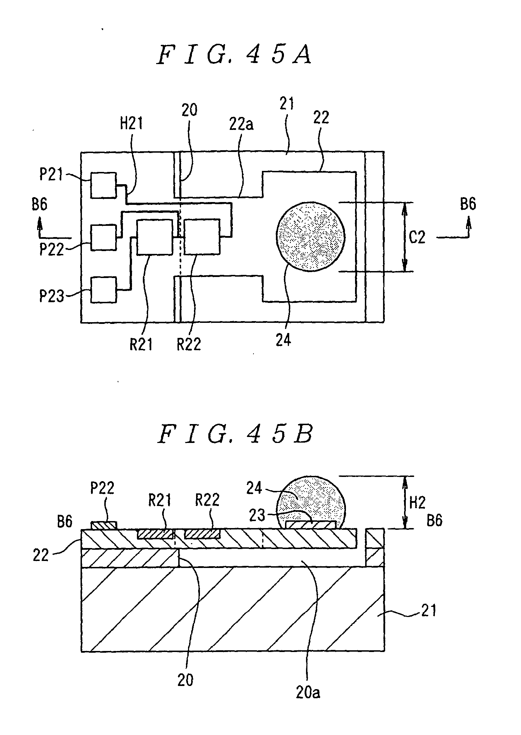

Figure 43A is a plan view showing the manufacturing process of the tilt sensor according to the ninth embodiment of the present invention, and Figure 43B is a sectional view cut by a B4 to B4 line in Figure 43A. Figure 44A is a plan view showing the manufacturing process of the tilt sensor according to the ninth embodiment of the present invention, and Figure 44B is a sectional view cut by a B5 to B5 line in Figure 44A. Figure 45A is a plan view showing the manufacturing process of the tilt sensor according to the ninth embodiment of the present invention, and Figure 45B is a sectional view cut by a B6 to B6 line in Figure 45A.

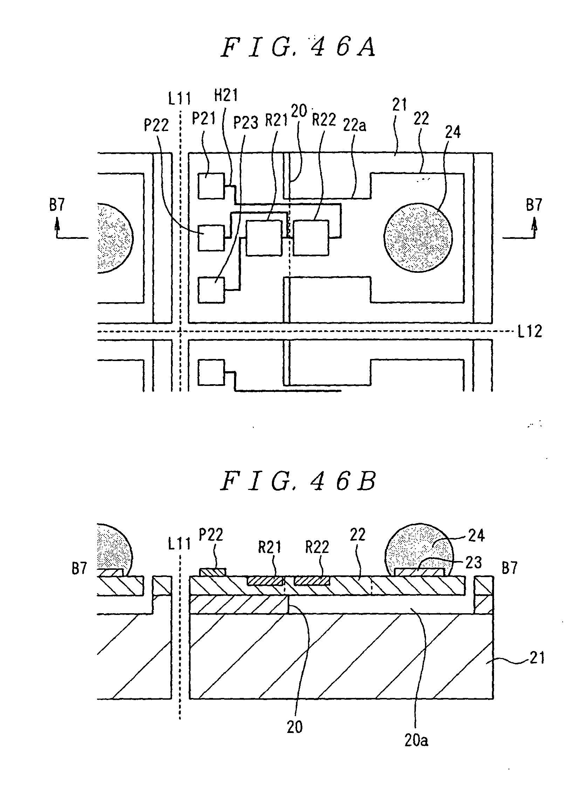

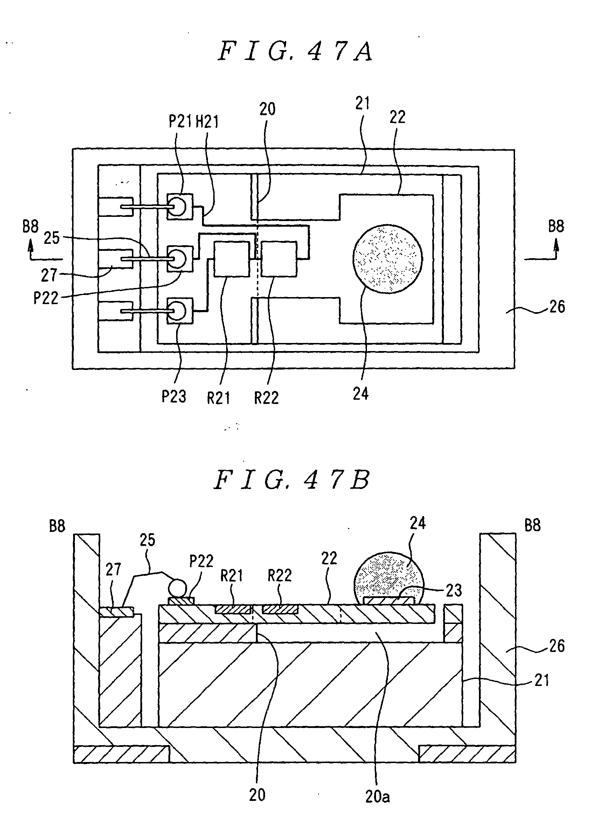

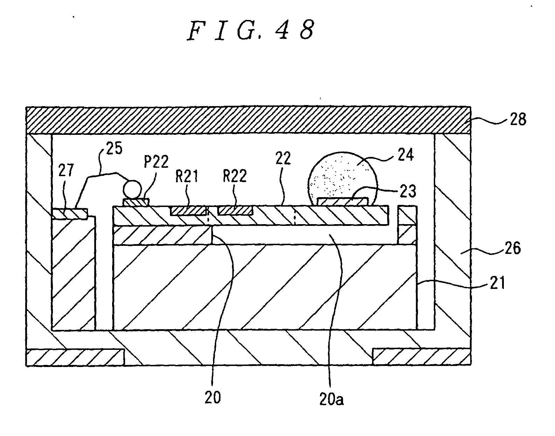

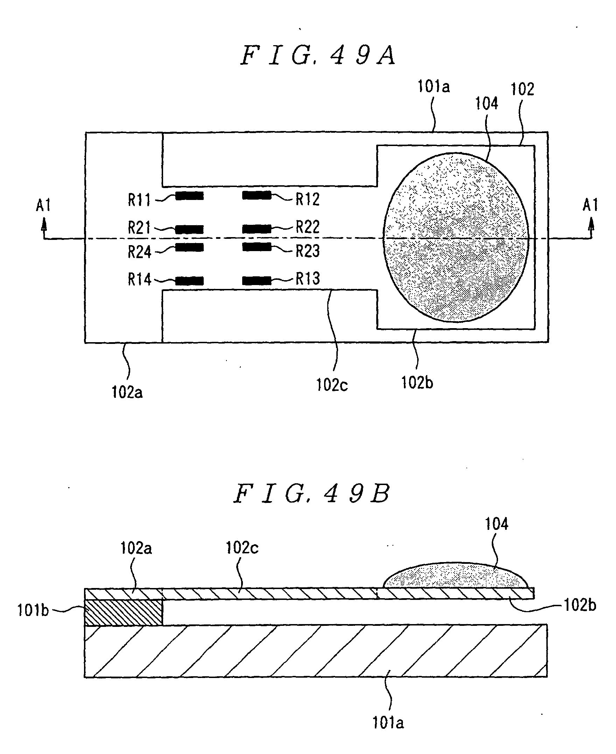

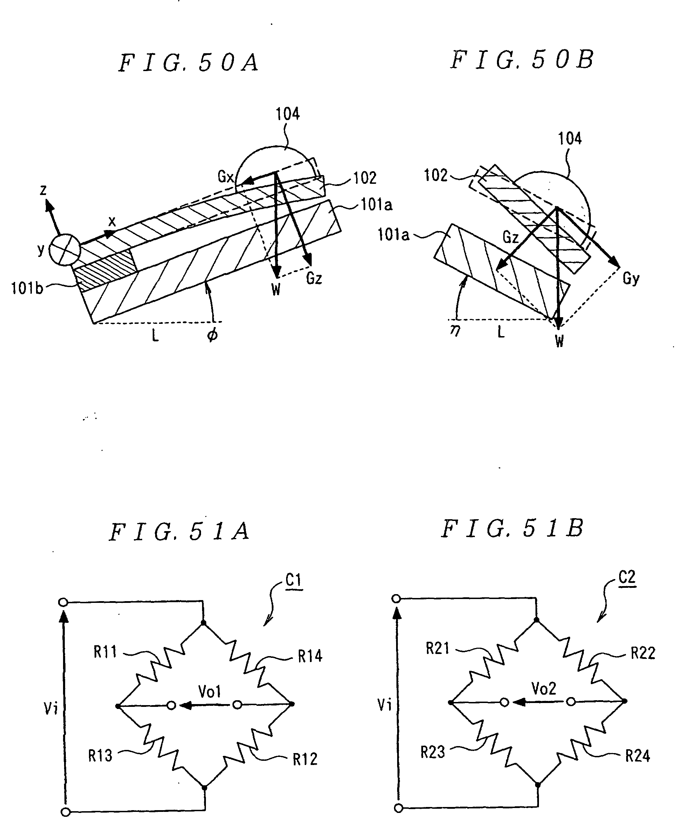

Figure 46Ais aplanview showing themanufacturingprocess of the tilt sensor according to the ninth embodiment of the present invention, and Figure 46B is a sectional view cut by a B7 to B7 line in Figure 46A. Figure 47A is a plan view showing the manufacturing process of the tilt sensor according to the ninth embodiment of the present invention, and Figure 47B is a sectional view cut by a B8 to B8 line in Figure 47A. Figure 48 is a sectional view showing the manufacturing process of the tilt sensor according to the ninth embodiment of the present invention. Figure 49A is a plan view showing the configuration of the tilt sensor according to a tenth embodiment of the present invention, and Figure 49B is a sectional view cut by a A1 to A1 line in Figure 49A. Figure 50A is a diagram defining a coordinate system of the tilt sensor viewed from a section on cutting a silicon substrate 102 in a longitudinal direction, and Figure 50B is a diagram defining the coordinate system of the tilt sensor viewed from a section on cutting the silicon substrate 102 in a lateral direction.

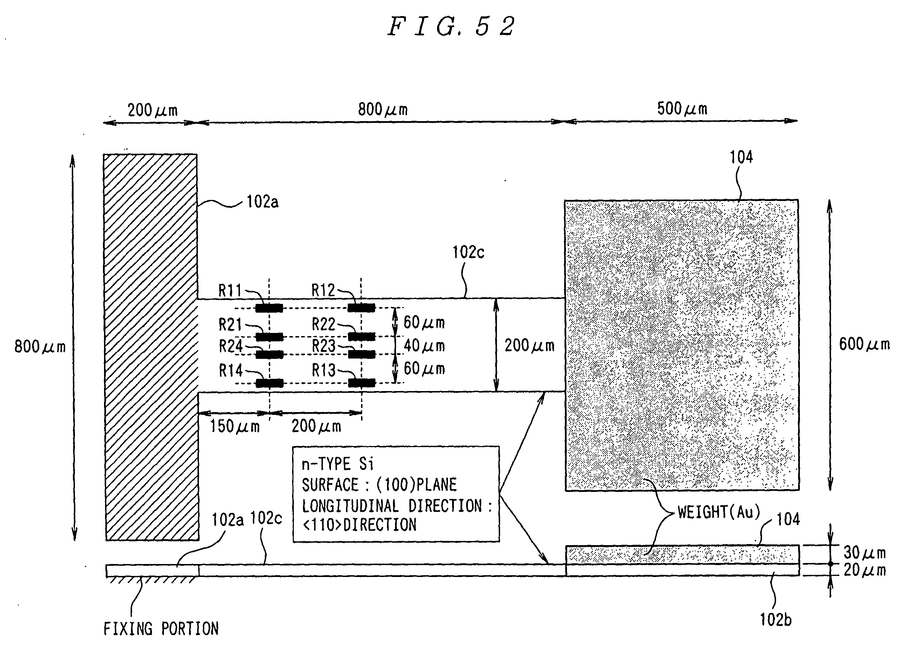

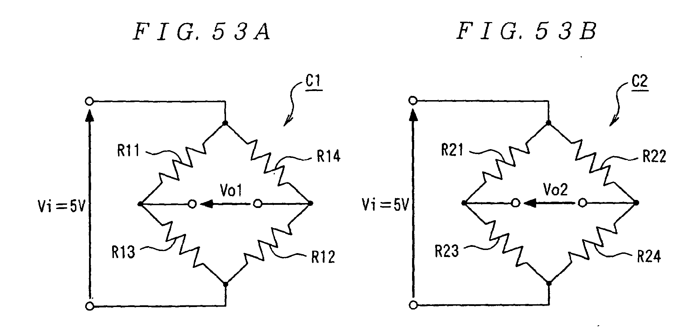

Figure 51A is a circuit diagram showing the schematic configuration of the piezoresistors R11, R12, R13 and R14, and Figure 51B is a circuit diagram showing the schematic configuration of the piezoresistors R21, R22, R23 and R24. Figure 52 is a diagram showing size conditions of the silicon substrate 102 and piezoresistors. Figure 53A is a circuit diagram showing the schematic configuration of the piezoresistors R11, R12, R13 andR14, and Figure 53B is a circuit diagram showing the schematic configuration of the piezoresistors R21, R22, R23 and R24.

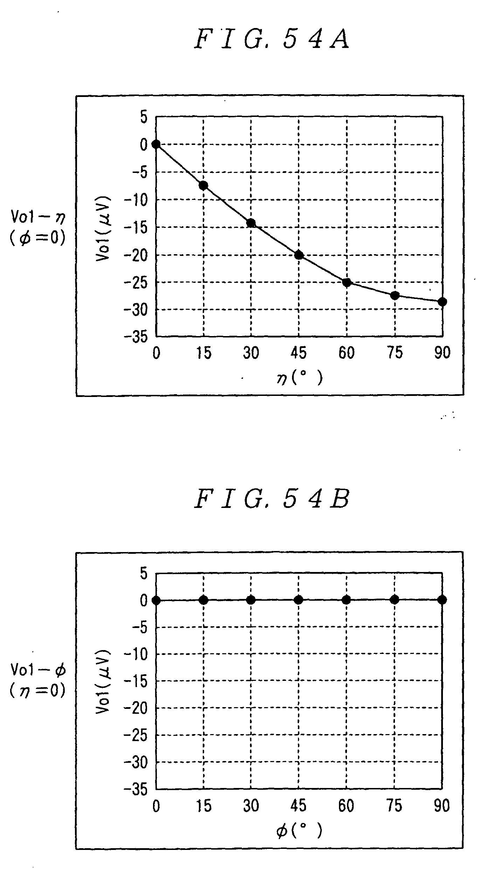

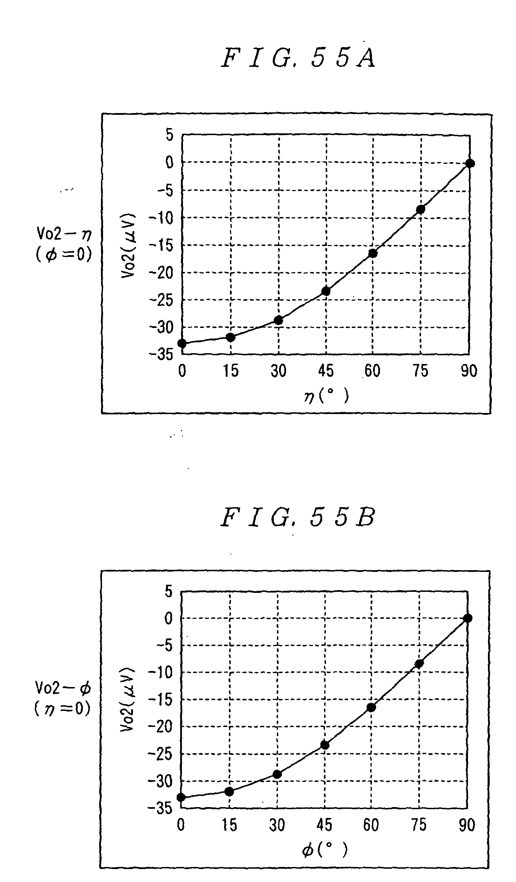

Figure 54A is a graph showing a change in an output voltage Vo1 when changing a tilt angle $\eta$ while keeping a tilt angle $\phi$ fixed, and Figure 54B is a graph showing the change in the output voltage Vol when changing the tilt angle $\phi$ while keeping the tilt angle $\eta$ fixed. Figure 55A is a graph showing the change in an output voltage Vo2 when changing the tilt angle $\eta$ while keeping the tilt angle $\phi$ fixed, and Figure 55B is a graph showing the change in the output voltage Vo2 when changing the tilt angle $\phi$ while keeping the tilt angle $\eta$ fixed.

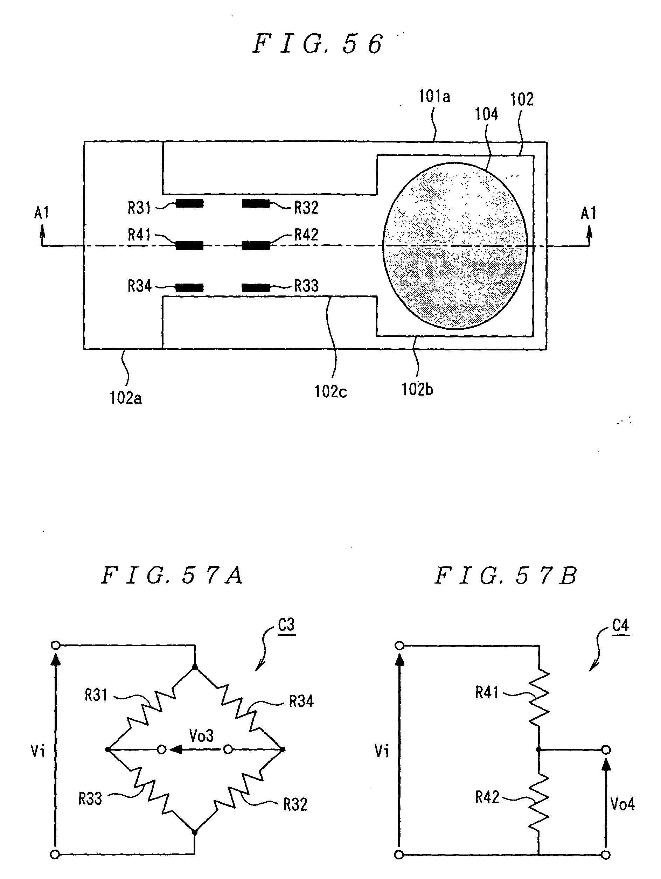

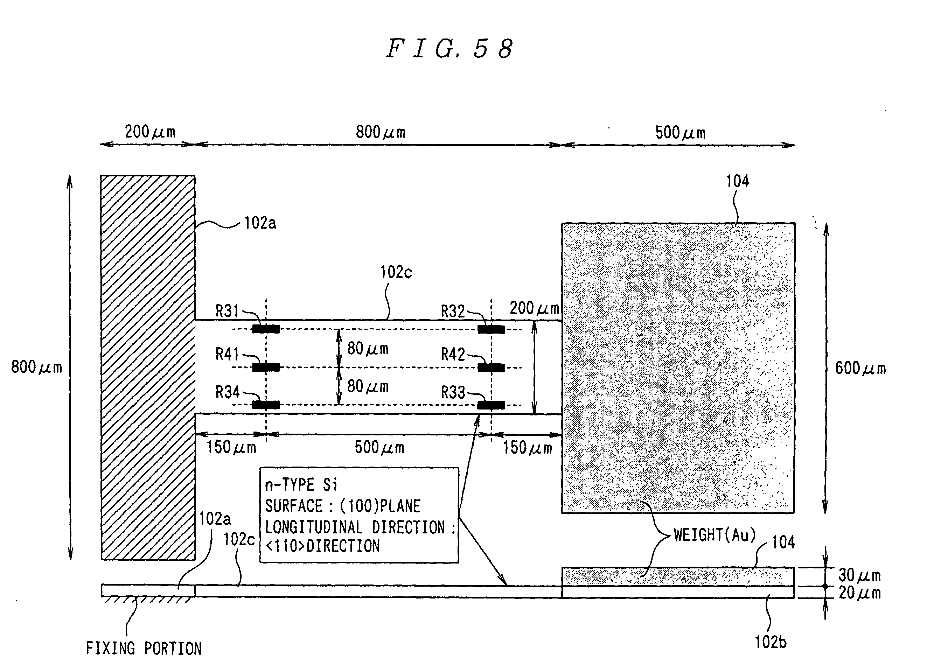

Figure 56 is a plan view showing the configuration of the tilt sensor according to an eleventh embodiment of the present invention. Figure 57A is a circuit diagram showing the schematic configuration of piezoresistors R31, R32, R33 and R34, and Figure 57B is a circuit diagram showing the schematic configuration of piezoresistors R41 and R42. Figure 58 is a circuit diagram showing the size conditions of the silicon substrate 102 and piezoresistors.

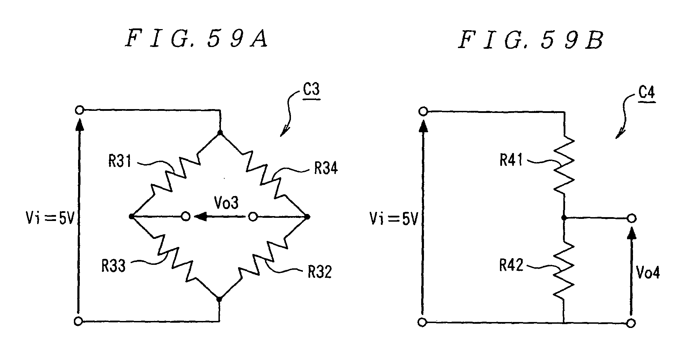

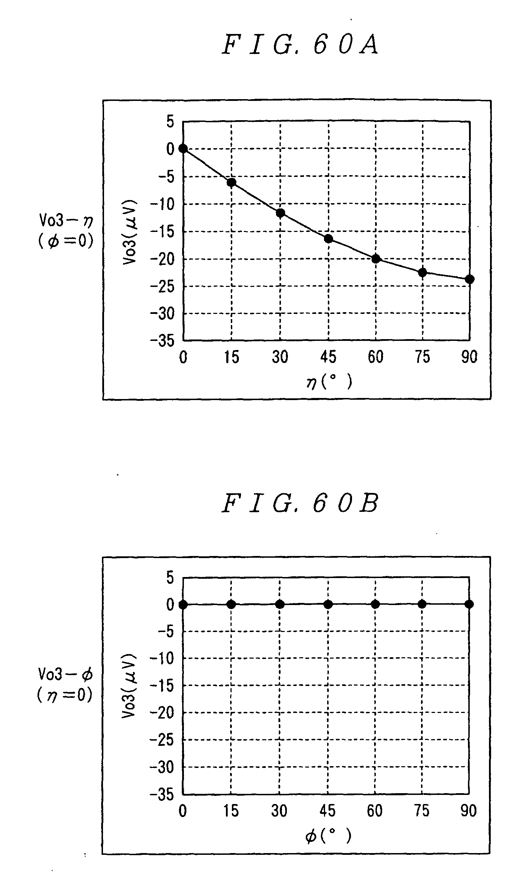

Figure 59A is a circuit diagram showing the schematic configuration of the piezoresistors R31, R32, R33 and R34, and Figure 59B is a circuit diagram showing the schematic configuration of the piezoresistors R41 and R42. Figure 60A is a graph showing the change in an output voltage Vo3 when changing the tilt angle $\eta$ while keeping the tilt angle $\phi$ fixed, and Figure 60B is a graph showing the change in the output voltage Vo3 when changing the tilt angle $\phi$ while keeping the tilt angle $\eta$ fixed.

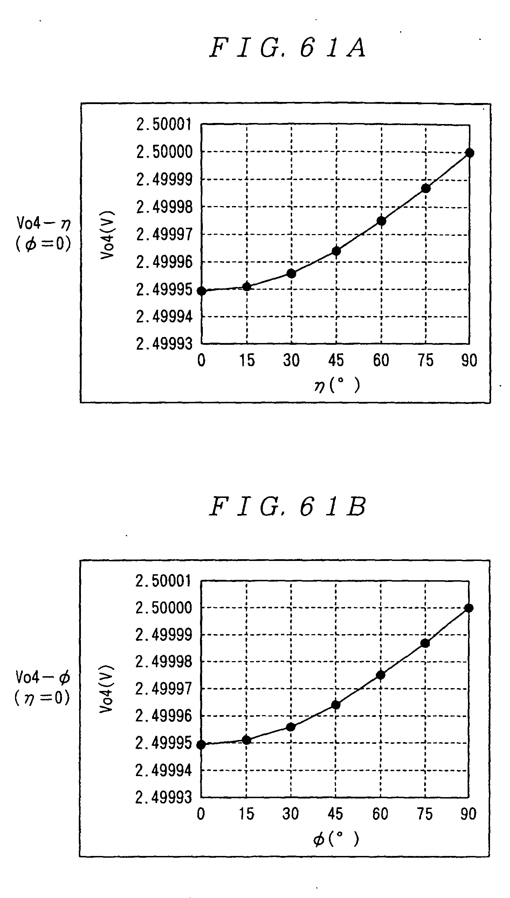

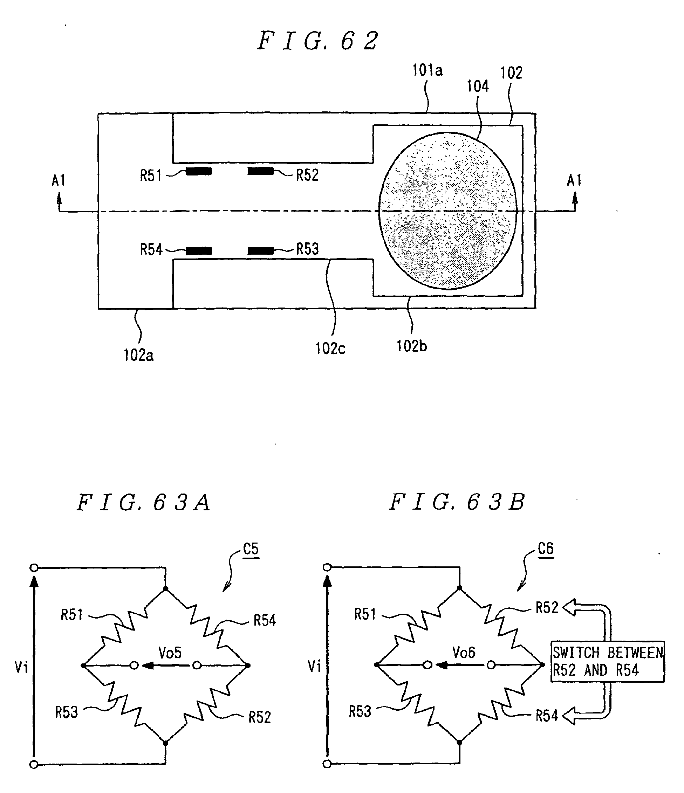

Figure 61A is a graph showing the change in an output voltage Vo4 when changing the tilt angle $\eta$ while keeping the tilt angle $\phi$ fixed, and Figure 61B is a graph showing the change in the output voltage Vo4 when changing the tilt angle $\phi$ while keeping the tilt angle $\eta$ fixed. Figure 62 is a plan view showing the configuration of the tilt sensor according to a twelfth embodiment of the present invention.

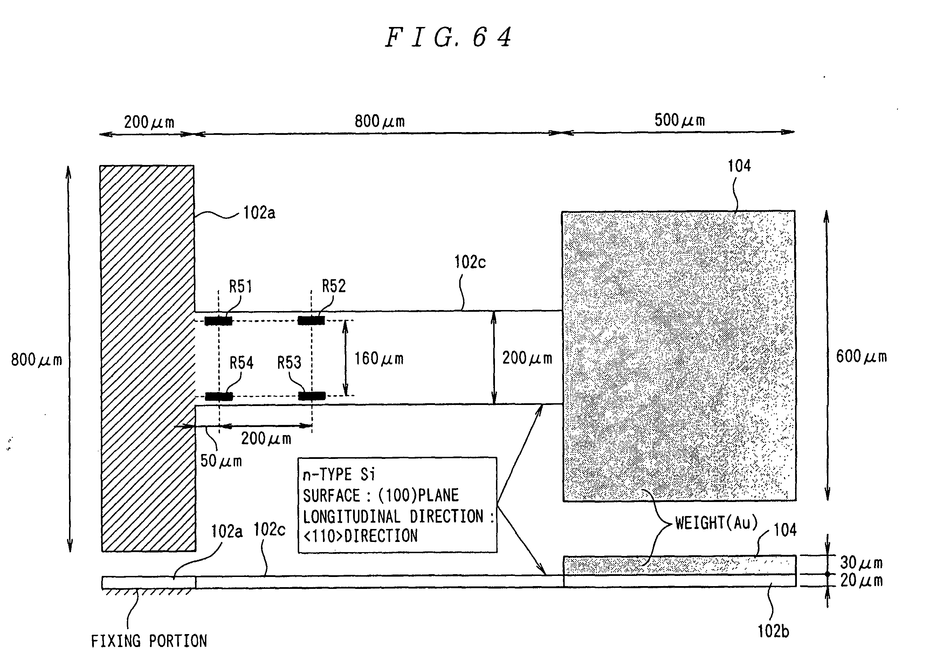

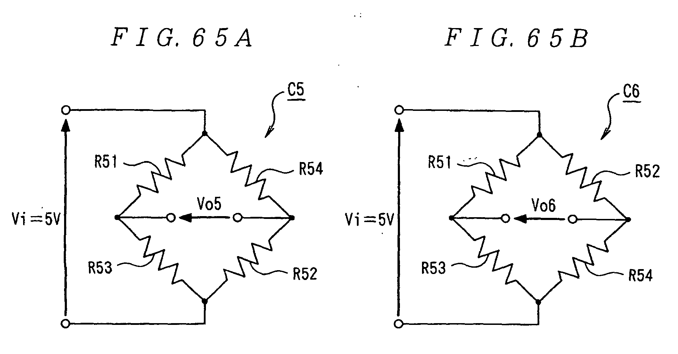

Figure 63A is a circuit diagram showing the schematic configuration of piezoresistors R51, R52, R53 and R54, and Figure 63B is a circuit diagram showing another schematic configuration of the piezoresistors R51, R52, R53 and R54. Figure 64 is a circuit diagram showing the size conditions of the silicon substrate 102 and piezoresistors. Figure 65A is a circuit diagram showing the schematic configuration of the piezoresistors R51, R52, R53 and R54, and Figure 65B is a circuit diagram showing another schematic configuration of the piezoresistors R51, R52, R53 and R54.

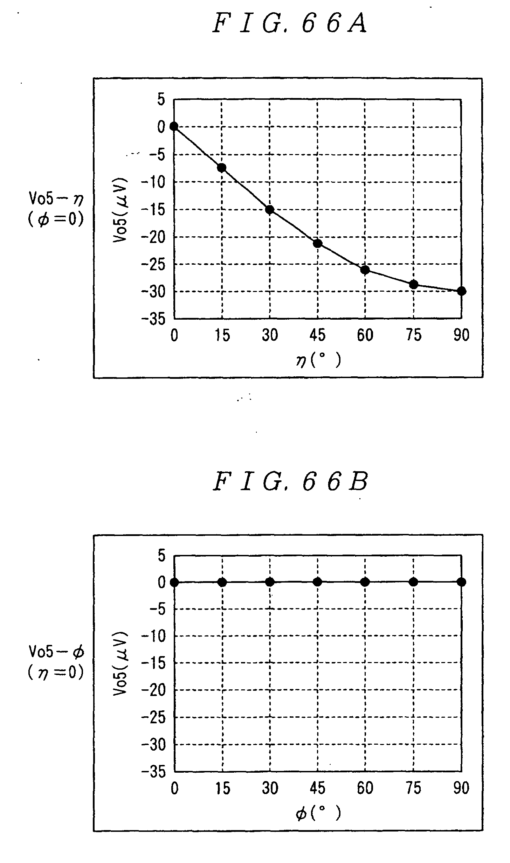

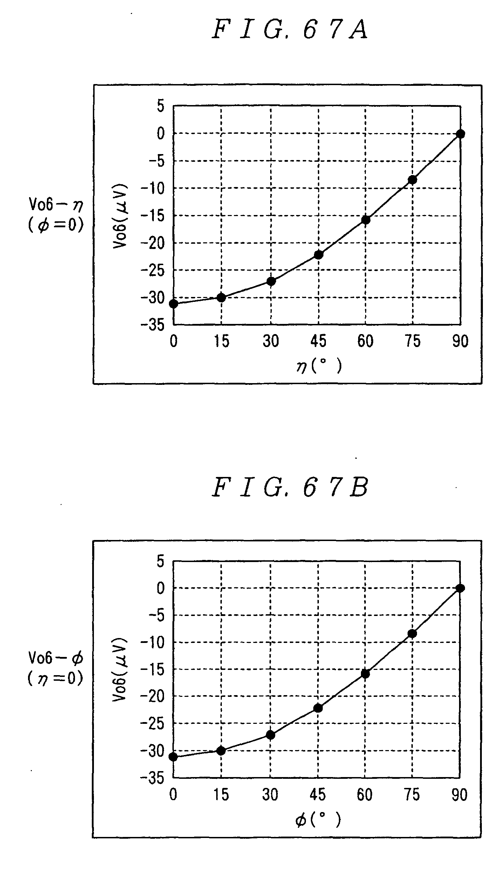

Figure 66A is a graph showing the change in an output voltage Vo5 when changing the tilt angle $\eta$ while keeping the tilt angle $\phi$ fixed, and Figure 66B is a graph showing the change in the output voltage Vo5 when changing the tilt angle $\phi$ while keeping the tilt angle $\eta$ fixed. Figure 67A is a graph showing the change in an output voltage Vo6 when changing the tilt angle $\eta$ while keeping the tilt angle $\phi$ fixed, and Figure 67B is a graph showing the change in the output voltage Vo6 when changing the tilt angle $\phi$ while keeping the tilt angle $\eta$ fixed.

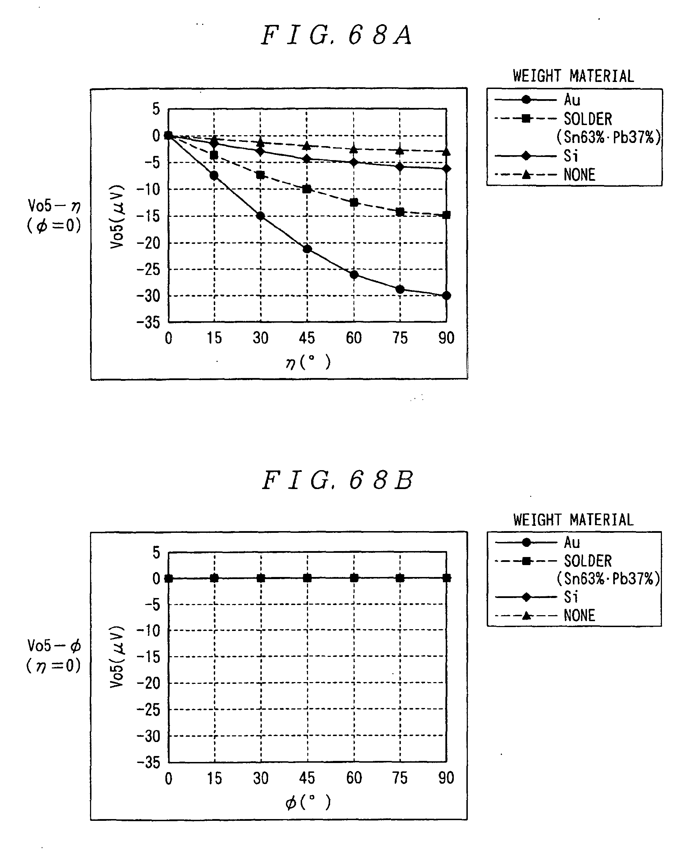

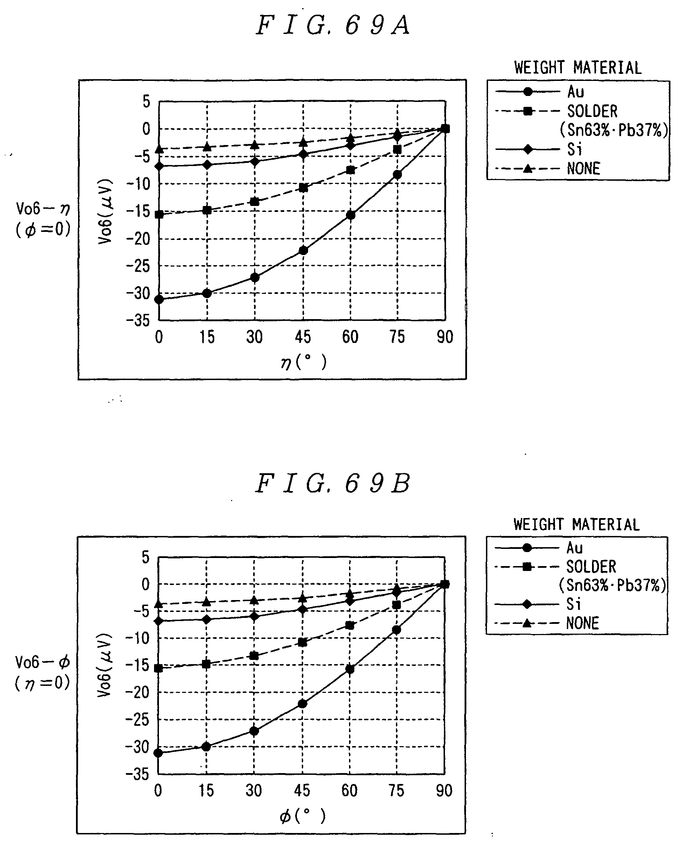

Figure 68A is a graph showing the change in the output voltage Vo5 as to each material when changing the tilt angle $\eta$ while keeping the tilt angle $\phi$ fixed in the case of changing the materials of a weight member 104, and Figure 68B is a graph showing the change in the output voltage Vo5 as to each material when changing the tilt angle $\phi$ while keeping the tilt angle $\eta$ fixed in the case of changing the materials of the weight member 104. Figure 69A is a graph showing the change in the output voltage Vo6 as to each material when changing the tilt angle η while keeping the tilt angle φ fixed in the case of changing the materials of the weight member 104, and Figure 69B is a graph showing the change in the output voltage Vo6 in each material when changing the tilt angle φ while keeping the tilt angle η fixed in the case of changing the materials of the weight member 104.

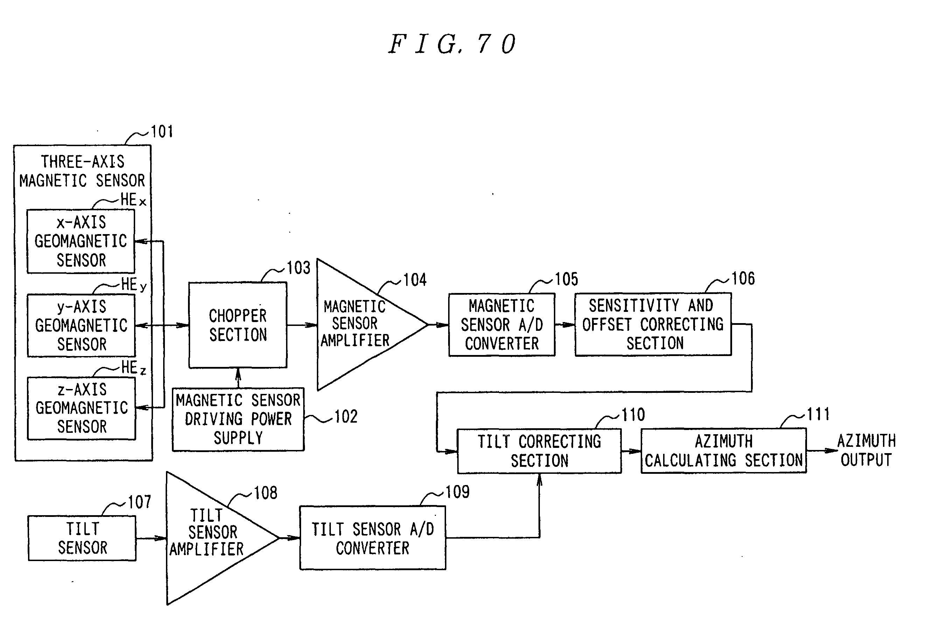

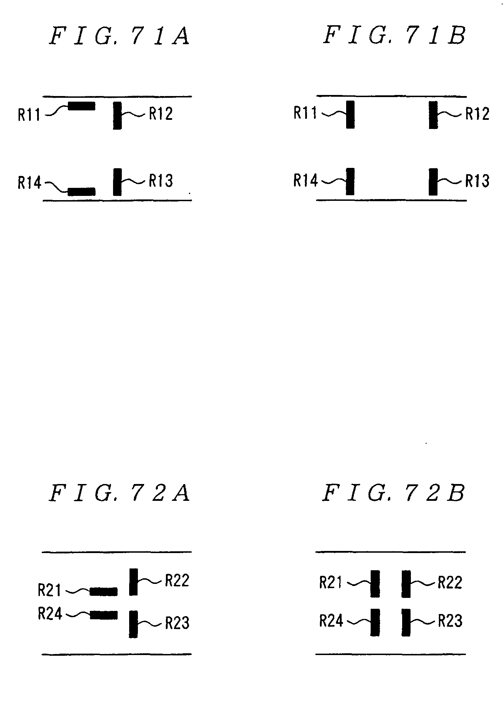

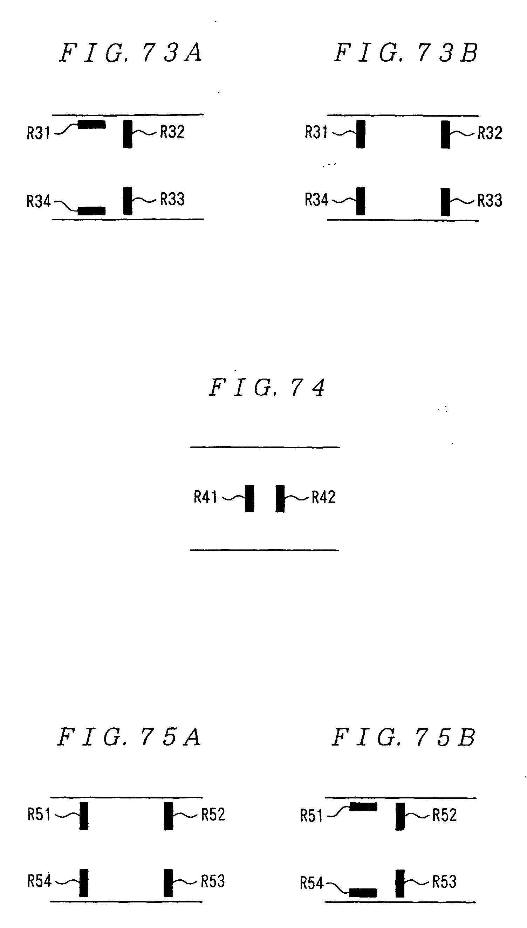

Figure 70 is a block diagram showing the configuration of an azimuth sensor according to the present invention, Figures 71A and 71B are diagrams showing a layout of the piezoresistors R11, R12, R13 and R14, and Figures 72A and 72B are diagrams showing the layout of the piezoresistors R21, R22, R23 and R24. Figures 73A and 73B are diagrams showing the layout of the piezoresistors R31, R32, R33 and R34, Figure 74 is a diagram showing the layout of the piezoresistors R41 and R42, and Figures 75A and 75B are diagrams showing the layout of the piezoresistors R51, R52, R53 and R54.

Figure 76A is a perspective view showing the overview configuration of a conventional tilt sensor, Figure 76B is a sectional view showing the overview configuration of the conventional tilt sensor, and Figure 76C is a sectional view showing an enlarged portion of the piezoresistor of the conventional tilt sensor. Figure 77A is a diagram showing increases and decreases in each piezoresistor on acceleration in X and Y directions of the conventional tilt sensor, and Figure 77B is a diagram showing the increases and decreases in each piezoresistor on acceleration in a Z direction of the conventional tilt sensor.

Best Mode for Carrying Out the Invention

(First Embodiment)

Hereinafter, a first embodiment of the present invention will be described by referring to drawings. Figures 1A - 1C, 2A - 2E, 3A - 3D, 4A and 4B, 5A and 5B, and 6A - 6C are the diagrams showing the first embodiment of a tilt sensor and a manufacturing method thereof according to the present invention.

Figures 1A - 1C are sectional views showing an operation of the tilt sensor according to an embodiment of the present invention. The embodiment in Figures 1A - 1C show a configuration of the tilt sensor of a doubly supported structure, where four piezoresistors R1 to R4 are provided on a silicon substrate 1.

In Figures 1A - 1C, the silicon substrate 1 has the piezoresistors R1 to R4 formed on its surface, and its backside is uniformly ground to a thickness capable of deflection. And the silicon substrate 1 has a weight member 3 provided at its center by the intermediary of a convex portion 3a.

The silicon substrate 1 also has a support member 2 having a concave portion 2a provided on its backside, and both ends of the silicon substrate 1 are supported by the support member 2.

Thus, a deflectable area is formed on the surface having the piezoresistors R1 to R4 formed thereon.

And when the tilt sensor receives a component force of a gravity in the Z direction in Figure 1A, a force FZ in a Z direction acts on the weight member 3 and then the weight member 3 tries to move in the Z direction.

Here, the silicon substrate 1 has its backside uniformly ground to the thickness capable of deflection and also has the concave portion 2a provided on its backside. Therefore, the silicon substrate 1 is deflected, and a compression stress acts on piezoresistors R1 and R4 while a tensile stress acts on piezoresistors R2 and R3. And values of the piezoresistors R1 to R4 increase or decrease according to these stresses.

And when the tilt sensor receives the component force of gravity in the X direction in Figure 1B, a force FX in the X direction acts on the weight member 3 and then the weight member 3 tries to move in the X direction. For this reason, the silicon substrate 1 is deflected, and the compression stress acts on piezoresistcrs R1 and R3 while the tensile stress acts on piezoresistors R2 and R4. And the values of the piezoresistors R1 to R4 increase or decrease according to these stresses.

When the tilt sensor inclines in Figure 1C, the weight member 3 is vertically pulled by a gravity W and then a force component WX acts on the silicon substrate 1 in a parallel direction and a force component WZ acts on the silicon substrate 1 in a vertical direction. For this reason, the silicon substrate 1 is deflected, and the tensile stress acts on piezoresistors R2 and R4 while the compression stress acts on piezoresistors R1 and R3. And the values of the piezoresistors R1 to R4 increase or decrease according to these stresses.

Therefore, it is possible to acquire the tilt angle of the tilt sensor by forming a Wheatstone bridge circuit comprised of the piezoresistors R1 to R4.

Thus, it is possible, by grinding the backside uniformly to the thickness capable of deflection and supporting the silicon substrate 1 on both ends with the support member 2 having the concave portion 2a, to simplify the configuration and manufacturing process of the tilt sensor, reduce costs of the tilt sensor and improve resistance to an impact.

It is desirable that the silicon substrate 1 is in a hexahedral rectangular shape, a ratio between a length and a width of the silicon substrate 1 is between 4 to 40 times, and the thickness is between 20 µm to 200 µm.

Thus, even in the case where the silicon substrate 1 is used as-is as a deflectable portion, it is possible to obtain necessary detection sensitivity and secure strength necessary to bond the support member 2 and the weight member 3 to the silicon substrate 1.

Figures 2A - 2E, 3A - 3D, and 6A - 6C are sectional views showing the manufacturing process of the tilt sensor according to the first embodiment of the present invention. The first embodiment shows the manufacturing process of the tilt sensor of a doubly supported structure.

In Figure 2A, a silicon wafer 11 which is about 550 µm thick and of 6-inch diameter is prepared for instance.

Next, as shown in Figure 2B, a photolithographic technology is used to selectively ion-implant impurities so as to form piezoresistors 12 (the area having the piezoresistors formed thereon) on the silicon wafer 11. In fact, the piezoresistors 12 may be mainly comprised of two or more piezoresistive elements.

And an electrically conductive layer is formed on the entire surface of the silicon wafer 11 by sputtering or deposition, and the electrically conductive layer is patterned by using the photolithographic technology and an etching technology so as to form a circuit pattern 13 such as wiring and a bonding pad.

Next, as shown in Figure 2C, an overcoat 14 such as a silicon nitride film or a silicon oxide film is formed by CVD (Chemical Vapor Deposition) or the sputtering and so on.

Next, as shown in Figure 2D, a protective film 15 is pasted on the silicon wafer 11 having the overcoat 14 formed thereon. A pressure-sensitive adhesive sheet may be used as the protective film 15, for instance.

Next, as shown in Figure 2E, the entire backside of the silicon wafer 11 is ground. Here, polishing or etching may be used as a method of grinding. For instance, it is possible to polish the silicon wafer 11 which is initially 550 µm thick to a remaining thickness of 150 µm and further grind it by etching until the silicon wafer 11 has the remaining thickness of 50 µm.

It is also possible to grind the backside of the silicon wafer 11 by CMP (Chemical Mechanical Polishing).

Next, as shown in Figure 3A, a glass wafer 21 having a groove 21a formed thereon is bonded to the backside of the silicon wafer 11. When bonding the glass wafer 21 to the silicon wafer 11, it should be arranged so that the groove 21a faces the silicon wafer 11 side and a position of the groove 21a corresponds to an area having the piezoresistors 12 formed thereon.

In this case, it is possible to selectively obtain a strong bonding force by using glass of high ionic mobility such as sodium glass as the glass wafer 21 to be anodic bonded to the silicon wafer 11 by applying a high voltage of about 1 KVbetween them.

Therefore, the groove 21a may remain in a state of a cavity. It is also possible, however, to fill it up with an implant member 22 such as ordinary glass or resin not to be anodoic bonded so as to planarize the surface of the glass wafer 21.

In the case where it is filled up with a material such as the resin selectively removable by using a solvent and so on, it is also possible to render the groove 21a as the cavity after cutting the silicon wafer 11 into chips.

Figure 4A is a plan view showing the configuration of a glass wafer according to the first embodiment of the present invention, and Figure 4B is a sectional view showing the configuration of the glass wafer according to the first embodiment of the present invention.

In Figures 4A and 4B, the glass wafer 21 has the groove 21a corresponding to arrangement of the chips cut from the silicon wafer 11 formed thereon, where the width of the groove 21a is set corresponding to the size of an area having the piezoresistors 12 formed thereon equivalent to one chip. For instance, when the length of the tilt sensor equivalent to one chip is 3 mm, the width of the groove 21a is set at 2 mm.

Reference numerals D1 to D6 denote dicing lines, and the glass wafer 21 bonded to the silicon wafer 11 is cut into chips along the dicing lines D1 to D6. For this reason, it is possible, for instance, to cut the tilt sensor equivalent to one chip from the area surrounded by the dicing lines D1 to D3.

Here, it is possible, by setting vertical dicing lines D1 and D2 at the center in the groove 21a, to leave the support member on both sides of the groove 21a for each chip so as to constitute a doubly supported structure tilt sensor.

Next, as shown in Figure 3B, if the glass wafer 21 is bonded to the silicon wafer 11, the protective film 15 pasted on the silicon wafer 11 is peeled off.

Next, as shown in Figure 3C, a weight wafer 31 having a convex portion 31a provided thereon is bonded to the silicon wafer 11. Here, the convex portion 31a is provided correspondingly to each chip cut from the silicon wafer 11. And in the case of bonding the weight wafer 31 to the silicon wafer 11, the weight wafer 31 is arranged so that the convex portion 31a faces the silicon wafer 11 side and is positioned at the center in the longitudinal direction of each chip.

Figure 5A is a sectional view showing the configuration of the weight wafer according to the first embodiment of the present invention, and Figure 5B is a plan view showing the configuration of the weight wafer according to the first embodiment of the present invention.

In Figures 5A and 5B, the weight wafers 31 have the convex portions 31a corresponding to the arrangement of the chips cut from the silicon wafer 11 formed thereon, where openings 31b are formed among the convex portions 31a.

Reference numerals D1 to D8 denote the dicing lines, and the weight wafer 31 bonded to the silicon wafer 11 is cut into chips along the dicing lines D1 to D8 together with the glass wafer 21 bonded to the silicon wafer 11.

Here, it is possible, by providing the openings 31b on the weight wafers 31 and setting the vertical dicing lines D1 and D2 at the center of the openings 31b, to provide the areas not covered by the weight wafers 31 on both sides of each chip so as to easily perform wire bonding to each chip.

Next, as shown in Figure 3D, a silicon substrate 11' is integrally cut into chips together with a support member 21' and a weight member 31' by dicing the silicon wafer 11 having the glass wafer 21 and weight wafers 31 bonded thereon. Here, the length of one chip may be 3 mm for instance.

Next, as shown in Figure 6A, the implant member 22 filling the support member 21' is removed to support both ends of the silicon substrate 11' with the support member 21' so as to form a clearance between the silicon substrate 11' and support member 21' and render the silicon substrate 11' deflectable in between the support member 21'.

Next, as shown in Figure 6B, the silicon substrate 11' cut together with the support member 21' and weight member 31' is die-bonded on a lead frame 41.

Next, as shown in Figure 6C, the silicon substrate 11' is wire-bonded to be connected to the lead frame 41 with wires 42a and 42b.

Here, the opening 31b is provided on the weight wafer 31, and the length of the weight member 31' cut from the weight wafer 31 is shorter than the length of the silicon substrate 11'. For this reason, it is possible to expose both ends of the silicon substrate 11' from the weight member 31' so as to prevent the weight member 31' from interfering with wire bonding on the silicon substrate 11'.

Thus, according to the first embodiment, it is possible to manufacture the doubly supported structure tilt sensor without providing concavity and convexity on the silicon substrate 11' itself and also simultaneously form the support member 21' and weight member 31' on a plurality of chips. Therefore, it is no longer necessary to arrange the support member 21' and weight member 31' on each individual chip.

For this reason, it is possible to simplify the configuration and manufacturing process of the tilt sensor, reduce the costs of the tilt sensor and improve resistance to an impact.

(Second Embodiment)

Next, a second embodiment of the present invention will be described by referring to the drawings. Figures 7A - 7E are the drawings showing the second embodiment of the tilt sensor and the manufacturing method thereof according to the present invention.

Figures 7A - 7E are sectional views showing the manufacturing process of the tilt sensor according to the second embodiment of the present invention. According to the second embodiment, a weight member 33 of the doubly supported structure tilt sensor is arranged by the intermediary of a base 32.

In Figure 7A, the base 32 is bonded to the silicon substrate 11 when the processes in Figure 2A to Figure 3B are finished. Here, the base 32 is provided to each individual chip cut from the silicon substrate 11, and is arranged to be positioned at the center in the longitudinal direction of each chip.

As for height of the base 32, it is set so that the surface of the base 32 should be positioned higher than arches of the wires 42a and 42b.

Next, as shown in Figure 7B, the glass wafer 21 is bonded, and the silicon wafer 11 having the base 32 bonded thereto is diced so that the silicon substrate 11' having the base 32 bonded thereto is integrally cut into chips together with the support member 21'.

Next, as shown in Figure 7C, the silicon substrate 11' having the support member 21' and base 32 provided therein is die-bonded on the lead frame 41.

Next, as shown in Figure 7D, the silicon substrate 11' is wire-bonded so as to connect the silicon substrate 11' to the lead frame 41 with wires 42a and 42b.

Next, as shown in Figure 7E, the weight member 33 is bonded to the base 32.

Thus, according to the second embodiment, it is possible to bond the weight member 33 to the base 32 after wire-bonding the silicon substrate 11' and prevent the weight member 33 from interfering with the wire bonding. Therefore, it is possible to improve the detection sensitivity of the tilt sensor by enlarging the weight member 33.

It is also possible to arrange the weight member 33 on each individual chip, allow the weight member 33 to stick out of each chip and improve a degree of freedom in terms of arrangement of the weight member 33.

(Third Embodiment)

Next, a third embodiment of the present invention will be described by referring to the drawings. Figures 8A - 8E, 9A - 9D, 10A and 10B, 11A - 11C, and 12 are the drawings showing the third embodiment of the tilt sensor and the manufacturing method thereof according to the present invention.

Figures 8A - 8E, 9A - 9D, 10A and 10B, 11A - 11C, and 12 are sectional views showing the manufacturing process of the tilt sensor according to the third embodiment of the present invention. The third embodiment shows the manufacturing process of a cantilever type tilt sensor.

In Figure 8A, a silicon wafer 51 which is about 550 μm thick and of 6-inch diameter is prepared for instance. Next, as shown in Figure 8B, the photolithographic technology is used to selectively ion-implant impurities so as to formpiezoresistors 52 on the silicon wafer 51. In fact, the piezoresistors 52 may be mainly comprised of two or more piezoresistive elements.

And the electrically conductive layer is formed on the entire surface of the silicon wafer 51 by the sputtering or deposition, and the electrically conductive layer is patterned by using the photolithographic technology and etching technology so as to form a circuit pattern 53 such as the wiring and bonding pad.

Next, as shown in Figure 8C, an overcoat 54 such as the silicon nitride film or silicon oxide film is formed by the CVD (Chemical Vapor Deposition) or the sputtering and so on.

Next, as shown in Figure 8D, a protective film 55 is pasted on the silicon wafer 51 having the overcoat 54 formed thereon. The pressure-sensitive adhesive sheet may be used as the protective film 55, for instance.

Next, as shown in Figure 8E, the entire backside of the silicon wafer 51 is ground. Here, polishing or etching may be used as the method of grinding. For instance, it is possible to polish the silicon wafer 51 which is initially 550 μm thick to a remaining thickness of 150 μm and further grind it by etching until the silicon wafer 51 has the remaining thickness of 50 μm.

It is also possible to grind the backside of the silicon wafer 51 by the CMP (Chemical Mechanical Polishing).

Next, as shown in Figure 9A, a glass wafer 61 having a groove 61a formed thereon is bonded to the backside of the silicon wafer 51. When bonding the glass wafer 61 to the silicon wafer 51, it should be arranged on the backside of the silicon wafer 51 so that the groove 61a faces the silicon wafer 51 side and overlaps with an area having the piezoresistors 52 formed thereon and a scribe line.

In this case, it is possible to selectively obtain a strong bonding force by using the glass of high ionic mobility such as the sodium glass as the glass wafer 61 to be anodic bonded to the silicon wafer 51 by applying a high voltage of about 1 KV between them.

Therefore, the groove 61a may remain in the state of a cavity. It is also possible, however, to fill it up with an implant member 62 such as the ordinary glass or resin not to be anodic bonded so as to planarize the surface of the glass wafer 61.

In the case where it is filled up with the material such as the resin selectively removable by using the solvent and so on, it is also possible to render the groove 61a as the cavity after cutting the silicon wafer 51 into chips.

Figure 10A is a plan view showing the configuration of the glass wafer according to the third embodiment of the present invention, and Figure 10B is a sectional view showing the configuration of the glass wafer according to the third embodiment of the present invention.

In Figures 10A and 10B, the glass wafer 61 has the groove 61a corresponding to the arrangement of the chips cut from the silicon wafer 51 formed thereon, where the width of the groove 61a is set to overlap with an area having the piezoresistors 52 formed thereon equivalent to one chip and the scribe line. For instance, if the length of the tilt sensor equivalent to one chip is 3 mm, the width of the groove 21a is set at 2.5 mm.

Reference numerals D11 to D17 denote the dicing lines, and the glass wafer 61 bonded.to the silicon wafer 51 is cut into chips along the dicing lines D11 to D17. For this reason, it is possible, for instance, to cut the tilt sensor equivalent to one chip from the area surrounded by the dicing lines D11 to D12 to D15.

Here, it is possible, by arranging the groove 61a of the glass wafer 61 to overlap with a vertical scribe line of the silicon wafer 51 and setting vertical dicing lines D11 and D13 at the end of the groove 61a, to leave the support member on one side of the groove 61a for each chip so as to constitute the cantilever type tilt sensor.

Next, as shown in Figure 9B, when the glass wafer 61 is bonded to the silicon wafer 51, the protective film 55 pasted on the silicon wafer 51 is peeled off.

Next, as shown in Figure 9C, a base 71 is bonded to each individual chip cut from the silicon wafer 51. Here,. an arrangement position of the base 71 is set to be on a longitudinally opposite side to the position at which each chip is supported by the glass wafer 61.

Next, as shown in Figure 9D, the glass wafer 61 is bonded, and the silicon wafer 51 having the base 71 bonded thereto is diced so as to integrally cut the silicon substrate 51' having the base 71 bonded thereto together with a support member 61' into chips. Here, the length of one chip may be 3 mm for instance.

Next, as shown in Figure 11A, a weight member 72 is bonded to the base 71.

Next, as shown in Figure 11B, the implant member 62 filling the support member 61' is removed to support one end of the silicon substrate 51' with the support member 61' so as to form the clearance between the silicon substrate 51' and support member 61' and render the silicon substrate 51' deflectable with the support member 61' as a supporting point.

Next, as shown in Figure 11C, the support member 61' and the silicon substrate 51' having a weight member 72 provided therein are die-bonded on a lead frame 81.

Next, as shown in Figure 12, the silicon substrate 51' is wire-bonded and is thereby connected to the lead frame 81 with a wire 82.

According to the third embodiment, the method of wire-bonding the silicon substrate 51' after bonding the weight member 72 to the base 71 was described. It is also possible, however, to bond the weight member 72 on the base 71 after wire-bonding the silicon substrate 51'. It is thereby possible, on the wire bonding, to prevent the weight member 72 from interfering with the wire bonding.

Thus, according to the third embodiment, it is possible to manufacture the cantilever type tilt sensor without complicating the manufacturing process, increase a distance between the position for supporting the silicon substrate 51' with the support member 61' and the position for supporting the weight member 72 with the silicon substrate 51' and efficiently deflect the silicon substrate 51'.

For this reason, it is possible to improve the detection sensitivity of the tilt sensor without increasing the length in the longitudinal direction thereof so as to miniaturize the tilt sensor.

(Fourth Embodiment)

Next, a fourth embodiment of the present invention will be described by referring to the drawings. Figures 13A and 13B are the drawings showing the fourth embodiment of the tilt sensor and the manufacturing method thereof according to the present invention.

Figures 13A and 13B are sectional views showing the configuration of the tilt sensor according to the fourth embodiment of the present invention.

In Figures 13A and 13B, a silicon substrate 91 has piezoresistors 92 and a circuit pattern 93 formed on its surface, and its backside is uniformly ground to the thickness capable of deflection.

The silicon substrate 91 has a support member 95 having a concave portion 95a provided on its backside so that one end of the silicon substrate 91 is supported by the support member 95. And a weight member 97 is provided on the surface of the silicon substrate 91 by the intermediary of a base 96 which is arranged on the other end of the silicon substrate 91.

The backside of the support member 95 is bonded to a lead frame 98 which is connected to the bonding pad of the circuit pattern 93 with a wire 99.

Here, the height of the base 96 is set so that the surface thereof should be positioned higher than a peak of the arch of the wire 99, and the base 96 holds the weight member 97 at the end of the weight member 97.

Thus, even in the case where the size of a weight member 97 plane is equivalent to the size of a silicon substrate 91 plane, it is possible to prevent the weight member 97 from sticking out of the silicon substrate 91, also prevent it from contacting the wire 99 so as to miniaturize the tilt sensor while improving the detection sensitivity of thereof.

The support member 95 is comprised of the glass of high ionicmobility such as the sodium glass, and the concave portion 95a of the support member 95 is filled up with an implant member 100 such as the ordinary glass or resin not to be anodic bonded so as to planarize the surface of the support member 95.

And in the case of bonding the support member 95 to the silicon substrate 91, it is anodic bonded to the silicon substrate 91 by applying a high voltage of about 1 KV between them.

Thus, it is possible to strongly bond the support member 95 to the silicon substrate 91, and it is also possible to separate the support member 95 from the silicon substrate 91 at the position of the implant member 100.

Consequently, it is possible, by taking a layout for positioning the silicon substrate 91 under the support member 95, for the silicon substrate 91 to receive the stress in the direction for leaving the implant member 100, on leveling the silicon substrate 91, by means of static weight of the weight member 97 due to the gravity.

For this reason, it is possible to planarize the surface of the support member 95 while preventing the implant member 100 from blocking deflection of the silicon substrate 91 and cause the tilt sensor to function sufficiently in a range of about ±90 degrees from level.

It is also possible, by filling the concave portion 95a of the support member 95 with the implant member 100, to support the silicon substrate 91 with the implant member 100 even if the silicon substrate 91 is weighted on providing the weight member 97 thereon. Therefore, it is possible to prevent the silicon substrate 91 from splitting, and reduce the manufacturing costs of the tilt sensor.

Furthermore, it is possible, by leaving the implant member 100 in the concave portion 95a of the support member 95, to render the process of removing the implant member 100 unnecessary so as to simplify the manufacturing process. Thus, it is feasible to further reduce the manufacturing costs of the tilt sensor. And besides, it is possible to prevent destruction of the silicon substrate 91 by supporting the silicon substrate 91 with the implant member 100 even if an impact is made on the tilt sensor by dropping it or on like occasions.

(Fifth Embodiment)

Next, a fifth embodiment of the present invention will be described by referring to the drawings. Figures 14A - 14E, 15A-15D, 16A and 16B, 17A and 17B, and 18A - 18D are the drawings showing the fifth embodiment of the tilt sensor and the manufacturing method thereof according to the present invention.

Figures 14A - 14E, 15A -15Dand 18A - 18D are sectional views showing the manufacturing process of the tilt sensor according to the fifth embodiment of the present invention. The fifth embodiment shows the manufacturing process of the cantilever type tilt sensor.

In Figure 14A, a silicon wafer 111 which is about 550 μm thick and of 6-inch diameter is prepared for instance.

Next, as shown in Figure 14B, the photolithographic technology is used to selectively ion-implant the impurities so as to form piezoresistors 112 on the silicon wafer 111.

And the electrically conductive layer is formed on the entire surface of the silicon wafer 111 by the sputtering or deposition, and the electrically conductive layer is patterned by using the photolithographic technology and etching technology so as to form a circuit pattern 113 such as the wiring and bonding pad.

Next, as shown in Figure 14C, an overcoat 114 such as the silicon nitride film or silicon oxide film is formed by the CVD (Chemical Vapor Deposition) or the sputtering and so on.

Next, as shown in Figure 14D, a protective film 115 is pasted on the silicon wafer 111 having the overcoat 114 formed thereon. The pressure-sensitive adhesive sheet may be used as the protective film 115, for instance.

Next, as shown in Figure 14E, the entire backside of the silicon wafer 111 is ground. Here, the polishing or etching may be used as the method of grinding. For instance, it is possible to polish the silicon wafer 111 which is initially 550 μm thick to the remaining thickness of 150 μm and further grind itby etching until the silicon wafer 111 has the remaining thickness of 50 μm.

It is also possible to grind the backside of the silicon wafer 111 by the CMP (Chemical Mechanical Polishing).

Next, as shown in Figure 15A, a glass wafer 121 having grooves 121a and 121b formed thereon is bonded to the backside of the silicon wafer 111. When bonding the glass wafer 121 on the silicon wafer 111, it should be arranged so that the grooves 121a and 121b face the silicon wafer 111 side, each of the grooves 121a and 121b includes an area having the piezoresistors 112 formed thereon of each chip and a line of either the grooves 121a or 121b overlaps with the scribe line of the silicon wafer 111 and the other line of the grooves 121a and 121b does not overlap with it.

In this case, it is possible to selectively obtain the strong bonding force by using the glass of high ionic mobility such as the sodium glass as the glass wafer 121 to be anodic bonded to the silicon wafer 111 by applying a high voltage of about 1 KV between them.

Therefore, the grooves 121a and 121b may remain in the state of a cavity. It is also possible, however, to fill them up with implant members 122a and 122b such as the ordinary glass or resin not to be anodic bonded so as to planarize the surface of the glass wafer 121.

In the case where it is filled up with a material such as the resin selectively removable by using the solvent and so on, it is also possible to render the grooves 121a and 121b as the cavity after cutting the silicon wafer 111 into chips.

Figure 16A is a plan view showing the configuration of the glass wafer according to the fifth embodiment of the present invention, and Figure 16B is a sectional view showing the configuration of the glass wafer according to the fifth embodiment of the present invention.

In Figures 16A and 16B, the glass wafer 121 has the grooves 121a and 121b corresponding to the arrangement of the chips cut from the silicon wafer 111 formed thereon, where the width of the grooves 121a and 121b is set so that each of the grooves 121a and 121b includes an area having the piezoresistors 112 formed thereon equivalent to one chip, a line of either the grooves 121a or 121b overlaps with the scribe line of the silicon wafer 111 and the other line of the grooves 121a and 121b does not overlap with it.

Reference numerals D21 to D28 and D31 to D34 denote the dicing lines, and the glass wafer 121 bonded to the silicon wafer 111 is cut into chips along the dicing lines D21 to D28 and D31 to D34. For this reason, it is possible, for instance, to cut the tilt sensor equivalent to one chip from the area surrounded by the dicing lines D21, D25, D31 and D32.

Here, it is possible, by setting vertical dicing lines D21 and D22 at the center in the convex portion of the glass wafer 121 and setting vertical dicing lines D23 to D28 tooverlap with the ends of the grooves 121a and 121b, to leave the support member on one sides of the grooves 121a and 121b for each chip so as to constitute the cantilever tilt sensor.

Next, as shown in Figure 15B, when the glass wafer 121 is bonded to the silicon wafer 111, the protective film 115 pasted on the silicon wafer 111 is peeled off.

Next, as shown in Figure 15C, a weight wafer 131 having a convex portion 131a provided thereon is bonded to the silicon wafer 111. Here, the convex portion 131a is provided correspondingly to the chips equivalent to two rows cut from the silicon wafer 111. And in the case of bonding the weight wafer 131 to the silicon wafer 111, the weight wafer 131 is arranged so that the convex portion 131a faces the silicon wafer 111 side and overlaps with the ends of the chips on both sides of the scribe line astride the scribe line.

Figure 17A is a sectional view showing the configuration of the weight wafer according to the fifth embodiment of the present invention, and Figure 17B is a plan view showing the configuration of the weight wafer according to the fifth embodiment of the present invention.

In Figures 17A and 17B, the weight wafers 131 have the convex portions 131a corresponding to the arrangement of the two rows of chips cut from the silicon wafer 111 formed thereon.

Reference numerals D21 to D28 and D31 to D 34 denote the dicing lines, and the weight wafer 131 bonded to the silicon wafer 111 is cut into chips along the dicing lines D21 to D28 and D31 to D 34 together with the glass wafer 121 bonded to the silicon wafer 111.

Reference numerals H1 to H4 denote half dicing lines, and the weight wafer 131 in a state of being bonded to the silicon wafer 111 is half-diced along the half dicing lines H1 to H4 so that a central part of the concave portion between the convex portions 131a is cut off.

Here, it is possible, by half-dicing the weight wafers 131, to provide the areas not covered by the weight wafer 131 on one side of each chip, where the weight wafer 131 is in the state of being bonded to the silicon wafer 111, so as to easily perform the wire bonding to each chip.

As the weight wafer 131 is arranged to have the convex portions 131a astride the scribe line of the silicon wafer 111, it is possible to provide a weight member 131" on the end of each chip just by cutting the weight wafer 131 and silicon wafer 111 at the position of the convex portion 131a.

Next, as shown in Figure 15D, the weight wafer 131 in the state of being bonded to the silicon wafer 111 is half-diced along the half dicing lines H1 to H4 so that the central part of the concave portion between the convex portions 131a of the weight wafer 131 is cut off.

Thus, a weight bar 131' is formed at every two rows of chips.

Next, as shown in Figure 18A, the silicon wafer 111 having the glass wafer 121 and weight bar 131' bonded thereto is diced along the dicing lines D21 to D28 and D31 to D 34 so as to integrally cut a silicon substrate 111' together with a support member 121' and the weight member 131" into chips. Here, the length of one chip may be 3 mm for instance.

Next, as shown in Figure 18B, the implant members 122a and 122b filling the support member 121' are removed to support one end of the silicon substrate 111' with the support member 121' so as to form the clearance between the silicon substrate 111' and support member 121' and render the silicon substrate 111' deflectable with the support member 121' as the supporting point.

Next, as shown in Figure 18C, the silicon substrate 111' cut together with the support member 121' and the weight member 131" is die-bonded on a lead frame 141.

Next, as shown in Figure 18D, the silicon substrate 111' is wire-bonded and is thereby connected to the lead frame 141 with a wire 142.

Here, it is possible to expose one end of the silicon substrate 111' from the weight member 131" by half-dicing the weight wafer 131 and prevent the weight member 131' from interfering with the wire bonding on the silicon substrate 111'.

Thus, according to the fifth embodiment, it is possible to manufacture the cantilever type tilt sensor without providing the concavity and convexity on the silicon substrate 111' itself and also simultaneously form the support member 121' and weight member 131" on the plurality of chips. Therefore, it is no longer necessary to arrange the support member 121' and weight member 131" on each individual chip.

For this reason, it is possible to simplify the configuration and manufacturing process of the tilt sensor and reduce the costs of the tilt sensor while improving the detection sensitivity of the tilt sensor.

According to the fifth embodiment, the method whereby the grooves 121a and 121b are separated for each chip arrangement was described. However, it is also possible to render the two grooves 121a and 121b mutually connectable so that one groove serves the two rows of chip arrangement. It is thereby possible to prevent useless waste materials (a portion between the dicing lines D23 and D24 for instance) from being provided on dicing and increase the number of the tilt sensors taken from one wafer.

(Sixth Embodiment)

Next, a sixth embodiment of the present invention will be described by referring to the drawings. Figures 19A and 19B, 20, 21, 22A - 22C, and 23 are the drawings showing the sixth embodiment of the tilt sensor according to the present invention.

Figure 19A is a perspective view showing the overall configuration of the tilt sensor according to the sixth embodiment of the present invention, and Figure 19B is a plan view showing the configuration of the silicon substrate surf ace of the tilt sensor according to the sixth embodiment of the present invention. The sixth embodiment uses one silicon substrate of uniform thickness to constitute a dual axis tilt sensor.

In Figures 19A and 19B, a silicon substrate 151 has the piezoresistors R11 to R16, terminals P1 to P9 and a wiring L1 for connecting the piezoresistors R11 to R16 to the terminals P1 to P9 formed on its surface 151a. Furthermore, the silicon substrate 151 is uniformly ground on its backside 151b to a thickness capable of deflection.

The silicon substrate 151 also has a supportmemberbonding area J1 provided at one end in the longitudinal direction thereof and has a base bonding area J2 provided at the other end in the longitudinal direction thereof. The support member bonding area J1 has a support member 152 bonded thereto by the intermediary of a convex portion 152a, and the base bonding area J2 has a weight member 154 bonded thereto by the intermediary of a base 153.

The support member 152 is arranged on the backside of the silicon substrate 151, and the weight member 154 is arranged on the surface of the silicon substrate 151.

Here, the piezoresistors R11, R13 and R15 are arranged adjacent to the base bonding area J2, and the piezoresistors R12, R14 and R16 are arranged adjacent to the support member bonding area J1.

The piezoresistors R11 and R12 are arranged along a center line set in the longitudinal direction, and two each of the piezoresistors R13 to R16 are arranged at regular intervals along parallel lines on both sides of the center line.

When facing the surface 151a of the silicon substrate 151 downward, the weight member 154 is pulled downward by the gravity W. If the support member 152 is kept level, however, the gravity W matches with a Z-axis direction component force Fz = W acting on the weight member 154.

For this reason, the Z-axis direction component force Fz = W acts on the end of the silicon substrate 151 by the intermediary of the base 153 so that the silicon substrate 151 is deflected in the Z-axis direction.

Figure 20 is a perspective view showing the operation in the case where the tilt sensor in Figures 19A and 19B inclines on Y axis.

In Figure 20, when the support member 152 inclines on Y-axis, the Z-axis direction component force Fz acting on the weightmember 154 decreases while an X-axis direction component force Fx is generated. Consequently, spacing between the support member 152 and the silicon substrate 151 becomes wider so that an amount of deflection of the silicon substrate 151 in Z-axis direction increases.

Consequently, the tensile stress of the piezoresistors R11 and the compression stress of the piezoresistors R12 increase respectively so that the values of the piezoresistors R11 and R12 increase or decrease according to change in these stresses.

Figure 21 is a circuit diagram showing a schematic configuration of the piezoresistors R11 and R12 in Figure 19B.

In Figure 21, the piezoresistors R11 and R12 are connected in series, and the terminal P4 is connected to the terminals P6 and P5 via the piezoresistors R11 and R12 respectively.

And it is possible to acquire the tilt angle on Y axis by applying a voltage E between the terminals P5 and P6 and detecting a voltage V1 between the terminals P4 and P6.

Figure 22A is a perspective view showing the operation of the tilt sensor when inclined on X axis, Figure 22B is a sectional view cut by an E2 to E2 line in Figure 19B, and Figure 22C is a sectional view cut by an E3 to E3 line in Figure 19B.

In Figures 22A - 22C, when the support member 152 inclines on X axis, a Y-axis direction component force Fy is generated to the weight member 154 so that the silicon substrate 151 is twisted on X-axis direction.

Consequently, the tensile stress acting on the piezoresistor R13 and the compression stress acting on the piezoresistor R14 decrease, and the tensile stress acting on the piezoresistor R15 and the compression stress acting on the piezoresistor R16 increase.

For this reason, the value of the piezoresistors R13 to R16 increase or decrease according to the change in these stresses.

Figure 23 is a circuit diagram showing the schematic configuration of the piezoresistors R13 to R16 in Figure 19B.

In Figure 23, the piezoresistors R13 to R16 constitute a bridge circuit. More specifically, the piezoresistor R14 is connected between the terminals P1 and P2, the piezoresistor R13 is connected between the terminals P2 and P3, the piezoresistor R15 is connected between the terminals P7 and P8, the piezoresistor R16 is connected between the terminals P8 and P9, it is shunted between the terminals P1 and P9, and it is shunted between the terminals P3 and P7.

And it is possible to acquire the tilt angle on X axis by applying a voltage E between the terminals P2 and P8 and detecting a voltage V2 between the terminals P1 and P3.

(Seventh Embodiment)

Next, a seventh embodiment of the present invention will be described by referring to the drawings. Figures 24A and 24B, 25, and 26 are the drawings showing the seventh embodiment of the tilt sensor according to the present invention.

Figure 24A is a sectional view cut by an F to F line in Figure 24B, and Figure 24B is a plan view showing the configuration of the silicon substrate surface of the tilt sensor according to the seventh embodiment of the present invention. The seventh embodiment uses one silicon substrate of uniform thickness to constitute a doubly supported structure dual axis tilt sensor.

In Figures 24A and 24B, a silicon substrate 161 has the piezoresistors R21 to R28, terminals P11 to P22 and wirings L2 and L3 for connecting the piezoresistors R21 to R28 to the terminals P11 to P22 formed on its surface. Furthermore, the silicon substrate 161 is uniformly ground on its backside to the thickness capable of deflection.

The silicon substrate 161 also has support member bonding areas J11 and J12 provided at both ends in the longitudinal direction thereof and has a base bonding area J13 provided at the center in the longitudinal direction thereof. The support member bonding areas J11 and J12 have a support member 162 bonded thereto by the intermediary of a convex portion 162a, and the base bonding area J13 has a weight member 164 bonded thereto by the intermediary of a base 163.

The support member 162 is arranged on the backside of the silicon substrate 161, and theweightmember 164 is arranged on the surface of the silicon substrate 161.

Here, thepiezoresistors R21, R23, R25andR27 are arranged adjacent to the base bonding area J13, and the piezoresistors R22, R24, R26 and R28 are arranged adjacent to the support member bonding areas J11 and J12.

The piezoresistors R21, R22, R27 and R28 are arranged along the center line set in the longitudinal direction, and two each of the piezoresistors R23 to R26 are arranged at the regular intervals along the parallel lines on both sides of the center line.

And when the support member 162 is inclined on Y axis in a state of hanging the weight member 164, the deflection of the silicon substrate 161 changes. The incline on Y axis can be acquired by measuring variations in the values of the piezoresistors R21, R22, R27 and R28 at this time.

When the support member 162 is inclined on X axis in the state of hanging the weight member 164, the silicon substrate 161 is twisted. The incline on X axis can be acquired by measuring the variations in the values of the piezoresistors R23 to R26 at this time.

Figure 25 is a circuit diagram showing the schematic configuration of the piezoresistors R21, R22, R27 and R28 in Figure 24B.

In Figure 25, the piezoresistors R21, R22, R27 and R28 constitute the bridge circuit. More specifically, the piezoresistor R22 is connected between the terminals P14 and P15, the piezoresistor R21 is connected between the terminals P14 and P16, the piezoresistor R28 is connected between the terminals P20 and P21, the piezoresistor R27 is connected between the terminals P20 and P22, it is shunted between the terminals P15 and P21, and it is shunted between the terminals P16 and P22.

The incline on Y axis can be acquired by applying the voltage E between the terminals P14 and P20 and detecting a voltage V3 between the terminals P15 and P16.

In the case of acquiring the incline on Y axis, it is not always necessary to provide the four piezoresistors R21, R22, R27 and R28, but it is also possible to omit the piezoresistors R21 and R22 or R27 and R28 and constitute a voltage dividing circuit as in Figure 21.

Figure 26 is a circuit diagram showing the schematic configuration of the piezoresistors R23 to R26 in Figure 24B.

In Figure 26, the piezoresistors R23 to R26 constitute the bridge circuit. More specifically, the piezoresistor R24 is connected between the terminals P11 and P12, the piezoresistor R23 is connected between the terminals P12 and P13, the piezoresistor R26 is connected between the terminals P18 and P19, the piezoresistor R25 is connected between the terminals P17 and P18, it is shunted between the terminals P11 and P19, and it is shunted between the terminals P13 and P17.

And the tilt angle on X axis can be acquired by applying the voltage E between the terminals P12 and P18 and detecting a voltage V4 between the terminals P11 and P13.

(Eighth Embodiment)

Next, an eighth embodiment of the present invention will be described by referring to the drawings. Figures 27A and 27B, 28A - 28C, 29A and 29B, 30A and 30B, 31A - 31C, 32A and 32B, 33A and 33B, 34A and 34B, 35A and 35B, 36, 37A - 37D, 38A - 38C, and 39 are the drawings showing the eighth embodiment of the tilt sensor and manufacturing method thereof according to the present invention.

Figure 27A is a plan view showing the configuration of the tilt sensor according to the eighth embodiment of the present invention, and Figure 27B is a sectional view cut by an A1 to A1 line in Figure 27A.

In Figures 27A and 27B, a silicon substrate 2 has the piezoresistors R1, R2, A1 pads P1 to P3 and a wiring H1 for connecting the piezoresistors R1, R2 to the A1 pads P1 to P3 formed on its surface.

And the silicon substrate 2 has a solder bump 4 formed on its surface via the A1 pad 3, and its backside is uniformly ground to the thickness capable of deflection. And it further has a constriction 2a formed correspondingly to the area in which the piezoresistors R1 and R2 are arranged.

The silicon substrate 2 has a support member 1 having a concave portion 1a formed thereon provided on its backside to have one end of the silicon substrate 2 supported from the backside. And the support member 1 is arranged so that an area having the piezoresistors R1 and R2 formed thereon is positioned adjacent to an edge of the concave portion 1a and the solder bump 4 is positioned on the concave portion 1a.

Thus, it is possible to support the silicon substrate 2 having the piezoresistors R1 and R2 formed therein in the state capable of deflection without selectively etching the backside of the substrate 2. And it is possible to easily increase the specific gravity of the weight member while keeping the consistency with an existing flip chip mounting technology so as to reduce the weight member.

For this reason, it is possible to simplify the configuration and manufacturing process of the tilt sensor, miniaturize the tilt sensor, reduce the costs thereof and also improve its resistance to an impact.

Figures 28A and 28B are sectional views showing the operation of the tilt sensor according to the eighth embodiment of the present invention, and Figure 28C is a circuit diagram showing the schematic configuration of piezoresistors R1 and R2 in Figure 27A.

In Figure 28A, the tilt sensor is arranged so that the solder bump 4 faces downward in the case of operating the tilt sensor in Figures 27A and 27B.

When facing the solder bump 4 downward, the solder bump 4 is pulled downward by the gravity W. When the support member 1 is kept level, however, the gravity W matches with Z-axis direction component force $F_z$ acting on the solder bump 4.

For this reason, Z-axis direction component force $F_z = W$ acts on the end of the silicon substrate 2 via the solder bump 4.

Here, the silicon substrate 2 has its backside uniformly ground to the thickness capable of deflection. Therefore, when the Z-axis direction component force $F_z = W$ acts on the end of the silicon substrate 2, the silicon substrate 2 becomes stable in the state of being deflected in Z-axis direction.

Next, in Figure 28B, when the support member 1 inclines on Y-axis direction, the Z-axis direction component force $F_z$ acting on the solder bump 4 decreases while X-axis direction component force $F_x$ is generated. Consequently, spacing between the support member 1 and the silicon substrate 2 becomes wider so that the amount of deflection of the silicon substrate 2 in Z-axis direction increases.

Consequently, the stress acting on the piezoresistors R1 and R2 changes and then the values of the piezoresistors R1 and R2 increase or decrease according to the change in the stress.

As shown in Figure 28C, the piezoresistors R1 and R2 are connected in series, and the terminal P2 is connected to the terminals P1 and P3 via the piezoresistors R1 and R2 respectively.

And it is possible to acquire the tilt angle on Y axis by applying the voltage E between the terminals P1 and P3 and detecting the voltage V1 between the terminals P2 and P3.

Figures 29A, 30A, 31A, 32A, 33A, 34A and 35A are plan views showing the manufacturing process of the tilt sensor according to the eighth embodiment of the present invention, andFigures29B, 30B, 31B, 32B, 33B, 34B, 35Band36aresectional views showing the manufacturing process of the tilt sensor according to the eighth embodiment of the present invention.

In Figures 29A and 29B, the silicon substrate 2 which is about 550 µm thick and of 5-inch diameter is prepared for instance.

And the photolithographic technology is used to selectively ion-implant the impurities such as boron in the silicon substrate 2 so as to form the piezoresistors R1 and R2 in each chip area on the silicon substrate 2.

And an A1 film is formed on the entire surface of the silicon substrate 2 by the sputtering or deposition, and the A1 film is patterned by using the photolithographic technology and etching technology so as to form the A1 pad 3, P1 to P3 and wiring H1 in each chip area on the silicon substrate 2.

Here, a width W1 of each chip area on the silicon substrate 2 can be 1.4 mm for instance, and a length L1 thereof can be 2.8 mm for instance. It is thereby possible to obtain about 3, 000 tilt sensor chips from one silicon substrate 2 of 5-inch diameter.

Next, as shown in Figures 30A and 30B, the protective film such as an adhesive sheet is pasted on the silicon substrate 2, and the entire backside of the silicon substrate 2 is ground until the thickness of the silicon substrate 2 becomes T1. Here, the CMP (Chemical Mechanical Polishing) or etching may be used, for instance, as the method of grinding the silicon substrate 2. The thickness of the silicon substrate 2 may be 100 µm for instance. It is thereby possible to maintain strength to prevent the silicon substrate 2 from splitting while allowing the deflection of the silicon substrate 2.

Next, as shown in Figures 31A - 31C, a glass substrate 1 having the concave portion 1a formed thereon is bonded to the backside of the silicon substrate 2. When bonding the glass substrate 1 to the silicon substrate 2, the concave portion 1a should face the silicon substrate 2 side. And the glass substrate 1 should be arranged so that an area having the piezoresistors R1 and R2 formed thereon is positioned adjacent to the edge of the concave portion 1a and the solder bump 4 is positioned on the concave portion 1a.

In this case, it is possible to selectively obtain the strong bonding force by using the glass of high ionic mobility such as the sodium glass as the glass substrate 1 and anodic bonding the glass substrate 1 to the silicon substrate 2 by applying the high voltage of 1 about KV between them.

For this reason, the concave portion 1a may remain in the state of a cavity. It is also possible, however, to fill it up with the implant members such as the ordinary glass or resin not to be anodic bonded so as to planarize the surface of the glass substrate 1.

Next, as shown in Figures 32A and 32B, when the glass substrate 1 is bonded to the backside of the silicon substrate 2, the protective film pasted on the silicon substrate 2 is peeled off.

And the solder bump 4 is formed on the A1 pad 3 formed on each chip area on the silicon substrate 2.

Here, a size C1 of the solder bump 4 may be about 0.6 to 1.2 mm for instance, and a height H1 thereof may be about 0.1 to 0.4 mm for instance.

As for the method of forming the solder bump 4, electroplating or screen printing may be used for instance. It is thereby possible to simultaneously form the solder bumps 4 for all the chips taken from the silicon substrate 2 and simplify the manufacturing process.

The solder bump 4 has the specific gravity more than three times higher than that of glass or silicon. Therefore, in the case of obtaining a same weight effect, volume of the solder bump 4 can be a third or less, which allows miniaturization of the solder bump 4.

Next, as shown in Figure 33A and 33B, the silicon substrate 2 having the solder bump 4 formed therein is selectively etched by using the photolithographic technology and etching technology so as to form the constriction 2a on the silicon substrate 2 and separate the silicon substrate 2 on the concave portion 1a for each individual chip.

As for the method of etching the silicon substrate 2, wet etching using KOH may be used for instance.

Next, as shown in Figures 34A and 34B, the silicon substrate 2 bonded to the glass substrate 1 is diced along dicing lines L1 and L2. The solder bump 4 is thereby formed, and the silicon substrate 2 having its backside supported by the glass substrate 1 is cut into chips.

Next, as shown in Figures 35A and 35B, the silicon substrate 2 having the solder bump 4 formed on its surface and having its backside supported by the glass substrate 1 is die-bonded in a package 6.

And terminals 7 provided on the package 6 are connected to the A1 pads P1 to P3 formed on the silicon substrate 2 with a metal wire 5 by performing the wire bonding.

Next, as shown in Figure 36, the tilt sensor is sealed by affixing a lid 8 on the package 6.

Thus, it is possible, just by bonding the silicon substrate 2 to the glass substrate 1 once, to simultaneously form the support member for supporting the piezoresistors R1 and R2 in the state capable of deflection to a plurality of chips without selectively etching the backside of the substrate 2 having the piezoresistors R1 and R2 formed therein.

It is possible to form the solder bump 4 of a high specific gravity on the silicon substrate 2 without selectively etching the backside of the silicon substrate 2 having the piezoresistors R1 and R2 formed therein. And besides, it is possible to provide the constriction 2a in an area having the piezoresistors R1 andR2 formedthereonandefficientlydeflect the an area having the piezoresistors R1 and R2 formed thereon while keeping the thickness of the silicon substrate 2 uniform.

For this reason, it is possible to simplify the manufacturing process of the tilt sensor while miniaturizing the solder bump 4 so as to miniaturize the tilt sensor and reduce the costs thereof and also improve the detection accuracy of the tilt sensor easily.

The eighth embodiment described the method whereby the piezoresistors R1 and R2, A1 pads 3, P1 to P3 and wiring H1 are formed on the silicon substrate 2, and then the backside of the silicon substrate 2 is ground so that the silicon substrate 2 isbonded to the glass substrate 1 having the concave portion 1a formed therein. It is possible, however, to take the method whereby the silicon substrate 2 before grinding is bonded to the glass substrate 1 having the concave portion 1a therein, and the surface of the silicon substrate 2 is ground so as to form the piezoresistors R1 and R2, A1 pads 3, P1 to P3 and wiring H1 on the silicon substrate 2.

Thus, it is no longer necessary to bond the silicon substrate 2 to the glass substrate 1 in the state in which the thickness T1 of the silicon substrate 2 is as thin as 100 μm so that it can be easier to handle the silicon substrate 2.

The eighth embodiment also described an example in which the constriction 2a is provided to facilitate the deflection of the silicon substrate 2. However, it is not essential to provide the constriction 2a.

The eighth embodiment also described the method of etching the silicon substrate 2 so as to separate the silicon substrate 2 around the solder bump 4 for each individual chip. However, it is also possible to separate the silicon substrate 2 around the solder bump 4 for each individual chip by dicing.

The eighth embodiment also described the method of providing one solder bump 4 to each individual chip. However, it is also possible to provide a plurality of solder bumps 4 to each individual chip.

Figures 37A - 37D, 38A - 38C, and 39 are sectional views showing an example of the manufacturing process of the solder bump of the tilt sensor according to an embodiment of the present invention.

In Figure 37A, A1 pads 12a and 12b are formed on a silicon substrate 11 by using the photolithographic technology and etching technology.

Next, as shown in Figure 37B, a UBM (Under Bump Metal) film 13 is formed on the silicon substrate 11 having the A1 pads 12a and 12b formed thereonby the sputtering or deposition.

Next, as shown in Figure 37C, a resist 14 is applied on the silicon substrate 11 having the UBM film 13 formed thereon, and an opening 14a is formed in the area forming the solder bump by using the photolithographic technology.

Next, as shown in Figure 37D, electrolytic copper plating is performed by using the UBM film 13 as a cathode electrode so as to form an electrolytic copper plating layer 15 on the UBM film 13 having the opening 14a formed thereon.

Next, as shown in Figure 38A, the electrolytic solder plating is performed by using the UBM film 13 as the cathode electrode so as to form an electrolytic solder plating layer 16 on the electrolytic copper plating layer 15.

Next, as shown in Figure 38B, an oxygen plasma process is performed to remove the resist 14 formed on the silicon substrate 11.

Next, as shown in Figure 38C, the silicon substrate 11 having the electrolytic solder plating layer 16 formed thereon is heat-treated to round the electrolytic solder plating layer 16.

Next, as shown in Figure 39, the UBM film 13 around the electrolytic solder plating layer 16 is removed by dry etching or the wet etching.

Thus, it is possible to simultaneously form the electrolytic solder plating layer 16 of a high specific gravity to a plurality of chips without selectively etching the backside of the silicon substrate 11. It is also possible to simplify the manufacturing process of the tilt sensor and reduce the costs thereof. And besides, it is possible to miniaturize the weight member and thereby miniaturize the tilt sensor.

(Ninth Embodiment)

Next, a ninth embodiment of the present invention will be described by referring to the drawings. Figures 40A and 40B, 41A and 41B, 42A and 42B, 43A and 43B, 44A and 44B, 45A and 45B, 46A and 46B, 47A and 47B, and 48 are the drawings showing the ninth embodiment of the tilt sensor and manufacturing method thereof according to the present invention.

Figure 40A is a plan view showing the configuration of the tilt sensor according to the ninth embodiment of the present invention, and Figure 40B is a sectional view cut by a B1 to B1 line in Figure 40A.

In Figures 40A and 40B, a single-crystal silicon layer 22 is formed on a silicon substrate 21 by the intermediary of a silicon dioxide layer 20.

The single-crystal silicon layer 22 has the piezoresistors R21, R22, A1 pads P21 to P23, and a wiring H21 for connecting the piezoresistors R21, R22 to the A1 pads P21 to P23 formed on its surface.

The single-crystal silicon layer 22 has a solder bump 24 formed on its surface via the A1 pad P23, and also has a constriction 22a formed correspondingly to the area in which the piezoresistors R21, R22 are arranged.

The silicon dioxide layer 20 under the single-crystal silicon layer 22 is partially removed correspondingly to the area in which the solder bump 24 and piezoresistors R21, R22 are arranged. And the single-crystal silicon layer 22 is kept in the state capable of deflection by using the remaining silicon dioxide layer 20 as the supporting point.

Thus, it is possible to provide the weight member while keeping the piezoresistors R21, R22 in the state capable of deflection without selectively etching the backside of the silicon substrate 21 having the piezoresistors R21, R22 formed therein.

In the case of supporting the single-crystal silicon layer 22 having the piezoresistors R21 and R22 formed therein to apply the stress to the piezoresistors R21 and R22, it is no longer necessary to bond the single-crystal silicon layer 22 to the silicon substrate 21 after processing the single-crystal silicon layer 22 to be thin.

For this reason, it is no longer necessary to increase the thickness of the single-crystal silicon layer 22 in order to secure the strength for bonding it to the silicon substrate 21. Therefore, even in the case where the thickness of the single-crystal silicon layer 22 is rendered uniform, it is possible to efficiently deflect the single-crystal silicon layer 22 and apply the stress efficiently to the piezoresistors R21 and R22. And it is also possible to simplify the configuration of the tilt sensor and easily improve resistance to an impact.

Figures 41A, 42A, 43A, 44A, 45A, 46A and 47A are plan views showing the manufacturing process of the tilt sensor according to the ninth embodiment of the present invention, and Figures 41B, 42B, 43B, 44B, 45B, 46B, 47B and 48 are sectional views showing the manufacturing process of the tilt sensor according to the ninth embodiment of the present invention.

In Figures 41A and 41B, an SOI substrate of 5-inch diameter having the single-crystal silicon layer 22 formed on the silicon substrate 21 by the intermediary of the silicondioxide layer 20 is prepared for instance. Here, a thickness T2 of the single-crystal silicon layer 22 may be 50 μm for instance, and a thickness T3 of the silicon dioxide layer 20 may be 2 μm for instance.

An SIMOX substrate or a laser anneal substrate may be used, for instance, as the SOI substrate.

Next, as shown in Figures 42A and 42B, the photolithographic technology is used to selectively ion-implant the impurities such as boron in the single-crystal silicon layer 22 so as to form the piezoresistors R1 and R2 in each chip area on the single-crystal silicon layer 22.

And an A1 film is formed on the entire surface of the single-crystal silicon layer 22 by the sputtering or deposition, and the A1 film is patterned by using the photolithographic technology and etching technology so as to form the A1 pad 23, P21 to P23 and wiring H21 in each chip area on the single-crystal silicon layer 22.

Here, a width W2 of each chip area on the single-crystal silicon layer 22 can be 1.0 mm for instance, and a length L2 thereof can be 2.2 mm for instance. It is thereby possible to obtain about 5, 000 tilt sensor chips from one SOI substrate of 5-inch diameter.

Next, as shown in Figures 43A and 43B, a solder bump 24 is formed on the A1 pad 23 formed in each chip area on the single-crystal silicon layer 22.

Here, a size C2 of the solder bump 24 may be about 0.6 to 1.2 mm for instance, and a height H2 thereof may be about 0.1 to 0.4 mm for instance.

As for the method of forming the solder bump 24, the electroplating or screen printing may be used for instance. It is thereby possible to simultaneously form the solder bumps 24 for all the chips taken from the SOI substrate and simplify the manufacturing process.

The solder bump 24 has the specific gravity more than three times higher than that of glass or silicon. Therefore, in the case of obtaining the same weight effect, the volume of the solder bump 24 can be a third or less, which allows miniaturization of the solder bump 24.

Next, as shown in Figures 44A and 44B, the single-crystal silicon layer 22 having the solder bump 24 formed therein is selectively etched by using the photolithographic technology and etching technology so as to form the constriction 22a on the single-crystal silicon layer 22 and separate the single-crystal silicon layer 22 around the solder bump 24 for each individual chip.

As for the method of etching the single-crystal silicon layer 22, the wet etching using KOH may be used for instance.

Next, as shown in Figures 45A and 45B, the SOI substrate having the constriction 22a formed on the single-crystal silicon layer 22 is dipped in a chemical such as hydrofluoric acid, and the silicon dioxide layer 20 is brought into contact with the chemical via a portion in which the single-crystal silicon layer 22 is selectively removed.

The chemical is brought under the single-crystal silicon layer 22 while etching the silicon dioxide layer 20 with the chemical. And the silicon dioxide layer 20 under the single-crystal silicon layer 22 having the solder bump 24 formed therein is removed while leaving the silicon dioxide layer 20 under the single-crystal silicon layer 22 having the pads P21 to P23 formed therein.

Thus, it is possible to form a clearance 20a under the single-crystal silicon layer 22 having the solder bump 24 formed therein and keep the single-crystal silicon layer 22 deflectable with the remaining silicon dioxide layer 20 as the supporting point.

Next, as shown in Figures 46A and 46B, the SOI substrate having the clearance 20a formed under the single-crystal silicon layer 22 is diced along dicing lines L11 and L12. The single-crystal silicon layer 22 having the solder bump 24 formed on its surface and having its backside supported by the silicon dioxide layer 20 is thereby cut into chips.

Next, as shown in Figures 47A and 47B, the single-crystal silicon layer 22 having the solder bump 24 formed on its surface and having its backside supported by the silicon dioxide layer 20 is die-bonded in a package 26.

And terminals 27 provided on the package 26 are connected to the A1 pads P21 to P23 formed on the single-crystal silicon layer 22 with a metal wire 25 by performing the wire bonding.

Next, as shown in Figure 48, the tilt sensor is sealed by affixing a lid 28 on the package 26.

Thus, it is possible to support the single-crystal silicon layer 22 rendered as a thin film without bonding it and efficiently deflect the single-crystal silicon layer 22 having the piezoresistors R21 and R22 formed therein.

It is also possible to form the solder bump 24 of a high specific gravity on the single-crystal silicon layer 22 without selectively etching the backside of the silicon substrate 21 supporting the piezoresistors R21 and R22. Therefore, it is possible to easily form the solder bump 24 while miniaturizing the solder bump 24.

For this reason, it is possible to simplify the manufacturing process of the tilt sensor, miniaturize the tilt sensor, reduce the costs thereof and also improve the detection accuracy of the tilt sensor easily.

The ninth embodiment described the method of using the SOI substrate so as to support the single-crystal silicon layer 22 with the silicon dioxide layer 20. However, it is also possible to use a bonded substrate.

The ninth embodiment also described the example of providing the constriction 22a so as to facilitate the deflection of the single-crystal silicon layer 22. It is not essential, however, to provide the constriction 22a.

The ninth embodiment also described the method of etching the single-crystal silicon layer 22 so as to separate

**EP 1 491 854 A1**

the single-crystal silicon layer 22 around the solder bump 24 for each individual chip. However, it is also possible to separate the single-crystal silicon layer 22 around the solder bump 24 for each individual chip by dicing.

The ninth embodiment also described the method of providing one solder bump 24 for each individual chip. However, it is also possible to provide a plurality of solder bumps 24 for each individual chip.

(Tenth Embodiment)

Next, a tenth embodiment of the present invention will be described by referring to the drawings. Figures 49A and 49B, 50A and 50B, 51A and 51B, 52, 53A and 53B, 54A and 54B, and 55A and 55B are the drawings showing the tenth embodiment of the tilt sensor and method of measuring the tilt angle according to the present invention.

This embodiment applies the tilt sensor and method of measuring the tilt angle to the case of detecting tilt angles η and φ in different directions with a plurality of piezoresistors as shown in Figures 49A and 49B.

Figure 49A is a plan view showing the configuration of the tilt sensor according to the tenth embodiment of the present invention, and Figure 49B is a sectional view cut by the A1 to A1 line in Figure 49A.

In Figures 49A and 49B, a support member 101b is formed on a support member 101a. The support member 101b is bonded to the backside of an end 102a of a silicon substrate 102 so as to support the end 102a of the silicon substrate 102 from the backside. And a weight member 104 is formed on an end 102b of the silicon substrate 102.

A constricted beam portion 102c is formed between the end 102a and the end 102b of the silicon substrate 102. Thus, the end 102a is fixedby the support member 101b, and the weight member 104 is formed on an end 102b. Therefore, in the case where the tilt sensor is inclined, a direction of gravity of the weight member 104 changes so that the beam portion 102c is deflected or twisted. As the beam portion 102c is the deflectable area, it is possible to measure the tilt angle of the tilt sensor by measuring a degree of deflection or a degree of torsion of the beam portion 102c. In the case of Figures 49A and 49B, a direction of deflection of the silicon substrate 102 corresponds to a direction of thickness thereof, and a direction of torsion of the silicon substrate 102 corresponds to a rotation direction whose axis is the center line A1 to A1 going through a middle point of the width of the silicon substrate 102.

The silicon substrate 102 is an n-type silicon substrate, and is formed to be thin enough to be capable of the deflection and torsion according to a change in the direction of gravity of the weight member 104. It is formed so that a crystal face (100) corresponds to the surface and a <110> direction corresponds to the longitudinal direction of the silicon substrate 102.

The weight member 104 is formed by producing a solid metal blank such as Au or solder on the surface of the silicon substrate 102 with a bump implementation technology.

The beam portion 102c has the piezoresistors R11, R12, R13, R14, R21, R22, R23 and R24 formed thereon. The piezoresistors R11, R12, R13, R14, R21, R22, R23 and R24 are formed by diffusing or ion-implanting p-type impurities such as boron on the surface of the silicon substrate 102.

The piezoresistors R11 and R14 are arranged, inside the beam portion 102c, in the positions symmetric with respect to the center line A1 to A1 going through the middle point in a lateral direction of the silicon substrate 102. The piezoresistors R21 and R24 are arranged in the positions symmetric with respect to the center line A1 to A1 and closer to the center line A1 to A1 than the piezoresistors R11 and R14.

The piezoresistors R12 and R13 are arranged in the positions symmetric with respect to the center line A1 to A1, which are the same positions as the piezoresistors R11 and R14 in the lateral direction of the silicon substrate 102 and closer to the weight member 104 than the piezoresistors R11 and R14. The piezoresistors R22 and R23 are arranged in the positions symmetric with respect to the center line A1 to A1, which are the same positions as the piezoresistors R21 and R24 in the lateral direction of the silicon substrate 2 and closer to the weight member 104 than the piezoresistors R21 and R24.

Thus, it is possible to support the silicon substrate 102 having the piezoresistors R11, R12, R13, R14, R21, R22, R23 andR24 formed therein in the state capable of the deflection and torsion without selectively etching the backside of the substrate 102. And it is possible to easily increase the specific gravity of the weight member 104 while keeping the consistency with an existing flip chip mounting technology so as to reduce the weight member 104.

For this reason, it is possible to simplify the configuration and manufacturing process of the tilt sensor, miniaturize the tilt sensor and reduce the costs thereof and also improve resistance to an impact.

Figure 50A is a diagram defining a coordinate system of the tilt sensor viewed from a section on cutting the silicon substrate 102 in the longitudinal direction, and Figure 50B is a diagram defining the coordinate system of the tilt sensor viewed from the section on cutting the silicon substrate 102 in the lateral direction.

In Figure 50A, the axis in the longitudinal direction of the silicon substrate 102 is defined as x axis, the axis in the lateral direction thereof is defined as y axis, and the axis vertical to x and y axes is defined as z axis. And an x-axis direction component of the gravity W of the weight member 104 is defined as Gx, and a z-axis direction component of the gravity W of the weight member 104 is defined as Gz. And an angle made by a level surface L and the x axis is defined as a tilt angle φ (tilt angle on y axis).

In Figure 50B, a y-axis direction component of the gravity W of the weight member 104 is defined as Gy, and an angle made by the level surface L and y axis is defined as a tilt angle η (tilt angle on x axis).

Figure 51A is a circuit diagram showing the schematic configuration of the piezoresistors R11, R12, R13 and R14, and Figure 51B is a circuit diagram showing the schematic configuration of the piezoresistors R21, R22, R23 and R24.

In Figure 51A, the piezoresistors R11, R12, R13 and R14 constitute a full bridge circuit C1. The full bridge circuit C1 connects the piezoresistors R11 to the piezoresistors R13 in series by connecting one end of the piezoresistors R11 to one end of the piezoresistors R13, and connects the piezoresistors R12 to the piezoresistors R14 in series by connecting one end of the piezoresistors R12 to one end of the piezoresistors R14. It also connects the other end of the piezoresistors R11 and the other end of the piezoresistors R14 to a plus potential side of a power supply Vi, and connects the other end of the piezoresistors R12 and the other end of the piezoresistors R13 to a minus potential side of the power supply Vi. Here, a potential difference between one end of the piezoresistors R11 (R13) and one end of the piezoresistors R12 (R14) is an output voltage Vo1 of the full bridge circuit C1.

In Figure 51B, the piezoresistors R21, R22, R23 and R24 constitute a full bridge circuit C2. The full bridge circuit C2 connects the piezoresistors R21 to the piezoresistors R23 in series by connecting one end of the piezoresistors R21 to one end of the piezoresistors R23, and connects the piezoresistors R22 to the piezoresistors R24 in series by connecting one end of the piezoresistors R22 to one end of the piezoresistors R24. It also connects the other end of the piezoresistors R21 and the other end of the piezoresistors R24 to the plus potential side of the power supply Vi, and connects the other end of the piezoresistors R22 and the other end of the piezoresistors R23 to the minus potential side of the power supply Vi. Here, the potential difference between one end of the piezoresistors R21 (R23) and one end of the piezoresistors R22 (R24) is an output voltage Vo2 of the full bridge circuit C2.

Next, the case of measuring the tilt angles $\phi$ and η of the tilt sensor will be described.

A bending moment is generated in the beam portion 102c by z-axis direction component Gz of the gravity W of the weight member 104 and then the beam portion 102c is deflected. When the tilt sensor is inclined on the x axis or on the y axis, the direction of W changes and then Gz changes resulting in a change in the amount of deflection. A stress σ x 1 in x-axis direction on the beam portion 102c due to the bending moment is proportional to Gz. As Gz satisfies a relationship in a following formula (1), it can be represented as a following formula (2).

$$Gz = Wcos\phi cos\eta \tag{1}$$

$$\sigma \; x \; 1 \propto cos\phi cos\eta \tag{2}$$

Next, when the tilt sensor is inclined on x axis, the direction of gravity of the weight member 104 changes and the torsional moment is generated in the beam portion 102c by Gy and then the beam portion 102c is twisted. A stress σ x 2 in x-axis direction on the beamportion 102c due to the torsional moment is proportional to Gy. As Gy satisfies the relationship in the following formula (3), it can be represented as a following formula (4).

$$Gy = Wsin\eta \tag{3}$$

$$\sigma \; x \; 2 \propto sin\eta \tag{4}$$

Gx generates the bending moment in the beam portion 102c. However, it can be ignored because it is small in comparison to the bending moment generated by Gz.

In the case where the piezoresistor is a p-type Si, the crystal face (100) of the silicon substrate 102 is the surface and the direction of the piezoresistor is parallel with the crystal direction <110> of the silicon substrate 102, a rate of change of resistance β of the piezoresistor can be represented by the following formula (5).

$$\beta = \pi 44 \; (\sigma l - \sigma t) \tag{5}$$

In the formula (5), $\pi 44$ is called a piezoresistor coefficient, which is about 1.3 x 10-9(Pa-1) in the case of the p-type Si of which high impurity concentration is 1018 (cm3). And σl is a vertical stress acting on the piezoresistor, and σt is a horizontal stress acting on the piezoresistor.

In the case where the piezoresistor faces the x-axis direction, σl can be represented by the following formula

(6) .

$$\sigma l = \sigma x1 + \sigma x2 \qquad (6)$$

And σt is the stress in the y-axis direction acting on the piezoresistor. However, it can be ignored because it is small in comparison to σx1 + σx2. Thus, β can be represented by the following formula (7).

$$\beta = A\cos\phi\cos\eta + B\sin\eta \qquad (7)$$

A and B are proportionality constants in the formula (7).

As shown in Figures 49A and 49B, as to pairs of the piezoresistors at symmetric positions in the case where the piezoresistors are arranged in the positions symmetric with respect to the center line A1 to A1, σ x 1 is the same or approximately the same value, and an absolute value of σ x 2 is the same or approximately the same value and then signs become reverse. Therefore, rates of change of resistance β11, β12, β13, β14, β21, β22, β23 and β24 of the piezoresistors R11, R12, R13, R14, R21, R22, R23 and R24 can be represented by the following formulas (8) to (15).

$$\text{Rate of change of resistance } \beta 11 \text{ of } R11 = A1\cos\phi\cos\eta + B1\sin\eta \qquad (8)$$

$$\text{Rate of change of resistance } \beta 12 \text{ of } R12 = C1\cos\phi\cos\eta + D1\sin\eta \qquad (9)$$

$$\text{Rate of change of resistance } \beta 13 \text{ of } R13 = C1\cos\phi\cos\eta - D1\sin\eta \qquad (10)$$

$$\text{Rate of change of resistance } \beta 14 \text{ of } R14 = A1\cos\phi\cos\eta - B1\sin\eta \qquad (11)$$

$$\text{Rate of change of resistance } \beta 21 \text{ of } R21 = A2\cos\phi\cos\eta + B2\sin\eta \qquad (12)$$

$$\text{Rate of change of resistance } \beta 22 \text{ of } R22 = C2\cos\phi\cos\eta + D2\sin\eta \qquad (13)$$

$$\text{Rate of change of resistance } \beta 23 \text{ of } R23 = C2\cos\phi\cos\eta - D2\sin\eta \qquad (14)$$

$$\text{Rate of change of resistance } \beta 24 \text{ of } R24 = A2\cos\phi\cos\eta - B2\sin\eta \qquad (15)$$

A1, B1, C1, D1, A2, B2, C2 and D2 are the proportionality constants in the formulas (8) to (15).
Furthermore, in the case where all the values of the piezoresistors R11, R12, R13, R14, R21, R22, R23 and R24 in σ x 1 = σ x 2 = 0 are equal, the output voltage Vo1 of the full bridge circuit C1 and output voltage Vo2 of the full bridge circuit C2 can be approximately represented by the following formulas (16) and (17).

$$Vo1 = E1\sin\eta \qquad (16)$$

$$Vo2 = E2\cos\phi\cos\eta \qquad (17)$$

E1 and E2 in the formulas (16) and (17) can be represented by the following formulas (18) and (19).

$$E1 = -\frac{B1 + D1}{2} \times Vi \qquad (18)$$

$$E2 = -\frac{A2 - C2}{2} \times Vi \qquad (19)$$

More Specifically, Vo1 and Vo2 are the values proportional to $\sin\eta$ and $\cos\phi\cos\eta$ respectively.
The tilt sensor has a tilt angle calculating section for calculating tilt angles $\phi$ and $\eta$ based on the output voltages Vo1 and Vo2.
The tilt angle calculating section first moves on to a step S100 when measuring the tilt angles $\phi$ and $\eta$.
In the step S100, it calculates E1 and E2. There are various methods for this. For instance, if Vo1 is measured in the cases of $\eta$ = 90 degrees and $\eta$ = -90 degrees as Vo11 and Vo12 respectively, and Vo2 is measured in the cases of $\eta$ = 0 degrees, $\phi$ = 0 degrees and $\eta$ = 0 degrees, $\phi$ = 180 degrees as Vo21 and Vo22 respectively, E1 and E2 can be calculated by the following formulas (20) and (21).

$$E1 = Vo11-Vo12 \qquad (20)$$

$$E2 = Vo21-Vo22 \qquad (21)$$

The step S100 may be performed on factory shipment to store calculation results in a nonvolatile memory, for instance.
Next, it moves on to a step S102 to calculate Vo1 and Vo2, moves on to a step S104 to calculate the tilt angles $\eta$ with the following formula (22), and moves on to a step S106 to calculate the tilt angle $\phi$ with the following formula (23). It finishes all the processes and returns to an original process.

$$\eta = \sin\text{-}1(Vo1/E1) \qquad (22)$$

$$\phi = \cos\text{-}1 \, (Vo2/ \, (E2 \times \cos\eta)) \qquad (23)$$

(Example)

Next, an example of this embodiment will be described. Figure 52 is a diagram showing size conditions of the silicon substrate 102 and piezoresistors.
In Figure 52, the length of the end 102a in the longitudinal direction (lateral direction of the silicon substrate 102) is 800 (μm), and the length of the end 102a in the lateral direction (longitudinal direction of the silicon substrate 102) is 200 (μm). And the length of the beam portion 102c in the longitudinal direction (longitudinal direction of the silicon substrate 102) is 800 (μm), and the length of the beam portion 102c in the lateral direction (lateral direction of the silicon substrate 102) is 200 (μm). The thickness of the silicon substrate 102 is 20 (μm).
The length of the weight member 104 in the longitudinal direction (lateral direction of the silicon substrate 102) is 600 (μm), and the length of the weight member 104 in the lateral direction (longitudinal direction of the silicon substrate 102) is 500 (μm). The thickness of the weight member 104 is 30 (μm). The material of the weight member 104 is gold.

The piezoresistors R11, R21, R24 and R14 are arranged 150 (μm) away from the end 102a in the longitudinal direction of the silicon substrate 102, and the piezoresistors R12, R22, R23 and R13 are arranged 200 (μm) away from the piezoresistors R11, R21, R24 and R14 in the longitudinal direction of the silicon substrate 102. The piezoresistors R24 and R23 are arranged 60 (μm) away from the piezoresistors R14 and R13 in the lateral direction of the silicon substrate 102, and the piezoresistors R21 and R22 are arranged 40 (μm) away from the piezoresistors R24 and R23 in the lateral direction of the silicon substrate 102. And the piezoresistors R11 and R12 are arranged 60 (μm) away from the piezoresistors R21 and R22 in the lateral direction of the silicon substrate 102.

The length, width, surface high impurity concentration and diffusion depth of the piezoresistors R11, R12, R13, R14, R21, R22, R23 and R24 are 50 (μm), 10 (μm), 1018 (cm3) and 0.45 (μm) respectively.

Figure 53A is a circuit diagram showing the schematic configuration of the piezoresistors R11, R12, R13 and R14, and Figure 53B is a circuit diagram showing the schematic configuration of the piezoresistors R21, R22, R23 and R24.

The schematic configurations are the same as those in Figures 51A and 51B. However, a supply voltage Vi is set to 5 (V) for both the full bridge circuits C1 and C2.

Figure 54A is a graph showing the change in the output voltage Vo1 when changing the tilt angle η while keeping the tilt angle φ fixed, and Figure 54B is a graph showing the change in the output voltage Vo1 when changing the tilt angle φ while keeping the tilt angle η fixed.

When the tilt sensor is inclined on y axis by fixing it at the tilt angle φ = 0, the output voltage Vol is almost proportional to sinη as shown in Figure 54A. When the tilt sensor is inclined on x axis by fixing it at the tilt angle η = 0, the output voltage Vo1 is almost zero irrespective of increase and decrease in the tilt angle φ as shown in Figure 54B.

Figure 55A is a graph showing the change in the output voltage Vo2 when changing the tilt angle η while keeping the tilt angle φ fixed, and Figure 55B is a graph showing the change in the output voltage Vo2 when changing the tilt angle φ while keeping the tilt angle η fixed.

When the tilt sensor is inclined on y axis by fixing it at the tilt angle φ = 0, the output voltage Vo2 is almost proportional to cosη as shown in Figure 55A. If the tilt sensor is inclined on x axis by fixing it at the tilt angle η = 0, the output voltage Vo2 is almost proportional to cosφ as shown in Figure 55B.

Thus, according to this embodiment, the silicon substrate 102 having the piezoresistors formed on its surface, the support member 101b for supporting the silicon substrate 102 at the end of the silicon substrate 102, the weight member 104 arranged at the end 102b of the silicon substrate 102, and the tilt angle calculating section for calculating tilt angles φ and η are provided. The piezoresistors R11 and R14, R21 and R24, R12 and R13, and R22 and R23 are arranged in the positions symmetric with respect to the center line A1 to A1 to constitute the full bridge circuit C1 with R11, R12, R13 and R14 and constitute the full bridge circuit C2 with R21, R22, R23 and R24. And the tilt angle calculating section calculates the tilt angle η based on the output voltage Vo1 of the full bridge circuit C1 and calculates the tilt angle φ based on the output voltage Vo2 of the full bridge circuit C2 and the calculated tilt angle η.

Thus, it is possible, by using a metal bump of a high specific gravity as the weight member 104, to easily have the consistency with an existing flip chip mounting technology while miniaturizing the weight member 104 so as to miniaturize the tilt sensor and reduce the costs thereof and also improve resistance to an impact. And in the case of using the substrate 102 of uniform thickness, it is possible to detect the tilt angles in different directions η and φ with one tilt sensor. As the full bridge circuits C1 and C2 are constituted by a plurality of piezoresistors, it is possible to relatively improve the detection accuracy of the tilt angles η and φ.

According to the tenth embodiment, the piezoresistors R11, R12, R13 and R14 are corresponding to a first piezoresistor group according to claim 23 or 26, the piezoresistors R21, R22, R23 and R24 are corresponding to a second piezoresistor group according to claim 23 or 26, and the full bridge circuit C1 is corresponding to a first full bridge circuit according to claim 23 or 26. The full bridge circuit C2 is corresponding to a second full bridge circuit according to claim 23 or 26, the tilt angle calculating section is corresponding to a first tilt angle calculating means according to claim 23 or a second tilt angle calculating means according to claim 23, and calculation by the tilt angle calculating section is corresponding to a first tilt angle calculating step according to claim 26 or a second tilt angle calculating step according to claim 26.

(Eleventh Embodiment)

Next, an eleventh embodiment of the present invention will be described by referring to the drawings. Figures 56, 57A and 57B, 58, 59A and 59B, 60A and 60B, and 61A and 61B are the drawings showing the eleventh embodiment of the tilt sensor and method of measuring the tilt angle according to the present invention.

This embodiment applies the tilt sensor and method of measuring the tilt angle to the case of detecting tilt angles η and φ in different directions with a plurality of piezoresistors as shown in Figure 56. Differences from the tenth embodiment are the number and the positions of arrangement of the piezoresistors. Hereinafter, only the differences from the tenth embodiment will be described, and redundant portions will be given the same symbols and a description thereof will be omitted.

Figure 56 is a plan view showing the configuration of the tilt sensor according to the eleventh embodiment of the present invention.

In Figure 56, the beamportion 102c has the piezoresistors R31, R32, R33, R34, R41 and R42 formed thereon.

The piezoresistors R31 and R34 are arranged in the positions symmetric with respect to the center line A1 to A1. The piezoresistor R41 is arranged on the center line A1 to A1.

The piezoresistors R32 and R33 are arranged in the positions symmetric with respect to the center line A1 to A1, which are the same positions as the piezoresistors R31 and R34 in the lateral direction of the silicon substrate 102 and closer to the weight member 104 than the piezoresistors R31 and R34. The piezoresistor R42 is arranged on the center line A1 to A1 and closer to the weight member 104 than the piezoresistor R41.

Thus, it is possible to support the silicon substrate 102 having the piezoresistors R31, R32, R33, R34, R41 and R42 formed therein in the state capable of the deflection and torsion without selectively etching the backside of the substrate 102. And it is possible' to easily increase the specific gravity of the weight member 104 while keeping the consistency with an existing flip chip mounting technology so as to reduce the weight member 104.

For this reason, it is possible to simplify the configuration and manufacturing process of the tilt sensor, miniaturize the tilt sensor and reduce the costs thereof and also improve resistance to an impact.

Figure 57A is a circuit diagram showing the schematic configuration of piezoresistors R31, R32, R33 and R34, and Figure 57B is a circuit diagram showing the schematic configuration of piezoresistors R41 and R42.

In Figure 57A, the piezoresistors R31, R32, R33 and R34 constitute a full bridge circuit C3. The full bridge circuit C3 connects the piezoresistors R31 to the piezoresistors R33 in series by connecting one end of the piezoresistors R31 to one end of the piezoresistors R33, and connects the piezoresistors R32 to the piezoresistors R34 in series by connecting one end of the piezoresistors R32 to one end of the piezoresistors R34. It also connects the other end of the piezoresistors R31 and the other end of the piezoresistors R34 to the plus potential side of the power supply Vi, and connects the other end of the piezoresistors R32 and the other end of the piezoresistors R33 to the minus potential side of the power supply Vi. Here, the potential difference between one end of the piezoresistors R31 (R33) and one end of the piezoresistors R32 (R34) is an output voltage Vo3 of the full bridge circuit C3.

In Figure 57B, the piezoresistors R41 and R42 constitute a half bridge circuit C4. The half bridge circuit C4 connects the piezoresistors R41 to the piezoresistors R42 in series by connecting one end of the piezoresistors R41 to one end of the piezoresistors R42. And it also connects the other end of the piezoresistors R41 to the plus potential side of the power supply Vi, and connects the other end of the piezoresistors R42 to the minus potential side of the power supply Vi. Here, the potential difference of the piezoresistor R42 is an output voltage Vo4 of the half bridge circuit C4.

Next, the case of measuring the tilt angles $\phi$ and $\eta$ of the tilt sensor will be described.

The rates of change of resistance $\beta31$, $\beta32$, $\beta33$, $\beta34$, $\beta41$ and $\beta42$ of the piezoresistors R31, R32, R33, R34, R41 and R42 can be represented by the following formulas (24) to (29). The following formulas (24) to (29) can be derived as in the tenth embodiment by using the formulas (1) to (7).

$$\text{Rate of change of resistance } \beta31 \text{ of } R31 = A3\cos\phi\cos\eta + B3\sin\eta \qquad (24)$$

$$\text{Rate of change of resistance } \beta32 \text{ of } R32 = C3\cos\phi\cos\eta + D3\sin\eta \qquad (25)$$

$$\text{Rate of change of resistance } \beta33 \text{ of } R33 = C3\cos\phi\cos\eta - D3\sin\eta \qquad (26)$$

$$\text{Rate of change of resistance } \beta34 \text{ of } R34 = A3\cos\phi\cos\eta - B3\sin\eta \qquad (27)$$

$$\text{Rate of change of resistance } \beta41 \text{ of } R41 = A4\cos\phi\cos\eta \qquad (28)$$

$$\text{Rate of change of resistance } \beta42 \text{ of } R42 = C4\cos\phi\cos\eta \qquad (29)$$

A3, B3, C3, D3, A4 andC4 are the proportionality constants in the formulas (24) to (29).

Furthermore, in the case where all the values of the piezoresistors R31, R32, R33, R34, R41 and R42 in σ x 1 = σ x 2 = 0 are equal, the output voltage Vo3 of the full bridge circuit C3 and output voltage Vo4 of the half bridge circuit C4 can be approximately represented by the following formulas (30) and (31).

$$Vo3 = E3\sin\eta \qquad (30)$$

$$Vo4 = +E4\cos\phi\cos\eta \qquad (31)$$

E3 and E4 in the formulas (30) and (31) can be represented by the following formulas (32) and (33).

$$E3 = -\frac{B3 + D3}{2} \times Vi \qquad (32)$$

$$E4 = -\frac{A4 - C4}{2} \times Vi \qquad (33)$$

More specifically, Vo3 and Vo4-Vi/2 are the values proportional to $\sin\eta$ and $\cos\phi\cos\eta$ respectively. Therefore, the tilt angle calculating section can calculate the tilt angles $\phi$ and $\eta$ as in the tenth embodiment.

(Example)

Next, an example of this embodiment will be described.

Figure 58 is a diagram showing the size conditions of the silicon substrate 102 and piezoresistors.

In Figure 58, the length of the end 102a in the longitudinal direction (lateral direction of the silicon substrate 102) is 800 (μm), and the length of the end 102a in the lateral direction (longitudinal direction of the silicon substrate 102) is 200 (μm). And the length of the beam portion 102c in the longitudinal direction (longitudinal direction of the silicon substrate 102) is 800 (μm), and the length of the beam portion 102c in the lateral direction (lateral direction of the silicon substrate 102) is 200 (μm). The thickness of the silicon substrate 102 is 20 (μm).

The length of the weight member 104 in the longitudinal direction (lateral direction of the silicon substrate 102) is 600 (μm), and the length of the weight member 104 in the lateral direction (longitudinal direction of the silicon substrate 102) is 500 (μm). The thickness of the weight member 104 is 30 (μm). The material of the weight member 104 is gold.

The piezoresistors R31, R41 and R34 are arranged 150 (μm) away from the end 102a in the longitudinal direction of the silicon substrate 102, and the piezoresistors R32, R42 and R33 are arranged 500 (μm) away from the piezoresistors R31, R41 and R34 in the longitudinal direction of the silicon substrate 102. The piezoresistors R41 and R42 are arranged 80 (μm) away from the piezoresistors R34 and R33 in the lateral direction of the silicon substrate 102, and the piezoresistors R31 and R32 are arranged 80 (μm) away from the piezoresistors R41 and R42 in the lateral direction of the silicon substrate 102.

The length, width, surface high impurity concentration and diffusion depth of the piezoresistors R31, R32, R33, R34, R41 and R42 are 50 (μm), 10 (μm), 1018(cm3) and 0.45 (μm) respectively.

Figure 59A is a circuit diagram showing the schematic configuration of the piezoresistors R31, R32, R33 and R34, and Figure 59B is a circuit diagram showing the schematic configuration of the piezoresistors R41 and R42.

The schematic configurations are the same as those in Figures 57A and 57B. However, the supply voltage Vi is set at 5 (V) for both the full bridge circuit C3 and C4.

Figure 60A is a graph showing the change in the output voltage Vo3 when changing the tilt angle $\eta$ while keeping the tilt angle $\phi$ fixed, and Figure 60B is a graph showing the change in the output voltage Vo3 when changing the tilt angle $\phi$ while keeping the tilt angle $\eta$ fixed.

When the tilt sensor is inclined on y axis by fixing it at the tilt angle $\phi$ = 0, the output voltage Vo3 is almost proportional to $\sin\eta$ as shown in Figure 60A. When the tilt sensor is inclined on x axis by fixing it at the tilt angle $\eta$ =

0, the output voltage Vo3 is almost zero irrespective of increase and decrease in the tilt angle $\phi$ as shown in Figure 60B.

Figure 61A is a graph showing the change in the output voltage Vo4 when changing the tilt angle $\eta$ while keeping the tilt angle $\phi$ fixed, and Figure 61B is a graph showing the change in the output voltage Vo4 when changing the tilt angle $\phi$ while keeping the tilt angle $\eta$ fixed.

When the tilt sensor is inclined on y axis by fixing it at the tilt angle $\phi = 0$, the output voltage Vo4 is almost proportional to cos$\eta$ with Vi/2 offset as shown in Figure 61A. When the tilt sensor is inclined on x axis by fixing it at the tilt angle $\eta = 0$, the output voltage Vo4 is almost proportional to cos$\phi$ with Vi/2 offset as shown in Figure 61B.

Thus, according to this embodiment, the silicon substrate 102 having the piezoresistors formed on its surface, the support member 101b for supporting the silicon substrate 102 at the end of the silicon substrate 102, the weight member 104 arranged at the end 102b of the silicon substrate 102, and the tilt angle calculating section for calculating the tilt angles $\phi$ and $\eta$ are provided. The piezoresistors R31 and R34 and the piezoresistors R32 and R33 are arranged in the positions symmetric with respect to the center line A1 to A1, and the piezoresistors R41 and R42 are arranged on the center line A1 to A1 so as to constitute the full bridge circuit C3 with R31, R32, R33 and R34 and constitute the half bridge circuit C4 with the piezoresistors R41 and R42. And the tilt angle calculating section calculates the tilt angle $\eta$ based on the output voltage Vo3 of the full bridge circuit C3 and calculates the tilt angle $\phi$ based on the output voltage Vo4 of the half bridge circuit C4 and the calculated tilt angle $\eta$.

Thus, it is possible, by using the metal bump of a high specific gravity as the weight member 104, to easily have the consistency with an existing flip chip mounting technology while miniaturizing the weight member 104 so as to miniaturize the tilt sensor and reduce the costs thereof and also improve resistance to an impact. And in the case of using the substrate 102 of uniform thickness, it is possible to detect the tilt angles in different directions $\eta$ and $\phi$ with one tilt sensor. As the bridge circuits C3 and C4 are constituted by a plurality of piezoresistors, it is possible to relatively improve the detection accuracy of the tilt angles $\eta$ and $\phi$. It is also possible, compared with the tenth embodiment, to reduce the number of the piezoresistors necessary for the detection.

According to the eleventh embodiment, the piezoresistors R31, R32, R33 and R34 are corresponding to the first piezoresistor group according to claim 24 or 27, the piezoresistors R41 and R42 are corresponding to the second piezoresistor group according to claim 24 or 27, and the full bridge circuit C3 is corresponding to the first full bridge circuit according to claim 24 or 27. The half bridge circuit C4 is corresponding to a second half bridge circuit according to claim 24 or 27, the tilt angle calculating section responding to the first tilt angle calculating means according to claim 24 or the second tilt angle calculating means according to claim 24, and the calculation by the tilt angle calculating section is corresponding to the first tilt angle calculating step according to claim 27 or the second tilt angle calculating step according to claim 27.

(Twelfth Embodiment)

Next, a twelfth embodiment of the present invention will be described by referring to the drawings. Figures 62, 63A and 63B, 64, 65A and 65B, 66A and 66B, 67A and 67B, 68A and 68B, and 69A and 69B are the drawings showing the twelfth embodiment of the tilt sensor and method of measuring the tilt angle according to the present invention.

This embodiment applies the tilt sensor and method of measuring the tilt angle to the case of detecting tilt angles $\eta$ and $\phi$ in different directions with a plurality of piezoresistors as shown in Figure 62. Differences from the tenth embodiment are the number and the positions of arrangement of the piezoresistors. Hereinafter, only the differences from the tenth embodiment will be described, and redundant portions will be given the same symbols and a description thereof will be omitted.

Figure 62 is a plan view showing the configuration of the tilt sensor according to the twelfth embodiment of the present invention.

In Figure 62, the beamportion 102c has the piezoresistors R51, R52, R53, and R54 formed thereon.

The piezoresistors R51 and R54 are arranged in the positions symmetric with respect to the center line A1 to A1. The piezoresistors R52 and R53 are arranged in the positions symmetric with respect to the center line A1 to A1, which are the same positions as the piezoresistors R51 and R54 in the lateral direction of the silicon substrate 102 and closer to the weight member 104 than the piezoresistors R51 and R54.

Thus, it is possible to support the silicon substrate 102 having the piezoresistors R51, R52, R53 and R54 formed therein in the state capable of the deflection and torsion without selectively etching the backside of the substrate 102. And it is possible to easily increase the specific gravity of the weight member 104 while keeping the consistency with an existing flip chip mounting technology so as to reduce the weight member 104.

For this reason, it is possible to simplify the configuration and manufacturing process of the tilt sensor, miniaturize the tilt sensor and reduce the costs thereof and also improve resistance to an impact.

Figure 63A is a circuit diagram showing the schematic configuration of piezoresistors R51, R52, R53 and R54, and Figure 63B is a circuit diagram showing another schematic configuration of piezoresistors R51, R52, R53 and R54.

In Figure 63A, the piezoresistors R51, R52, R53 and R54 constitute a full bridge circuit C5. The full bridge circuit C5 connects the piezoresistors R51 to the piezoresistors R53 in series by connecting one end of the piezoresistors R51 to one end of the piezoresistors R53, and connects the piezoresistors R52 to the piezoresistors R54 in series by connecting one end of the piezoresistors R52 to one end of the piezoresistors R54. It also connects the other end of the piezoresistors R51 and the other end of the piezoresistors R54 to the plus potential side of the power supply Vi, and connects the other end of the piezoresistors R52 and the other end of the piezoresistors R53 to the minus potential side of the power supply Vi. Here, the potential difference between one end of the piezoresistors R51 (R53) and one end of the piezoresistors R52 (R54) is an output voltage Vo5 of the full bridge circuit C5.

In Figure 63B, the piezoresistors R51, R52, R53 and R54 constitute a full bridge circuit C6 of which connections are different from the full bridge circuit C5. The full bridge circuit C6 connects the piezoresistors R51 to the piezoresistors R53 in series by connecting one end of the piezoresistors R51 to one end of the piezoresistors R53, and it connects the piezoresistors R52 to the piezoresistors R54 in series by connecting one end of the piezoresistors R52 to one end of the piezoresistors R54. And it also connects the other end of the piezoresistors R51 and the other end of the piezoresistors R52 to the plus potential side of the power supply Vi, and connects the other end of the piezoresistors R53 and the other end of the piezoresistors R54 to the minus potential side of the power supply Vi. Here, the potential difference between one end of the piezoresistor R51 (R53) and one end of the piezoresistor R52 (R54) is an output voltage Vo6 of the full bridge circuit C6. The full bridge circuit C6 is constituted by changing over the connections of the full bridge circuit C5 by switching and so on.

Next, the case of measuring the tilt angles $\phi$ and $\eta$ of the tilt sensor will be described.

The rates of change of resistance $\beta51$, $\beta52$, $\beta53$, and $\beta54$ of the piezoresistors R51, R52, R53 and R54 can be represented by the following formulas (34) to (37). The following formulas (34) to (37) can be derived as in the tenth embodiment by using the formulas (1) to (7).

$$\text{Rate of change of resistance } \beta51 \text{ of R51} = A5\cos\phi\cos\eta + B5\sin\eta \tag{34}$$

$$\text{Rate of change of resistance } \beta52 \text{ of R52} = C5\cos\phi\cos\eta + D5\sin\eta \tag{35}$$

$$\text{Rate of change of resistance } \beta53 \text{ of R53} = C5\cos\phi\cos\eta - D5\sin\eta \tag{36}$$

$$\text{Rate of change of resistance } \beta54 \text{ of R54} = A5\cos\phi\cos\eta - B5\sin\eta \tag{37}$$

A5, B5, C5 and D5 are the proportionality constants in the formulas (34) to (37).

Furthermore, in the case where all the values of the piezoresistors R51, R52, R53 and R54 in $\sigma \times 1 = \sigma \times 2 = 0$ are equal, the output voltage Vo5 of the full bridge circuit C5 and output voltage Vo6 of the full bridge circuit C6 can be approximately represented by the following formulas (38) and (39).

$$Vo5 = E5\sin\eta \tag{38}$$

$$Vo6 = E6\cos\phi\sin\eta \tag{39}$$

E5 and E6 in the formulas (38) and (39) can be represented by the following formulas (40) and (41).

$$E5 = -\frac{B5 + D5}{2} \times Vi \tag{40}$$

$$E6 = -\frac{A5 - C5}{2} \times Vi \tag{41}$$

More specifically, Vo5 and Vo6 are the values proportional to $\sin\eta$ and $\cos\phi\cos\eta$ respectively. Therefore, the tilt angle calculating section can calculate the tilt angles $\phi$ and $\eta$ as in the tenth embodiment.

(Example)

Next, an example of this embodiment will be described.

Figure 64 is a diagram showing the size conditions of the silicon substrate 102 and piezoresistors.

In Figure 64, the length of the end 102a in the longitudinal direction (lateral direction of the silicon substrate 102) is 800 ($\mu$m), and the length of the end 102a in the lateral direction (longitudinal direction of the silicon substrate 102) is 200 ($\mu$m). And the length of the beam portion 102c in the longitudinal direction (longitudinal direction of the silicon substrate 102) is 800 ($\mu$m), and the length of the beam portion 102c in the lateral direction (lateral direction of the silicon substrate 102) is 200 ($\mu$m). The thickness of the silicon substrate 102 is 20 ($\mu$m). The length of the weight member 104 in the longitudinal direction (lateral direction of the silicon substrate 102) is 600 ($\mu$m), and the length of the weight member 104 in the lateral direction (longitudinal direction of the silicon substrate 102) is 500 ($\mu$m). The thickness of the weight member 104 is 30 ($\mu$m). The material of the weight member 104 is gold.

The piezoresistors R51 and R54 are arranged 50 ($\mu$m) away from the end 102a in the longitudinal direction of the silicon substrate 102, and the piezoresistors R52 and R53 are arranged 200 ($\mu$m) away from the piezoresistors R51 and R54 in the longitudinal direction of the silicon substrate 102. The piezoresistors R51 and R52 are arranged 160 ($\mu$m) away from the piezoresistors R53 and R54 in the lateral direction of the silicon substrate 102.

The length, width, surface high impurity concentration and diffusion depth of the piezoresistors R51, R52, R53 and R54 are 50 ($\mu$m), 10 ($\mu$m), 1018 (cm3) and 0.45 ($\mu$m) respectively.

Figure 65A is a circuit diagram showing the schematic configuration of the piezoresistors R51, R52, R53 and R54, and Figure 65B is a circuit diagram showing another schematic configuration of the piezoresistors R51, R52, R53 and R54.

The schematic configurations are the same as those in Figures 63A and 63B. However, the supply voltage Vi is set at 5 (V) for both the full bridge circuits C5 and C6.

Figure 66A is a graph showing the change in the output voltage Vo5 when changing the tilt angle $\eta$ while keeping the tilt angle $\phi$ fixed, and Figure 66B is a graph showing the change in the output voltage Vo5 when changing the tilt angle $\phi$ while keeping the tilt angle $\eta$ fixed.

When the tilt sensor is inclined on y axis by fixing it at the tilt angle $\phi = 0$, the output voltage Vo5 is almost proportional to $\sin\eta$ as shown in Figure 66A. When the tilt sensor is inclined on x axis by fixing it at the tilt angle $\eta = 0$, the output voltage Vo5 is almost zero irrespective of the increase and decrease in the tilt angle $\phi$ as shown in Figure 66B.

Figure 67A is a graph showing the change in the output voltage Vo6 when changing the tilt angle $\eta$ while keeping the tilt angle $\phi$ fixed, and Figure 67B is a graph showing the change in the output voltage Vo6 when changing the tilt angle $\phi$ while keeping the tilt angle $\eta$ fixed.

When the tilt sensor is inclined on y axis by fixing it at the tilt angle $\phi = 0$, the output voltage Vo6 is almost proportional to $\cos\eta$ as shown in Figure 67A. When the tilt sensor is inclined on x axis by fixing it at the tilt angle $\eta = 0$, the output voltage Vo6 is almost proportional to $\cos\phi$ as shown in Figure 67B.

Figure 68A is a graph showing the change in the output voltage Vo5 as to each material when changing the tilt angle $\eta$ while keeping the tilt angle $\phi$ fixed in the case of changing the materials of a weight member 104, and Figure 68B is a graph showing the change in the output voltage Vo5 as to each material when changing the tilt angle $\phi$ while keeping the tilt angle $\eta$ fixed in the case of changing the materials of the weight member 104.

When the tilt sensor is inclined on y axis by fixing it at the tilt angle $\phi = 0$, the output voltage Vo5 is almost proportional to $\sin\eta$ shown in Figure 68A. When the weight member 104 is not provided, there is almost no change. In the case of constituting the weight member 104 with Si, the change is a little more significant than the case of providing no weight member 104. In the case of constituting the weight member 104 with solder (Sn 63%, Pb 37%), the change is a little more significant than the case of constituting it with Si. In the case of constituting the weight member 104 with Au, the change is a little more significant than the case of constituting it with the solder. Figure 66A shows the case of constituting the weight member 104 with Au.

When the tilt sensor is inclined on x axis by fixing it at the tilt angle $\eta = 0$, the output voltage Vo5 is almost zero irrespective of the increase and decrease in the tilt angle $\phi$ and the material as shown in Figure 68B.

Figure 69A is a graph showing the change in the output voltage Vo6 as to each material when changing the tilt angle η while keeping the tilt angle φ fixed in the case of changing the materials of the weight member 104, and Figure 69B is a graph showing the change in the output voltage Vo6 in each material when changing the tilt angle φ while keeping the tilt angle η fixed in the case of changing the materials of the weight member 104.

When the tilt sensor is inclined on y axis by fixing it at the tilt angle φ = 0, the output voltage Vo6 is almost proportional to cosη as shown in Figure 69A. When the weight member 104 is not provided, there is almost no change. In the case of constituting the weight member 104 with Si, the change is a little more significant than the case of providing no weight member 104. In the case of constituting the weight member 104 with the solder (Sn 63%, Pb 37%), the change is a little more significant than the case of constituting it with Si. In the case of constituting the weight member 104 with Au, the change is a little more significant than the case of constituting it with the solder. Figure 67A shows the case of constituting the weight member 104 with Au.

When the tilt sensor is inclined on x axis by fixing it at the tilt angle η = 0, the output voltage Vo6 is almost proportional to cosφ as shown in Figure 69B. The change as to each material is the same as Figure 69A. Thus, according to this embodiment, the silicon substrate 102 having the piezoresistors formed on its surface, the support member 101b for supporting the silicon substrate 102 at one end of the silicon substrate 102, the weight member 104 arranged at the end 102b of the silicon substrate 102, and the tilt angle calculating section for calculating the tilt angles φ and η are provided. The piezoresistors R51 and R54 and the piezoresistors R52 and R53 are arranged in the positions symmetric with respect to the center line A1 to A1 so as to constitute the full bridge circuit C5 with R51, R52, R53 and R54 and constitute the full bridge circuit C6 of which connections are different from the full bridge circuit C5 with the piezoresistors R51, R52, R53 and R54. And the tilt angle calculating section calculates the tilt angle η based on the output voltage Vo3 of the full bridge circuit C3 and calculates the tilt angle φ based on the output voltage Vo4 of the half bridge circuit C4 and the calculated tilt angle η.

Thus, it is possible, by using the metal bump of a high specific gravity as the weight member 104, to easily have the consistency with an existing flip chip mounting technology while miniaturizing the weight member 104 so as to miniaturize the tilt sensor and reduce the costs thereof and also improve resistance to an impact. And in the case of using the silicon substrate 102 of uniform thickness, it is possible to detect the tilt angles in different directions η and φ with one tilt sensor. As the bridge circuits C5 and C6 are constituted by a plurality of piezoresistors, it is possible to relatively improve the detection accuracy of the tilt angles η and φ. It is also possible, compared with the tenth embodiment, to reduce the number of the piezoresistors necessary for the detection. It is also possible, compared with the eleventh embodiment, to improve the detection accuracy of the tilt angles η and φ because no offset is included in the output voltage Vo6.

According to the twelfth embodiment, the piezoresistors R51, R52, R53 and R54 are corresponding to the first piezoresistor group according to claim 25 or 28, the full bridge circuit C5 is corresponding to the first full bridge circuit according to claim 25 or 28, and the full bridge circuit C6 is corresponding to the second full bridge circuit according to claim 25 or 28. The tilt angle calculating section is corresponding to the first tilt angle calculating means according to claim 25 or the second tilt angle calculating means according to claim 25, and the calculation by the tilt angle calculating section is corresponding to the first tilt angle calculating step according to claim 28 or the second tilt angle calculating step according to claim 28.

(Thirteenth Embodiment)

Next, a thirteenth embodiment of the present invention will be described by referring to the drawings. Figure 70 is a drawing showing the thirteenth embodiment of an azimuth sensor according to the present invention.

Figure 70 is a block diagram showing the configuration of the azimuth sensor according to the present invention.

In Figure 70, the azimuth sensor has a three-axis magnetic sensor 101, a magnetic sensor driving power supply 102, a chopper section 103, a magnetic sensor amplifier 104, a magnetic sensor AD converter 105, a sensitivity and offset correcting section 106, a tilt sensor 107, a tilt sensor amplifier 108, a tilt sensor AD converter 109, a tilt angle correcting section 110 and an azimuth calculating section 111 provided thereon.

The three-axis magnetic sensor 101 has an x-axis geomagnetic sensor HEx for detecting a geomagnetic component in x-axis direction wherein x-axis is in the vertical direction of the azimuth sensor, a y-axis geomagnetic sensor HEy for detecting a geomagnetic component in y-axis direction wherein y-axis is in the horizontal direction of the azimuth sensor, and a z-axis geomagnetic sensor HEz for detecting a geomagnetic component in z-axis direction wherein z-axis is in the thickness direction of the azimuth sensor provided thereon.

The chopper section 103 is intended to switch among the terminals for driving the x-axis geomagnetic sensor HEx, y-axis geomagnetic sensor HEy and z-axis geomagnetic sensor HEz respectively. It applies a drive voltage outputted from the magnetic sensor driving power supply 102 to the x-axis geomagnetic sensor HEx, y-axis geomagnetic sensor HEy and z-axis geomagnetic sensor HEz respectively, and outputs sensor signals outputted from the x-axis geomagnetic sensor HEx, y-axis geomagnetic sensor HEy and z-axis geomagnetic sensor HEz time-dividedly to magnetic sensor amplifier 104.

The magnetic sensor AD converter 105 AD-converts the sensor signals from the x-axis geomagnetic sensor HEx, y-axis geomagnetic sensor HEy and z-axis geomagnetic sensor HEz so as to output converted digital data to the sensitivity and offset correcting section 106 as x-axis geomagnetic measurement data, y-axis geomagnetic measurement data and z-axis geomagnetic measurement data respectively.

The sensitivity and offset correcting section 106 calculates offset and sensitivity correction coefficients of the x-axis geomagnetic sensor HEx, y-axis geomagnetic sensor HEy and z-axis geomagnetic sensor HEz based on the x-axis geomagnetic measurement data, y-axis geomagnetic measurement data and z-axis geomagnetic measurement data from the magnetic sensor A/D converter 105. And it corrects the x-axis geomagnetic measurement data, y-axis geomagnetic measurement data and z-axis geomagnetic measurement data based on the calculated offset and sensitivity correction coefficients.

The tilt sensor 107 detects the tilt angle $\eta$ of which rotation axis is x axis and the tilt angle $\phi$ of which rotation axis is y axis, and outputs the outputted sensor signals to the tilt sensor amplifier 108.

The tilt sensor AD converter 109 AD-converts the sensor signals from the tilt sensor 107, and outputs converted digital data to the tilt angle correcting section 110 as tilt angle $\eta$ measurement data and tilt angle $\phi$ measurement data.

The tilt angle correcting section 110 corrects the x-axis geomagnetic measurement data, y-axis geomagnetic measurement data and z-axis geomagnetic measurement data from the sensitivity and offset correcting section 106 based on the tilt angle $\eta$ measurement data and tilt angle $\phi$ measurement data from the tilt sensor AD converter 109.

The azimuth calculating section 111 calculates the azimuth based on the x-axis geomagnetic measurement data, y-axis geomagnetic measurement data and z-axis geomagnetic measurement data from the tilt angle correcting section 110.

Thus, it is possible to measure the azimuth relatively correctly without putting the azimuth sensor on the level surface while curbing the increase in the size and costs of the azimuth sensor.

According to the thirteenth embodiment, x-axis direction geomagnetic components, y-axis direction geomagnetic components and z-axis direction geomagnetic components are corresponding to the geomagnetic components according to claim 29, the three-axis magnetic sensor 101 is corresponding to earth magnetism detecting means according to claim 29, the x-axis geomagnetic measurement data, y-axis geomagnetic measurement data and z-axis geomagnetic measurement data are corresponding to geomagnetic data according to claim 29, the tilt sensor 107 is corresponding to the tilt sensor according to claim 29, the tilt angle $\eta$ measurement data and tilt angle $\phi$ measurement data are corresponding to the tilt angle data according to claim 29, and the tilt angle correcting section 110 and azimuth calculating section 111 are corresponding to the azimuth calculating means according to claim 29.

(Fourteenth Embodiment)

Next, a fourteenth embodiment of the present invention will be described.

A cellular phone according to the present invention is the one having the azimuth sensor according to the thirteenth embodiment built therein.

Thus, it is possible to measure the azimuth comparatively correctly without keeping the cellular phone in a horizontal position but in a position taken by the user for normal use while curbing the increase in the size and costs of the cellular phone.

The first to twelfth embodiments described the methods of forming the piezoresistors on the silicon substrate. It is also possible, however, to use a Ge substrate or an InSb substrate.

According to the first to twelfth embodiments, it is also possible to use the tilt sensor as a motion sensor for an electronic pet, a robot or a game controller, a screen controller by means of the tilt angle for a portable terminal such as a game console, a portable terminal navigation system and a monitoring apparatus for the tilt angle, vibration, oscillation and so on.

The first to twelfth embodiments described the tilt sensor. It is also possible, however, to apply them to an acceleration sensor.

The eighth and ninth embodiments described the solder bump as an example of the metallic weight member. It is also possible, however, to use the metal bump.

The eighth and ninth embodiments described an example of a single axis tilt sensor. It is also possible, however, to apply them to the dual axis tilt sensor.

The tenth embodiment regarded the direction of the piezoresistors R11, R12, R13 and R14 as the longitudinal direction of the silicon substrate 102. However, it is not limited thereto, but the direction of pairs of the piezoresistors may also be regarded as the lateral direction of the silicon substrate 102 when the pairs are in the same direction.

Figures 71A and 71B are diagrams showing the layout of the piezoresistors R11, R12, R13 and R14.

In Figure 71A, the piezoresistors R11 and R14 are arranged facing the longitudinal direction of the silicon substrate 102, and the piezoresistors R12 and R13 are arranged facing the lateral direction of the silicon substrate 102.

In Figure 71B, all the piezoresistors R11, R12, R13 and R14 are arranged facing the lateral direction of the silicon substrate 102.

The tenth embodiment regarded the direction of the piezoresistors R21, R22, R23 and R24 as the longitudinal direction of the silicon substrate 102. However, it is not limited thereto, but the direction of the pairs of the piezoresistors may also be regarded as the lateral direction of the silicon substrate 102 when the pairs are in the same direction.

Figures 72A and 72B are diagrams showing the layout of the piezoresistors R21, R22, R23 and R24.

In Figure 72A, the piezoresistors R21 and R24 are arranged facing the longitudinal direction of the silicon substrate 102, and the piezoresistors R22 and R23 are arranged facing the lateral direction of the silicon substrate 102.

In Figure 72B, all the piezoresistors R21, R22, R23 and R24 are arranged facing the lateral direction of the silicon substrate 102.

The eleventh embodiment regarded the direction of the piezoresistors R31, R32, R33 and R34 as the longitudinal direction of the silicon substrate 102. However, it is not limited thereto, but the direction of the pairs of the piezoresistors may also be regarded as the lateral direction of the silicon substrate 102 when the pairs are in the same direction.

Figures 73A and 73B are diagrams showing the layout of the piezoresistors R31, R32, R33 and R34.

In Figure 73A, the piezoresistors R31 and R34 are arranged facing the longitudinal direction of the silicon substrate 102, and R32 and R33 are arranged facing the lateral direction of the silicon substrate 102.

In Figure 73B, all the piezoresistors R31, R32, R33 and R34 are arranged facing the lateral direction of the silicon substrate 102.

The eleventh embodiment regarded the direction of the piezoresistors R41 and R42 as the longitudinal direction of the silicon substrate 102. However, it is not limited thereto, but the direction of the pairs of the piezoresistors may also be regarded as the lateral direction of the silicon substrate 102 when the pairs are in the same direction.

Figure 74 is a diagram showing the layout of the piezoresistors R41 and R42.

In Figure 74, both the piezoresistors R41 and R42 are arranged facing the lateral direction of the silicon substrate 102.

The twelfth embodiment regarded the direction of the piezoresistors R51, R52, R53 and R54 as the longitudinal direction of the silicon substrate 102. However, it is not limited thereto, but the direction of the pairs of the piezoresistors may also be regarded as the lateral direction of the silicon substrate 102 when the pairs are in the same direction.

Figures 75A and 75B are diagrams showing the layout of the piezoresistors R51, R52, R53 and R54.

In Figure 75A, all the piezoresistors R51, R52, R53 and R54 are arranged facing the lateral direction of the silicon substrate 102.

In Figure 75B, the piezoresistors R51 and R54 are arranged facing the longitudinal direction of the silicon substrate 102, and the piezoresistors R52 and R53 are arranged facing the lateral direction of the silicon substrate 102.


Industrial Applicability


As described above, regarding the tilt sensor according to claims 1 to 10 and the manufacturing method of the tilt sensor according to claims 11 to 16 of the present invention, it is no longer necessary to perform the selective etching using the photolithographic technology so as to form the deflectable portion. Therefore, it becomes possible, as the effects thereof, to simplify the configuration and manufacturing process of the tilt sensor, reduce the costs of the tilt sensor and improve resistance to an impact.

Regarding the tilt sensor according to claims 17 to 19 and the manufacturing method of the tilt sensor according to claims 20 to 22 of the present invention, it is no longer necessary to selectively etch the backside of the substrate so as to form the deflectable portion. And it is possible, by using the metal bump of a high specific gravity as the weight member, to easily have the consistency with an existing flip chipmounting technology while miniaturizing the weight member. Therefore, it becomes possible, as the effects thereof, to miniaturize the tilt sensor and reduce the costs thereof and also improve its resistance to an impact.

Regarding the tilt sensor according to claim 23 of the present invention, it is no longer necessary to selectively etch the backside of the substrate so as to form the deflectable portion. And it is possible, by using the metal bump of a high specific gravity as the weight member, to easily have the consistency with an existing flip chip mounting technology while miniaturizing the weight member. Therefore, it becomes possible, as the effects thereof, to miniaturize the tilt sensor and reduce the costs thereof and also improve resistance to an impact. And it also becomes possible, as the effects thereof, to detect a dual axis tilt angle with one tilt sensor even in the case of using a deflectable plate of uniform thickness. In addition, it further becomes possible, as the effects thereof, to relatively improve the detection accuracy of the dual axis tilt angle because the bridge circuits are constituted by a plurality of piezoresistors.

Regarding the tilt sensor according to claim 24 of the present invention, it is no longer necessary to selectively etch the backside of the substrate so as to form the deflectable portion. And it is possible, by using the metal bump of a high specific gravity as the weight member, to easily have the consistency with an existing flip chip mounting technology while miniaturizing the weight member. Therefore, it becomes possible, as the effects thereof, to miniaturize the tilt sensor and reduce the costs thereof and also improve resistance to an impact. And it also becomes possible, as the effects thereof, to detect the dual axis tilt angle with one tilt sensor even in the case of using the deflectable plate of uniform thickness. In addition, it further becomes possible, as the effects thereof, to relatively improve the detection accuracy of the dual axis tilt angle because the bridge circuits are constituted by a plurality of piezoresistors.

Furthermore, regarding the tilt sensor according to claim 25 of the present invention, it is no longer necessary to selectively etch the backside of the substrate so as to form the deflectable portion. And it is possible, by using the metal bump of a high specific gravity as the weight member, to easily have the consistency with an existing flip chip mounting technology while miniaturizing the weight member. Therefore, it becomes possible, as the effects thereof, to miniaturize the tilt sensor and reduce the costs thereof and also improve resistance to an impact. And it also becomes possible, as the effects thereof, to detect the dual axis tilt angle with one tilt sensor even in the case of using a deflectable plate of uniform thickness. In addition, it further becomes possible, as the effects thereof, to relatively improve the detection accuracy of the dual axis tilt angle because the bridge circuits are constituted by a plurality of piezoresistors.

Regarding the method of measuring the tilt angle according to claim 26 of the present invention, it is possible to have the same effects as the tilt sensor according to claim 23.

Regarding the method of measuring the tilt angle according to claim 27 of the present invention, it is possible to have the same effects as the tilt sensor according to claim 24.

Regarding the method of measuring the tilt angle according to claim 28 of the present invention, it is possible to have the same effects as the tilt sensor according to claim 25.

Regarding the azimuth sensor according to claim 29 of the present invention, it is possible to measure the azimuth comparatively without placing the azimuth sensor on a horizontal plane while curbing the increase in the size and the costs of the azimuth sensor by correcting the tilt angle of the geomagnetic data with the tilt sensor according to claims 1 to 10, claims 17 to 19 or claims 23 to 25.

Regarding the cellular phone according to claim 30 of the present invention, it is possible, by using the azimuth sensor according to claim 29, to measure the azimuth comparatively correctly without keeping the cellular phone in a horizontal position but in a position taken by the user for normal use while curbing increase in the size and the costs of the cellular phone.

**Claims**

**1.** A tilt sensor comprising:

a substrate having piezoresistors formed on its surface and having its entire backside uniformly ground to deflectable thickness; and
a support member for supporting said substrate at one end thereof at least.

**2.** The tilt sensor according to claim 1, further comprising a weight member arranged in a deformable area of said surface having the piezoresistors formed thereon.

**3.** The tilt sensor according to claim 1 or 2, **characterized in that** said piezoresistors are two-dimensionally arranged on the surface of said substrate.

**4.** The tilt sensor according to claim 3, **characterized in that** said piezoresistors comprise piezoresistors arranged on the surface of said substrate to detect an amount of deflection of said substrate and piezoresistors arranged on the surface of said substrate to detect an amount of torsion of said substrate.

**5.** A tilt sensor comprising:

a hexahedral rectangular elastic body having a deformable free surface;
piezoresistors having at least two or more of them provided in a longitudinal direction on a same surface of said hexahedral rectangular elastic body with at least one of them arranged on said free surface;
a support member for supporting said hexahedral rectangular elastic body at both ends thereof in the longitudinal direction; and
a weight member provided approximately at the center in the longitudinal direction of a deformable area of said hexahedral rectangular elastic body.

6. A tilt sensor comprising:

   a hexahedral rectangular elastic body having a deformable free surface;
   piezoresistors having at least two or more of them provided in a longitudinal direction on a same surface of saidhexahedral rectangular elastic body with at least one of them arranged on said free surface;
   a support member for supporting said hexahedral rectangular elastic body at one end thereof in the longitudinal direction; and
   a weight member provided at the other end in the longitudinal direction of said hexahedral rectangular elastic body.

7. The tilt sensor according to claim 5 or 6, **characterized in that** at least one of said support member and said weight member is equal to said hexahedral rectangular elastic body in terms of at least one of its length and width.

8. The tilt sensor according to any one of claims 5 to 7, **characterized in that** said hexahedral rectangular elastic body is a silicon substrate and said piezoresistors are composed of an impurity diffused layer formed on said silicon substrate.

9. The tilt sensor according to claim 8, **characterized in that**:

   said hexahedral rectangular elastic body is a silicon substrate; and
   said support member comprises:

      a glass substrate having a concave portion formed thereon and composed of a material capable of anodic bonding to said silicon substrate; and
      an implant member implanted in said concave portion to prevent anodic bonding to said silicon substrate.

10. The tilt sensor according to any one of claims 5 to 9, comprising the piezoresistors arranged to detect the amount of deflection of said hexahedral rectangular elastic body and the piezoresistors arranged to detect the amount of torsion of said hexahedral rectangular elastic body on the same plane of said hexahedral rectangular elastic body.

11. A method of manufacturing a tilt sensor comprising the steps of:

   forming piezoresistors at two or more places on a surface of a wafer;
   uniformly grinding an entire backside of said wafer;
   bonding a support substrate having a concave portion formed therein to the backside of said wafer so that an area having saidpiezoresistors formed thereon is inside the concave portion and adjacent to the edge of the concave portion; and
   simultaneously cutting said wafer and said support substrate into chips so that a deformable area on a surface having said piezoresistors formed thereon is supported on both sides of said concave portion.

12. The method of manufacturing a tilt sensor according to claim 11 further comprising the step of:

   bonding a weight substrate having a convex portion formed therein to the surface of said wafer so as to arrange said convex portion approximately at the center of said deformable area on the surface having saidpiezoresistors formed thereon, wherein:

      said weight substrate, said wafer and said support substrate are simultaneously cut into chips.

13. A method of manufacturing a tilt sensor comprising the steps of:

   forming piezoresistors at two or more places on a surface of a wafer;
   uniformly grinding an entire backside of said wafer;
   bonding a support substrate having a concave portion formed therein to a backside of said wafer so that an area having saidpiezoresistors formed thereon is inside the concave portion and adjacent to the edge of the concave portion;
   arranging a base approximately at the center of a deformable area on a surface having said piezoresistors formed thereon;

simultaneously cutting the wafer having said base arranged thereon and said support substrate into chips so that the deformable area on the surface having said piezoresistors formed thereon is supported on both sides of said concave portion; and

arranging weight members on said base.

**14.** A method of manufacturing a tilt sensor comprising the steps of:

forming piezoresistors at two or more places on a surface of a wafer;

uniformly grinding an entire backside of said wafer;

bonding a support substrate having a concave portion formed therein to the backside of said wafer so that one side of said concave portion is positioned adjacent to the edge of an area having said piezoresistors formed thereon and inside said concave portion and another side of said concave portion overlaps with a scribe line of said wafer;

arranging a base in a deformable area on a surface having said piezoresistors formed thereon;

simultaneously cutting the wafer having said base arranged thereon and said support substrate into chips so that the surface having said piezoresistors formed thereon is supported on one side of said concave portion; and

arranging weight members on said base.

**15.** A method of manufacturing a tilt sensor comprising the steps of:

forming piezoresistors at two or more places on a surface of a wafer;

uniformly grinding an entire backside of said wafer;

bonding a support substrate having a concave portion formed therein to the backside of said wafer so that an area having said piezoresistors formed thereon is inside the concave portion and adjacent to the edge of the concave portion;

bonding a weight substrate having concavity and convexity formed thereon to the surface of said wafer so that the convex portion overlaps with the scribe line at an interval of two chips;

cutting off a portion of a concave portion of said weight substrate in parallel to said scribe line; and

simultaneously cutting said weight substrate, said wafer and said support substrate into chips so that one end of a surface having said piezoresistors formed thereon is supported on one side of the concave portion of said support substrate and the convex portion of said weight substrate is arranged on the surface having said piezoresistors formed thereon.

**16.** The method of manufacturing a tilt sensor according to any one of claims 11 to 15, **characterized in that** said grinding is polishing or etching or a combination of them.

**17.** A tilt sensor comprising:

a deflectable plate having piezoresistors formed on its surface;

a support member for supporting said deflectable plate at one end of said deflectable plate; and

a metallic weight member arranged in a deflectable area of said deflectable plate.

**18.** A tilt sensor comprising:

an SOI substrate having a silicon layer formed on an insulating layer;

a cavity formed in the insulating layer under said silicon layer;

piezoresistors formed in said silicon layer on said cavity; and

a metallic weight member arranged on said silicon layer on said cavity.

**19.** The tilt sensor according to claim 17 or 18, **characterized in that** said deflectable plate or said silicon layer is constricted in an area having said piezoresistors formed therein.

**20.** A method of manufacturing a tilt sensor comprising steps of:

forming piezoresistors at two or more places in each chip area on a surface of a wafer;

forming a pad in each chip area on the surface of said wafer;

uniformly grinding an entire backside of the wafer having said piezoresistors and pads formed thereon;

bonding a support substrate having a concave portion formed therein to the backside of said wafer so that an area having said piezoresistors formed thereon is positioned adjacent to the edge of said concave portion and said pad is positioned inside the concave portion;

forming a metallic weight member on each pad of said wafer bonded to said support substrate;

forming an opening on said wafer so that the area having said piezoresistors formed therein is constricted; and

cutting the wafer having said opening formed thereon into chips.

**21.** A method of manufacturing a tilt sensor comprising the steps of:

forming piezoresistors at two or more places in each chip area on a silicon layer formed on a silicon wafer by the intermediary of a silicon dioxide layer;

forming a pad in each chip area on said silicon layer;

forming a metallic weight member on each pad formed on said silicon layer;

forming an opening on said silicon layer so that an area having said piezoresistors formed therein is constricted;

etching a portion of said silicon dioxide layer via the opening formed on said silicon layer and thereby removing the silicon dioxide layer under the area having saidpiezoresistors formed therein and the area having said metallic weight member formed therein; and

cutting said wafer having the silicon dioxide layer removed therefrom into chips.

**22.** The method of manufacturing a tilt sensor according to claim 20 or 21, **characterized in that** said metallic weight member is formed by electroplating.

**23.** A tilt sensor comprising:

a deflectable plate having piezoresistors formed on its surface;

a support member for supporting said deflectable plate at one end of said deflectable plate; and

a weight member arranged in a deflectable area of said deflectable plate, in which:

said piezoresistors have:

a first piezoresistor group including two pairs of piezoresistors arranged in the positions inside the deflectable area of said deflectable plate and symmetric with respect to a center line going through a middle point of width of said deflectable plate; and

a second piezoresistor group including two pairs of piezoresistors arranged in the positions inside the deflectable area of said deflectable plate, symmetric with respect to said center line and different from the positions of the piezoresistors in said first piezoresistor group, and constitute a first full bridge circuit with said first piezoresistor group and a second full bridge circuit with said second piezoresistor group, and further comprising:

a first tilt angle calculating means for calculating a tilt angle around the axis along the longitudinal direction of said deflectable plate based on the output of said first full bridge circuit; and

a second tilt angle calculating means for calculating a tilt angle around the axis along the lateral direction of said deflectable plate based on the output of said second full bridge circuit and the tilt angle calculated by said first tilt angle calculating means.

**24.** A tilt sensor comprising:

a deflectable plate having piezoresistors formed on its surface;

a support member for supporting said deflectable plate at one end of said deflectable plate; and

a weight member arranged in a deflectable area of said deflectable plate, in which:

said piezoresistors have:

a first piezoresistor group including two pairs of piezoresistors arranged in the positions inside the deflectable area of said deflectable plate and symmetric with respect to a center line going through a middle point of width of said deflectable plate; and

a second piezoresistor group including a plurality of piezoresistors arranged in the positions inside the deflectable area of said deflectable plate and on said center line, and
constitute a first full bridge circuit with said first piezoresistor group and a second half bridge circuit with said second piezoresistor group, and further comprising:

a first tilt angle calculating means for calculating a tilt angle around the axis along the longitudinal direction of said deflectable plate based on the output of said first full bridge circuit; and
a second tilt angle calculating means for calculating a tilt angle around the axis along the lateral direction of said deflectable plate based on the output of said second half bridge circuit and the tilt angle calculated by said first tilt angle calculating means.

**25.** A tilt sensor comprising:

a deflectable plate having piezoresistors formed on its surface;
a support member for supporting said deflectable plate at one end of said deflectable plate; and
a weight member arranged in a deflectable area of said deflectable plate, in which:

said piezoresistors have a first piezoresistor group including two pairs of piezoresistors arranged in the positions inside the deflectable area of said deflectable plate and symmetric with respect to a center line going through a middle point of width of said deflectable plate, and
constitute a first full bridge circuit with said first piezoresistor group and a second full bridge circuit with said first piezoresistor group and different connection from said first full bridge circuit, and further comprising:

a first tilt angle calculating means for calculating a tilt angle around the axis along the a longitudinal direction of said deflectable plate based on the output of said first full bridge circuit; and
a second tilt angle calculating means for calculating a tilt angle around the axis along the lateral direction of said deflectable plate based on the output of said second full bridge circuit and the tilt angle calculated by said first tilt angle calculating means.

**26.** A method of measuring a tilt angle using a tilt sensor comprising:

a deflectable plate having piezoresistors formed on its surface;
a support member for supporting said deflectable plate at one end of said deflectable plate; and
a weight member arranged in a deflectable area of said deflectable plate, in which:

said piezoresistors have:

a first piezoresistor group including two pairs of piezoresistors arranged in the positions inside the deflectable area of said deflectable plate and symmetric with respect to a center line going through a middle point of width of said deflectable plate; and
a second piezoresistor group including two pairs of piezoresistors arranged in the positions inside the deflectable area of said deflectable plate, symmetric with respect to said center line and different from the positions of the piezoresistors in said first piezoresistor group, and the method including:

a first bridge circuit output step of constituting a first full bridge circuit with said first piezoresistor group and outputting therefrom;
a second bridge circuit output step of constituting a second full bridge circuitwith said secondpiezoresistor group and outputting therefrom,
a first tilt angle calculating step of calculating a tilt angle around the axis along the longitudinal direction of said deflectable plate based on the output of said first full bridge circuit; and
a second tilt angle calculating step of calculating a tilt angle around the axis along the lateral direction of said deflectable plate based on the output of said second full bridge circuit and the tilt angle calculated in said first tilt angle calculating step.

**27.** A method of measuring a tilt angle using a tilt sensor comprising:

a deflectable plate having piezoresistors formed on its surface;
a support member for supporting said deflectable plate at one end of said deflectable plate; and

a weight member arranged in a deflectable area of said deflectable plate, in which:

said piezoresistors have:

a first piezoresistor group including two pairs of piezoresistors arranged in the positions inside the deflectable area of said deflectable plate and symmetric with respect to a center line going through a middle point of width of said deflectable plate; and
a second piezoresistor group including a plurality of piezoresistors arranged in the positions inside the deflectable area of said deflectable plate and on said center line, and the method including:

a first bridge circuit output step of constituting a first full bridge circuit with said first piezoresistor group and outputting therefrom; and
a second bridge circuit output step of constituting a second half bridge circuit with said second piezoresistor group and outputting therefrom;
a first tilt angle calculating step of calculating a tilt angle around the axis along the longitudinal direction of said deflectable plate based on the output of said first full bridge circuit; and
a second tilt angle calculating step of calculating a tilt angle around the axis along the lateral direction of said deflectable plate based on the output of said second hal f bridge circuit and the tilt angle calculated in said first tilt angle calculating step.

**28.** A method of measuring a tilt angle using a tilt sensor comprising:

a deflectable plate having piezoresistors formed on its surface;
a support member for supporting said deflectable plate at one end of said deflectable plate; and
a weight member arranged in a deflectable area of said deflectable plate, in which:

said piezoresistors have a first piezoresistors group including two pairs of piezoresistors arranged in the positions inside the deflectable area of said deflectable plate and symmetric with respect to a center line going through a middle point of width of said deflectable plate, and the method including:

a first bridge circuit output step of constituting a first full bridge circuit with said first piezoresistor group and outputting therefrom; and
a second bridge circuit output step of constituting a second full bridge circuit with said first piezoresistor group and different connection from said first full bridge circuit and outputting therefrom;
a first tilt angle calculating step of calculating a tilt angle around the axis along the longitudinal direction of said deflectable plate based on the output of said first full bridge circuit; and
a second tilt angle calculating step of calculating a tilt angle around the axis along the lateral direction of said deflectable plate basedon the output of said second full bridge circuit and the tilt angle calculated in said first tilt angle calculating step.

**29.** An azimuth sensor for detecting an azimuth, **characterized by** comprising:

the tilt sensor according to claims 1 to 10, claims 17 to 19 or claims 23 to 25; earth magnetism detecting means, at least biaxial, for detecting geomagnetic components in orthogonal directions; and
azimuth calculating means for calculating an azimuth based on tilt angle data obtained by the tilt sensor and geomagnetic data obtained by the earth magnetism detecting means.

**30.** A cellular phone comprising the azimuth sensor according to claim 29 built therein.

## F I G. 1 A

## F I G. 1 B

## F I G. 1 C

*F I G. 2 A*

*F I G. 2 B*

*F I G. 2 C*

*F I G. 2 D*

*F I G. 2 E*

## F I G. 3A

12  13  15
14
11
21a
21
22

## F I G. 3B

12  13  15
14
11
21a
21
22

## F I G. 3C

31
31a
14
11
21a
21
22

## F I G. 3D

31'
13  12
31a
14
11'
21a
21'
22

FIG. 4A

FIG. 4B

*F I G. 5 A*

*F I G. 5 B*

## F I G. 6 A

31′

12
13
31a
14
11′
21a
21′

## F I G. 6 B

31′

12
13
31a
14
11′
21a
21′
41

## F I G. 6 C

31′

12
31a

42a
13
14
11′
42b
21a
21′
41

FIG. 7A

FIG. 7B

FIG. 7C

FIG. 7D

FIG. 7E

FIG. 8A

51

FIG. 8B

52  53

51

FIG. 8C

52  53

54

51

FIG. 8D

52  53  55

54

51

FIG. 8E

52  53  55

54

51

EP 1 491 854 A1

F I G. 9A

F I G. 9B

F I G. 9C

F I G. 9D

52

$FIG. 10A$

$FIG. 10B$

## F I G. 1 1 A

## F I G. 1 1 B

## F I G. 1 1 C

*F I G. 1 2*

*F I G. 1 3 A*

*F I G. 1 3 B*

*F I G. 1 4 A*

111

*F I G. 1 4 B*

113  112

111

*F I G. 1 4 C*

113  112          114

111

*F I G. 1 4 D*

113  112          115
                  114

111

*F I G. 1 4 E*

113  112          115
                  114
                  111

## F I G. 1 5 A

## F I G. 1 5 B

## F I G. 1 5 C

## F I G. 1 5 D

FIG. 16A

FIG. 16B

FIG. 17A

FIG. 17B

## F I G. 1 8 A

## F I G. 1 8 B

## F I G. 1 8 C

## F I G. 1 8 D

## FIG. 19A

## FIG. 19B

*F I G. 2 0*

*F I G. 2 1*

## FIG. 22A

## FIG. 22B

## FIG. 22C

*F I G. 2 3*

*F I G. 2 4 A*

*F I G. 2 4 B*

EP 1 491 854 A1

FIG. 25

FIG. 26

## FIG. 27A

## FIG. 27B

*FIG. 28A*

$W = F_z$

*FIG. 28B*

$F_z$  $F_x$  $W$

*FIG. 28C*

*FIG. 2 9 A*

*FIG. 2 9 B*

*FIG. 3 0 A*

*FIG. 3 0 B*

*F I G. 3 1 A*

*F I G. 3 1 B*

*F I G. 3 1 C*

*F I G. 3 2 A*

*F I G. 3 2 B*

## F I G. 3 3 A

## F I G. 3 3 B

*F I G. 3 4 A*

*F I G. 3 4 B*

FIG. 35A

FIG. 35B

FIG. 36

# F I G. 3 7 A

12b    12a

~ 11

# F I G. 3 7 B

12b    12a

~ 13
~ 11

# F I G. 3 7 C

14    14a    12b    12a

~ 14
~ 13
~ 11

# F I G. 3 7 D

15

14

~ 14
~ 13
~ 11

12b    12a

## F I G. 3 8 A

## F I G. 3 8 B

## F I G. 3 8 C

*F I G. 3 9*

*F I G. 4 0 A*

*F I G. 4 0 B*

FIG. 41A

22

B2                    B2

FIG. 41B

B2                 B2

22                       T2
20                       T3

21

FIG. 42A

H21       22

P21

B3                      B3

P22                     W2

P23

R21    R22         23

FIG. 42B

P22    R21    R22        23

B3                      B3

                               22
                               20

                               21

L2

77

*F I G. 4 3 A*

*F I G. 4 3 B*

*F I G. 4 4 A*

*F I G. 4 4 B*

*F I G.  4 5 A*

*F I G.  4 5 B*

## FIG. 46A

## FIG. 46B

# F I G. 4 7 A

P21 H21
20
21
22

B8
25
27
P22

B8

26

P23
R21
R22
24

# F I G. 4 7 B

B8
25
P22
24
B8

27
R21
R22
22
23
26
21

20
20a

# F I G. 4 8

*F I G. 4 9 A*

*F I G. 4 9 B*

FIG. 50A

FIG. 50B

FIG. 51A

FIG. 51B

EP 1 491 854 A1

# FIG. 52

200 μm         800 μm         500 μm

104

102a

102c

R11   R12

R21   R22    60 μm

R24   R23    40 μm

R14   R13    60 μm

200 μm

800 μm

600 μm

150 μm    200 μm

n-TYPE Si
SURFACE : (100)PLANE
LONGITUDINAL DIRECTION :
<110>DIRECTION

WEIGHT(Au)   104

102a 102c

30 μm
20 μm

FIXING PORTION

102b

$FIG. 53A$

$FIG. 53B$

## FIG. 54A

Vo1 − η
(φ = 0)

## FIG. 54B

Vo1 − φ
(η = 0)

# F I G. 5 5 A

Vo2 − η
(φ = 0)

# F I G. 5 5 B

Vo2 − φ
(η = 0)

## FIG. 56

## FIG. 57A

## FIG. 57B

EP 1 491 854 A1

*FIG. 58*

200 μm

800 μm

500 μm

104

102a

102c

R31    R32    200 μm

R41    80 μm    R42

R34    80 μm    R33

150 μm    500 μm    150 μm

n-TYPE Si
SURFACE : (100)PLANE
LONGITUDINAL DIRECTION :
<110>DIRECTION

WEIGHT(Au)    104

800 μm

600 μm

30 μm
20 μm

102a
102c

FIXING PORTION

102b

*F I G. 5 9 A*

*F I G. 5 9 B*

## F I G. 6 0 A

Vo3－η
(φ＝0)

Vo3(μV)

η(°)

## F I G. 6 0 B

Vo3－φ
(η＝0)

Vo3(μV)

φ(°)

# FIG. 61A

Vo4 − η
(φ=0)

# FIG. 61B

Vo4 − φ
(η=0)

*F I G. 6 2*

101a 104 102

R51 R52

A1 A1

R54 R53

102a 102c 102b

*F I G. 6 3 A*

C5

R51 R54

Vi Vo5

R53 R52

*F I G. 6 3 B*

C6

R51 R52

Vi Vo6

SWITCH BETWEEN
R52 AND R54

R53 R54

# FIG. 64

EP 1 491 854 A1

200μm    800μm    500μm

104

102a

R51    R52    102c

R54    R53    160μm    200μm    600μm

200μm

50μm

n-TYPE Si
SURFACE : (100)PLANE
LONGITUDINAL DIRECTION :
<110>DIRECTION

WEIGHT(Au)    104

102a  102c

800μm

30μm
20μm

102b

FIXING PORTION

# FIG. 65A

C5

R51  R54  Vo5  R53  R52

Vi = 5V

# FIG. 65B

C6

R51  R52  Vo6  R53  R54

Vi = 5V

## F I G. 6 6 A

Vo5 − η
(φ = 0)

## F I G. 6 6 B

Vo5 − φ
(η = 0)

*F I G. 6 7A*

Vo6 − η
(φ = 0)

*F I G. 6 7B*

Vo6 − φ
(η = 0)

## *F I G. 6 8 A*

Vo5 $-$ $\eta$
($\phi$ =0)

WEIGHT MATERIAL
- ●— Au
- ■-- SOLDER
  (Sn63%·Pb37%)
- ◆- Si
- ▲-- NONE

## *F I G. 6 8 B*

Vo5 $-$ $\phi$
($\eta$ =0)

WEIGHT MATERIAL
- ●— Au
- ■-- SOLDER
  (Sn63%·Pb37%)
- ◆- Si
- ▲-- NONE

*F I G. 6 9 A*

*F I G. 6 9 B*

FIG. 70

*F I G. 7 1 A*

R11 〜 ▬ ┃ 〜 R12

R14 〜 ▬ ┃ 〜 R13

*F I G. 7 1 B*

R11 〜 ┃ ┃ 〜 R12

R14 〜 ┃ ┃ 〜 R13

*F I G. 7 2 A*

R21 〜 ▬ ┃ 〜 R22
R24 〜 ▬ ┃ 〜 R23

*F I G. 7 2 B*

R21 〜 ┃ ┃ 〜 R22
R24 〜 ┃ ┃ 〜 R23

*F I G. 7 3 A*

R31 ⌒ ▬ ❙ ⌒ R32

R34 ⌒ ▬ ❙ ⌒ R33

*F I G. 7 3 B*

R31 ⌒ ❙ ❙ ⌒ R32

R34 ⌒ ❙ ❙ ⌒ R33

*F I G. 7 4*

R41 ⌒ ❙ ❙ ⌒ R42

*F I G. 7 5 A*

R51 ⌒ ❙ ❙ ⌒ R52

R54 ⌒ ❙ ❙ ⌒ R53

*F I G. 7 5 B*

R51 ⌒ ▬ ❙ ⌒ R52

R54 ⌒ ▬ ❙ ⌒ R53

FIG. 76A

E

201

201a

z AXIS

y AXIS     x AXIS

201b     201c     R

FIG. 76B

R

201c

E     E

201a     201b     201a

FIG. 76C

201c     R

201a

*F I G. 7 7 A*

*F I G. 7 7 B*

## INTERNATIONAL SEARCH REPORT

| | International application No. |
|---|---|
| | PCT/JP03/04235 |

| A. CLASSIFICATION OF SUBJECT MATTER |
|---|
| Int.Cl$^7$ G01C9/06, H01L29/84 |

According to International Patent Classification (IPC) or to both national classification and IPC

| B. FIELDS SEARCHED |
|---|
| Minimum documentation searched (classification system followed by classification symbols)<br>Int.Cl$^7$ G01C9/00, G01P15/00, H01L29/84 |

Documentation searched other than minimum documentation to the extent that such documents are included in the fields searched

| Jitsuyo Shinan Koho | 1922-1996 | Jitsuyo Shinan Toroku Koho | 1996-2003 |
|---|---|---|---|
| Kokai Jitsuyo Shinan Koho | 1971-2003 | Toroku Jitsuyo Shinan Koho | 1994-2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 7-27785 A (Nitta Corp.),<br>31 January, 1995 (31.01.95),<br>Full text; all drawings<br>(Family: none) | 1-10<br>11-16,20-22 |
| X<br>Y | JP 11-54478 A (Tokai Rika Co., Ltd.),<br>26 February, 1999 (26.02.99),<br>Full text; all drawings<br>(Family: none) | 17-19,23-30<br>20-22 |
| Y | JP 11-311634 A (Japan Aviation Electronics Industry Ltd.),<br>09 November, 1999 (09.11.99),<br>Full text; all drawings<br>(Family: none) | 11-16,20-22 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 July, 2003 (07.07.03) | 22 July, 2003 (22.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/04235 |

| C (Continuation). | DOCUMENTS CONSIDERED TO BE RELEVANT | |
| --- | --- | --- |
| Category* | Citation of document, with indication, where appropriate, of the relevant passages | Relevant to claim No. |
| A | JP 8-160067 A  (Akebono Brake Industry Co., Ltd.), 21 June, 1996 (21.06.96), Full text; all drawings (Family: none) | 23-28 |
| A | JP 10-253656 A  (Seiko Instruments R&D Center Inc.), 25 September, 1998 (25.09.98), Full text; all drawings (Family: none) | 23-28 |
| A | WO 98/55833 A1  (BIDE Stephen), 10 December, 1998 (10.12.98), Full text; all drawings & JP 2002-502499 A       & US 2002/052684 A1 & GB 2325975 A            & EP 986735 A1 | 29,30 |

Form PCT/ISA/210 (continuation of second sheet) (July 1998)